# EUROPEAN PATENT APPLICATION

(11) **EP 4 826 113 A1**
(43) Date of publication of application: **21.10.2026**
(21) Application number: 24904141.9
(22) Date of filing: 03.12.2024
(51) Int. Cl.: C23C 2/12, C23C 2/02, C23C 2/28, C23C 2/40, C22C 38/04, C22C 38/02, C22C 38/06, C22C 38/14, B21D 53/88, B21D 22/02

(54) **HOT-PRESS-FORMED MEMBER, HOT-PRESS-FORMED PARTS, AND METHODS FOR MANUFACTURING SAME, AND FORMING DEVICE, FORMING METHOD, BRACKET FOR BATTERY CASE, AND BATTERY PACK MODULE**

(30) Priority: 15.12.2023 KR 20230183658; 15.12.2023 KR 20230183769; 15.12.2023 KR 20230183785; 15.12.2023 KR 20230183865; 18.12.2023 KR 20230184800
(71) Applicant: POSCO Co., Ltd, Gyeongsangbuk-do 37859 (KR)
(72) Inventor: KIM, Sang-Heon, Gwangyang-si, Jeollanam-do 57807 (KR); KIM, Hong-Gee, Incheon 21985 (KR); BOK, Hyun-Ho, Incheon 21985 (KR); YOO, Hyeon-Seok, Incheon 21985 (KR); SON, Hyun-Sung, Incheon 21985 (KR); KIM, Seong-Woo, Gwangyang-si, Jeollanam-do 57807 (KR); JUNG, Chang-Gyun, Incheon 21985 (KR); HWANG, Hyoen-Seok, Gwangyang-si, Jeollanam-do 57807 (KR); LEE, Sea-Woong, Gwangyang-si, Jeollanam-do 57807 (KR); YOO, Yun-Ha, Incheon 21985 (KR); OH, Kyung-Seok, Incheon 21985 (KR); YUN, Jae-Young, Incheon 21985 (KR); OH, Jin-Keun, Gwangyang-si, Jeollanam-do 57807 (KR)
(74) Representative: Meissner Bolte Partnerschaft mbB
(86) International application number: PCT/KR2024/019575
(87) International publication number: WO 2025/127576

(57) **Abstract**

The purpose of the present invention is to provide a hot-press-formed member having excellent coating-corrosion resistance and a method for manufacturing same, the hot-press-formed member comprising a base steel and an aluminum-based alloy plated layer, wherein the base steel comprises, by wt%, 0.015-0.10% of Sb, and the aluminum-based alloy plated layer comprises an intermediate layer and an outermost layer positioned on the upper portion of the intermediate layer.

## Description

### Technical Field

The present disclosure relates to a hot-press-formed member, hot-press-formed parts, and methods for manufacturing the same.

In addition, another aspect of the present disclosure relates to a forming device for forming high-strength steel, a forming method, a bracket for a battery case formed thereby, and furthermore, a battery pack module.

### Background Art

Recently, due to the depletion of petroleum energy resources and increasing concern for the environment, regulations regarding the improvement of fuel efficiency in automobiles have been becoming increasingly stringent. From a materials perspective, one method for improving fuel efficiency in automobiles is to reduce a thickness of a steel sheet used; however, since reducing the thickness may cause issues in terms of vehicle safety, it is essential that an increase in the strength of the steel sheet is ensured.

For this reason, there has been continuous demand for high-strength steel sheets, and various types of steel sheets have been developed. However, such steel sheets have a problem, in that their workability may be poor because the steel sheets themselves have high strength. That is, since there is a tendency for the product of strength and elongation to be substantially constant for each grade of steel sheet, there is a problem in that, when the strength of the steel sheet increases, the elongation thereof, part of an index of formability, decreases.

Furthermore, as described above, in order to improve fuel economy, conventionally, attempts have been made to reduce vehicle body weight using aluminum (Al). However, when outer panels including aluminum as a main component are used together with inner panels including iron as a main component, thermal deformation and warping are inevitable due to the difference in coefficients of thermal expansion between the inner and outer panels.

To address this, measures have been taken, such as changing the type of adhesive used for joining parts or lowering the baking temperature of the coating. In this case, although there may be a problem, in that the vehicle manufacturing time may be prolonged, resulting in reduced productivity, it is an effective mechanism for achieving vehicle body weight reduction, and is used in some vehicle models.

In response to the above-described issues, steel manufacturers develop and supply products that facilitate the application of steel forming processes for parts manufacturing, such as the hot press forming (HPF) method or hot stamping technology, thereby assisting automotive manufacturers.

The hot press forming method is a processing method in which a blank is heated, the heated blank is formed into a desired shape through press forming, and then cooled while the die is kept closed, thereby manufacturing high-strength formed parts.

As such a hot press forming method, when a hot press forming method that performs forming at high temperature is employed, the hot press forming method may form even parts with a small radius of curvature without cracks due to its excellent elongation of over 50% at high temperatures where the forming is performed, thereby making it possible to secure the shape of formed parts that may not be achieved with cold ultra-high strength.

Furthermore, hot-press-formed parts, manufactured by hot-working (hot stamping) the blank, may be formed at high temperature with excellent general formability, thereby manufacturing parts with a wider variety of shapes than conventional giga-grade cold-formed materials.

Due to these characteristics, hot press forming is mainly applied to materials suitable for parts that serve as a vehicle skeleton, such as A-pillars, center pillars, and roof side panels.

However, the above-described hot press forming method has a problem in that the steel sheet should be heated to a high temperature, so that the surface of the steel sheet is oxidized, and therefore an additional process for removing oxides from the surface of the steel sheet is required after press forming. Patent Document 1 has proposed a method for solving this problem. In the present disclosure, an aluminum-plated steel sheet is used in a process of heating and rapid cooling (briefly referred to as "post heat treatment") after hot press forming or room-temperature forming. Since the aluminum plating layer is present on the surface of the steel sheet, oxidation of the steel sheet is prevented during heating.

In order to hot press form the above-described aluminum-plated steel sheet, an operation of heating the steel sheet is performed. In this operation, the temperature of the steel sheet increases, and as a result, diffusion of Fe occurs from the base steel to the surface plating layer, thereby causing alloying of the plating layer.

When such an aluminum-plated steel sheet is hot press formed, a problem arises in that cracks occur in the plating layer in a region in contact with a die during press forming. In addition, in a region in which bending is formed by pressing, strong tensile stress is applied to an outermost surface of the plating layer, and due to the characteristics of a brittle alloy layer, cracks occur from the surface under tensile stress. However, when the aluminum plating layer is thin and cracks penetrate the plating layer to expose the surface of the base steel sheet, there may be a problem in that corrosion resistance of the finally obtained hot-press-formed member may be reduced.

Meanwhile, steel suitable for hot press forming may be a conventional plated steel sheet; one example is an aluminum-based plated steel sheet produced by aluminum (Al) plating. When members obtained by forming such a plated steel sheet (e.g., hot-press-formed members or parts) are joined, welding is generally used, although adhesive bonding may also be employed in view of the surface characteristics of the plated steel sheet.

When performing a bonding process of parts using an adhesive, either a structural sealer or a mastic sealer may be used, depending on the characteristics of the parts. Regarding the use of such adhesive, each automotive manufacturer has criteria for guaranteeing bonding quality.

As such, while the principle is to evaluate adhesion property during the bonding process using the adhesive on a clean surface, evaluations may also take into account the presence of foreign objects, since the foreign object may adhere to the surface during part assembly or transportation. This evaluation method is referred to as an 'oiled-surface adhesion evaluation,' and is performed by degreasing (cleaning) the surface, followed by re-oiling with the rust-preventive oil that was applied at the time of shipment by the steel manufacturer for corrosion prevention of the steel, and then applying an adhesive thereon. In this case, the rust-preventive oil is a mixture of mineral oil, base oil, rust inhibitors, and lubricants, and generally acts negatively on the curing mechanism of the adhesive. In particular, the rust-preventive oil inhibits chemical reactions at the interface between the plating layer and the adhesive, resulting in a decrease in adhesive strength and deterioration in fracture morphology. Accordingly, adhesive manufacturers producing the relevant adhesive use porous inorganic additives to address the above-described problems; however, since excessive use of the inorganic additives lowers the shear strength and impact strength of the adhesive and causes quality deterioration, the amount used is controlled so as not to exceed 30 wt% (Patent Document 2). Furthermore, when the amount of rust-preventive oil used is excessive, or when the molecular structure of the rust-preventive oil does not match the porous structure of the inorganic additive, this results in a loss of adhesion properties. The adhesive exhibiting these characteristics includes acrylonitrile butadiene styrene (ABS) rubber or a large amount of phthalate plasticizers.

When irregularities such as cracks, pores, or micro-defects exist on the surface of the plating layer of the hot-press-formed member obtained by hot-forming a steel sheet for hot press forming, such as an aluminum-based plated steel sheet, the rust-preventive oil applied to the plating layer easily seeps into the gaps of these irregularities, which is attributed to the low surface tension of the plating surface. Furthermore, since the pores and other irregularities on the surface of the plating layer are formed in a bottle-like shape during a rolling process in steel manufacturing, the rust-preventive oil that seeps into these pores has a structure that makes volatilization difficult.

Meanwhile, when performing the hot press forming on a plated steel sheet having a plating layer, pores may be formed on the surface of the plating layer in order to suppress fracture due to hydrogen embrittlement. These pores are widely distributed not only on the surface of the plating layer but also in the interior, and the size of the pores varies depending on the heat treatment conditions of the steel.

As such, when the rust-preventive oil seeps into pores in a surface of a plating layer of a hot-press-formed member, it is not sufficiently volatilized during curing the adhesive and remains at the interface, thereby causing a loss of adhesion strength.

Accordingly, there is a need to develop a method capable of improving adhesion performance during the bonding of hot-press-formed members that require the use of the adhesive.

Meanwhile, a battery system used in electric vehicles uses battery cases to protect battery cells therein. These battery cases should ensure crashworthiness performance and watertightness.

While battery cases for electric vehicles are typically made of an expensive aluminum extrusion or sheet metal, attempts are being made to use steel due to its competitive price and ease of recycling. However, the high-strength steel suffers from poor formability, making it difficult to form into desired shapes.

The high-strength steel is often limited only to simple, linear-shaped parts formed through roll forming. When manufacturing the battery cases using these linear parts, alignment issues arise due to the thin steel sheet and a springback of a part, making butt welding difficult at a corner where the two linear parts meet.

To overcome this problem, a separate part (bracket) may be used to support the two linear parts by wrapping around the corner. The corresponding part has a longitudinal curved portion reflecting the required corner angle and also has a flange shape that is connected to upper and lower plates of the battery pack, making forming difficult.

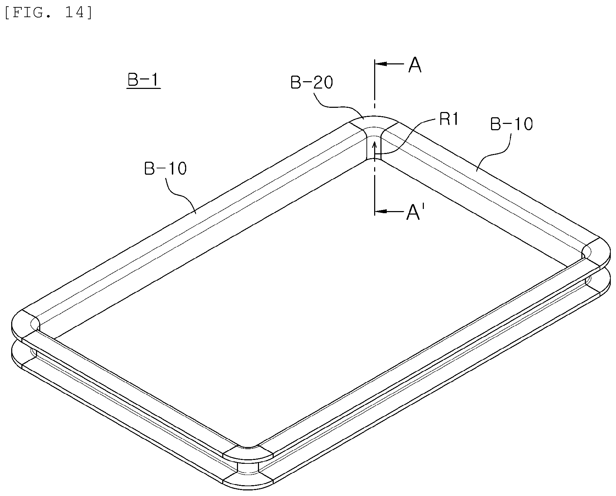

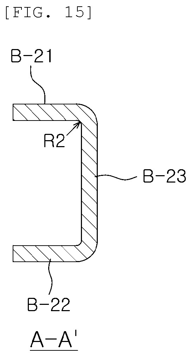

FIG. 14 schematically illustrates a side frame of the battery case, and FIG. 15 illustrates a cross-sectional view taken along line A-A' of FIG. 14. As illustrated in FIGS. 14 and 15, a side frame B-1 of the battery case requires flanges formed at the top and bottom to be connected to the upper and lower plates. This also applies to a bracket B-20. That is, the bracket B-20 also includes a main body B-23 and flanges B-21 and B-22 formed by bending from the main body B-23. Forming the bracket B-20 is difficult because it includes a curved portion having a radius of curvature R1 while also requiring a curved surface with a radius of curvature R2 for forming upper and lower flanges.

When a part includes a curve or dimensional transition, a stretch flange or shrink flange is formed on the surfaces of the flanges B-21 and B-22 depending on the geometric characteristics of the corresponding area. Furthermore, both types of flanges may be formed simultaneously, with one type being dominant. In a stretch flange region accompanied by the thickness reduction, excessive forming strain or insufficient formability of the material relative to the required part geometry may cause necking, which is a localized reduction in cross-sectional area due to plastic instability, followed by fracture. Meanwhile, in the shrink flange region, increased in-plane compressive load may lead to increased thickness, buckling, and wrinkles. When such wrinkling or folding occurs, non-uniform gaps occur in the battery pack, thereby impairing the watertightness of the battery pack.

Meanwhile, the bracket B-20 should be formed from the same material as the frame B-10, which is the linear part, to ensure the uniform strength and crashworthiness performance. When forming with high-strength steel, there is a significant difficulty in forming flanges that include a curved portion.

In the case of the conventional cold-forming steel sheets, ultra-high-strength steel with a tensile strength of 980 MPa or more increases the risk of wrinkling and fracture due to its high strength and low ductility, thereby making it difficult to manufacture the flange with the curved portion. As a result, press-hardened steel is increasingly being used as an alternative.

Since the press-hardened steel is formed at high temperature, the press-hardened steel has low strength and high ductility at the time of forming. As a result, the press-hardened steel may be formed into complex shapes. However, since the press-hardened steel needs to be formed in one operation while maintaining the high temperature, it is difficult to apply a blank holder or a drawbead which is fracture and wrinkling control mechanism, which imposes limitations on the degree of freedom in the forming process.

Furthermore, the high-strength steel suffers from poor bending formability, which makes it difficult to form parts with a small radius of curvature. However, in recent years, in electric vehicles, etc., there is a growing need for formed parts that may achieve significant weight reduction and improved safety of vehicles. These formed parts are required to maintain high strength while having a much smaller bending radius (radius of curvature) compared to conventional parts, thereby greatly improving space utilization.

Meanwhile, in the hot press forming method, high-temperature materials heated in a heating furnace need to be formed before they cool in the air, and thus, unlike cold forming, may not be sequentially formed through multiple stages of dies. Due to these drawbacks, there is also the problem that it is difficult to form multiple parts with a hat shape using the hot press forming method. Since it may not be formed in a single operation, the parts may be formed separately and then joined together during the subsequent assembly stage. However, this approach has the drawback of increased process costs due to the separate forming of each part, along with potential performance limitations.
(Patent Document 1) U.S. Patent Publication No. 6296805
(Patent Document 2) Korean Patent Laid-Open Publication No. 10-2022-0089675
(Patent Document 3) U.S. Patent Laid-Open Publication No. 2014-0056754
(Patent Document 4) Korean Patent Laid-Open Publication No. 10-2020-006635
(Patent Document 5) Korean Patent Laid-Open Publication No. 10-2023-0092430

### Summary of Invention

### Technical Problem

A first aspect of the present disclosure is to provide a hot-press-formed member having excellent coating-corrosion resistance and a method for manufacturing the same.

A second aspect of the present disclosure is to provide a plated steel sheet suitable for hot press forming, having a controlled surface structure so as to improve the sealing adhesion property of a member (part) manufactured by hot press forming, and a method for manufacturing the same.

A third aspect of the present disclosure is to provide a forming device capable of forming a bracket having a flange and a curved portion, a forming method, and a bracket manufactured thereby.

A fourth aspect of the present disclosure is to provide a formed part having higher tensile strength and a smaller radius of curvature than conventional parts, or a battery pack module including the same.

A fifth aspect of the present disclosure is to provide a press-formed part that minimizes damage, such as cracks, during hot press forming to manufacture multiple hat-shaped parts, and a method for manufacturing the same.

The object of the present disclosure is not limited to the matters described above. Additional objects of the present disclosure are described throughout the specification, and a person skilled in the art to which the present disclosure pertains will have no difficulty in understanding the additional objects of the present disclosure from the contents described in the specification of the present disclosure.

### Solution to Problem

Hereinafter, the technical solutions of the present disclosure are described. While not essential, it should be noted that the technical solutions for each aspect of the present disclosure can also be usefully applied to other aspects of the present disclosure. For example, the hot forming steel sheet and/or the method for manufacturing the same according to the first aspect of the present disclosure may be usefully used in the hot-press-formed member, various parts obtained therefrom, and the methods for manufacturing the same according to the second to fifth aspects. In addition, the method for manufacturing a part according to the second aspect of the present disclosure, heat treatment conditions used therefor, etc., may be usefully used in the process of manufacturing a bracket for a battery case according to the third to fifth aspects, a formed part, etc. In addition, the composition and various useful parameters according to each aspect of the present disclosure may be appropriately combined with other aspects to obtain advantageous effects.

According to an aspect of the present disclosure, a hot-press-formed member includes a base steel, and an aluminum-based alloy plated layer, in which the base steel includes, by wt%, 0.015 to 0.10% of Sb, the aluminum-based alloy plated layer includes an intermediate layer and an outermost layer positioned on an upper portion of the intermediate layer, and a Cr increase/decrease rate (%) derived from the following Relational Expression 1 is 5% or more. [Relational Expression 1] $Cr increase / decrease rate \left(%\right) = \frac{A - B}{A} \times 100 \left(%\right)$
(In Relational Expression 1, A represents Crmax of the outermost layer, and B represents Crmax of the intermediate layer.)

The base steel may include, by wt%, C: 0.080 to 0.50%, Si: 0.050 to 1.0%, Mn: 0.50 to 4.0%, P: 0.0150% or less (excluding 0%), S: 0.0200% or less (excluding 0%), Al: 0.010 to 0.10%, N: 0.02000% or less (excluding 0%), and Cr: 0.01 to 1%, and the balance of Fe and unavoidable impurities.

The base steel may further include one or more elements selected from a) through f) below.
a) one or more selected from titanium (Ti), niobium (Nb), zirconium (Zr), and vanadium (V): 0.005 to 0.400 wt%,
b) boron (B): 0.0001 to 0.0100 wt%,
c) one or more selected from molybdenum (Mo) and tungsten (W): 0.001 to 1.000 wt%,
d) one or more selected from copper (Cu) and nickel (Ni): 0.003 to 2.000 wt%,
e) one or more selected from tin (Sn): 0.001 to 1.000 wt%, and
f) rare earth elements (REM): 0.0200 wt% or less.

Simax of the intermediate layer may range from 5.5 wt% or more to 15 wt% or less.

After electrodeposition coating and evaluation of coating corrosion resistance, a sum of left and right widths of corrosion blisters may satisfy 5.0 mm or less.

According to another aspect of the present disclosure, a method for manufacturing a hot-press-formed member includes preparing a base steel including 0.015 to 0.10 wt% of Sb, immersing the base steel in an aluminum-based plating bath to obtain an aluminum-based plated steel, heating and holding the aluminum-based plated steel at a temperature of Ae3 or higher to obtain an aluminum-based alloy plated steel, and performing hot press forming on the aluminum-based alloy plated steel, followed by cooling, in which [Relational Expression 2] below is satisfied. [Relational Expression 2] ${t}_{total} \geq - 65.79 \times ln \frac{{A}_{e 3} - {T}_{furnace} + 10}{- 961.23}$
(In Relational Expression 2, tₜₒₜₐₗ represents a total heating time (sec) in a furnace during heating, Ae3 represents an equilibrium temperature (°C) at which a transformation to austenite is completed, and T_{furnace} represents a set temperature (°C) in the furnace during the heating.)

The base steel may include, by wt%, C: 0.080 to 0.50%, Si: 0.050 to 1.0%, Mn: 0.50 to 4.0%, P: 0.0150% or less (excluding 0%), S: 0.0200% or less (excluding 0%), Al: 0.010 to 0.10%, N: 0.02000% or less (excluding 0%), and Cr: 0.01 to 1%, and the balance of Fe and unavoidable impurities.

The base steel may further include one or more elements selected from a) through f) below.
a) one or more selected from titanium (Ti), niobium (Nb), zirconium (Zr), and vanadium (V): 0.005 to 0.400 wt%,
b) boron (B): 0.0001 to 0.0100 wt%,
c) one or more selected from molybdenum (Mo) and tungsten (W): 0.001 to 1.000 wt%,
d) one or more selected from copper (Cu) and nickel (Ni): 0.003 to 2.000 wt%,
e) one or more selected from tin (Sn): 0.001 to 1.000 wt%, and
f) rare earth elements (REM): 0.0200 wt% or less.

A cooling rate in the cooling may be 10 to 1000 °C/s.

Although not essential, the hot-press-formed member according to the first aspect of the present disclosure may secure improved performance when combined with the advantageous features of the other aspects described below.

According to the second aspect of the present disclosure, a hot-press-formed member includes a base steel sheet; and an aluminum (Al)-based plating layer formed on at least one surface of the base steel sheet, in which the aluminum (Al)-based plating layer has an oxide layer including aluminum oxide having a thickness of 100 nm or less in a thickness direction from the surface.

In an example embodiment of the present disclosure, an aluminum oxide distribution of the oxide layer may be 90 to 100% when the pores on the surface are greater than 30/100 µm² to 80/100 µm² or less.

In this way, the adhesive performance of the hot-press-formed member may be improved by increasing the distribution amount of aluminum oxide according to the number of pores present on the surface of the plating layer.

In an example embodiment of the present disclosure, the oxide layer may have the aluminum oxide distribution of 70% or more when the pores on the surface are 30/100 µm² or less.

In an example embodiment of the present disclosure, the base steel sheet may include, by wt%, carbon (C): 0.17 to 0.32%, silicon (Si): 0.50% or less, manganese (Mn): 1.0 to 2.3%, aluminum (Al): 0.010% or less, phosphorus (P): 0.030% or less, sulfur (S): 0.005% or less, boron (B): 0.0005 to 0.0040%, titanium (Ti): 0.020 to 0.055%, the balance of Fe, and other unavoidable impurities.

In an example embodiment of the present disclosure, the aluminum-based plating layer may be composed of, by wt%, silicon (Si): 7.0 to 10.0%, iron (Fe): 5.0-15.0%, the balance of aluminum (Al), and other unavoidable impurities.

In an example embodiment of the present disclosure, the aluminum-based plating layer may further include one or more elements selected from the group consisting of i) to iii) below.
i) one or more of chromium (Cr) and molybdenum (Mo): 2.5% or less
ii) one or more of niobium (Nb), zirconium (Zr), and vanadium (V): 0.1% or less
iii) antimony (Sb): 0.02 to 0.03%

According to another aspect of the present disclosure, a method for manufacturing a hot-press-formed member includes preparing a plated steel sheet having an aluminum-based plating layer provided on at least one surface of a base steel sheet; heating the plated steel sheet to a temperature range of 900 to 960°C at a heating rate of 15 to 20°C/s; holding the heated plated steel sheet for 3 to 6 minutes; and forming and rapidly cooling the plated steel sheet after holding.

In this way, when performing high-temperature heating for hot forming of the plated steel sheet provided with the aluminum-based plating layer, an aluminum oxide distribution according to the number of pores may be controlled as intended by controlling the heating rate, the range of the heating temperature, and the holding time.

In an example embodiment of the present disclosure, the rapid cooling may be performed at a cooling rate of 10°C/s or higher.

Although not essential, the hot-press-formed member according to the second aspect of the present disclosure may secure improved performance when combined with the advantageous features of the other aspects described below.

A third aspect of the present disclosure is to provide a forming device. The forming device includes: a pad; a die disposed outside the pad in a first direction; and a punch disposed below the pad and including a main body in which a punch forming portion is formed, in which the punch forming portion includes a linear first punch forming portion, a curved second punch forming portion having a radius of curvature Rp of a curved forming portion, and a linear third punch forming portion when viewed in the first direction, the first through third punch forming portions are continuously arranged along a second direction on a horizontal plane, the second direction being perpendicular to the first direction, the first through third punch forming portions each include, on both sides in the first direction, first through third extended surface forming portions on a surface perpendicular to the first direction, first through third main body forming portions on a surface facing the pad, and first through third curved surface forming portions each having a bending radius of curvature r between the extended surface forming portions and the main body forming portions, the pad includes pressing surfaces corresponding to the first through third main body forming portions, the die includes a linear first die forming portion, a curved second die forming portion having a radius of curvature Rd of curved die, and a linear third die forming portion when viewed in the first direction, the first through third die forming portions are continuously arranged along the second direction, and when the upper surface positions of the third main body forming portion and the third die forming portion are aligned on the same plane, the first main body forming portion is positioned higher than the upper surface position of the first die forming portion when viewed in the first direction.

According to an example embodiment of the present disclosure, there is an effect of enabling forming of steel (e.g., high-strength steel) having insufficient formability.

In an example embodiment of the present disclosure, the punch may further include fourth and fifth punch forming portions symmetrical to the second and first punch forming portions with respect to the third punch forming portion, the die may further include fourth and fifth die forming portions symmetrical to the second and first die forming portions with respect to the third die forming portion, and the pressing surface of the pad may also include a surface corresponding to the main body forming portions of the fourth and fifth punch forming portions.

In an example embodiment of the present disclosure, the punch may include a support portion that supports preforming material outside of the first and fifth forming portions with respect to the third punch forming portion.

In an example embodiment of the present disclosure, the radius of curvature Rp of the curved forming portion may be smaller than the radius of curvature Rd of the curved die.

In an example embodiment of the present disclosure, a second direction length lp of the third main body forming portion may be longer than a second direction length ld of the third die forming portion.

In an example embodiment of the present disclosure, when viewed in the first direction, a center of the radius of curvature Rd of a curved die in the second direction may coincide with a center of the third main body forming portion, and when viewed in the first direction, in the second and fourth punch forming portions, an angle θ at which extension lines of imaginary tangents at both end portions of the second and fourth punch forming portions intersect may be between 95 and 135°.

In an example embodiment of the present disclosure, the first to fifth die forming portions may include first to fifth die curved surface forming portions formed as curved surfaces at positions relatively close to the punch in the first direction, and first to fifth flat forming portions at positions relatively far from the punch, the curved surfaces of the first to fifth die curved surface forming portions may increase in height as they get closer to the punch, and when the upper positions of the third main body forming portion and the third die forming portion may be positioned on the same plane, at least a portion of the second main body forming portion may be positioned below the upper position of the second die forming portion when viewed in the first direction.

In an example embodiment of the present disclosure, at least one of the punch and the die may include a cooling channel therein, and the radius of curvature Rp of the curved forming portion and the bending radius of curvature r may satisfy 25 mm ≤ Rp (mm) + r (mm) ≤ 30 mm.

Another aspect of the present disclosure is to provide a material forming method, including: mounting, on a punch, a material longer in a first direction than the punch having a forming portion; primarily forming the material into a shape of a main body forming portion of the punch through the pad positioned on an upper portion of the punch; and secondarily forming the material to follow the shape of the forming portion of the punch through a die positioned outside the pad in the first direction, in which, in the secondary forming operation, the die may form the material in the order of an edge portion, a center portion, and an intermediate portion between the center and the edge portion of the material in that order in a second direction perpendicular to the first direction and a vertical direction.

In an example embodiment of the present disclosure, the forming portion may include, when viewed in the first direction, a linear first forming portion, a second forming portion having a radius of curvature Rp of the curved forming portion, a linear third forming portion, a curved fourth forming portion having the radius of curvature Rp of the curved forming portion, and a linear fifth forming portion, the intermediate portion of the die may be formed as a curved surface having the radius of curvature Rd of the curved die, and the radius of curvature Rd of the curved die may be greater than the radius of curvature Rp of the curved forming portion.

In an example embodiment of the present disclosure, the material may be a steel sheet, the material mounting operation may be performed while the material is heated to an AC3 temperature of the material or higher, and the material forming method may further include a cooling operation in which the material is cooled to have a martensite structure by at least one of the punch and the die.

In an example embodiment of the present disclosure, the material may be the above-described hot forming steel sheet or obtained by hot forming the hot forming steel sheet. As one example, the hot forming steel sheet and the hot-press-formed member may have the above-described alloy composition and may be manufactured by the above-described manufacturing method.

In an example embodiment of the present disclosure, in the material mounting operation, the material may include a notch formed toward the center of the material in the first direction at a position corresponding to the intermediate portion of the die.

In an example embodiment of the present disclosure, the first through fifth forming portions include, on both sides of the first direction, first through fifth extended surface forming portions each having a surface perpendicular to the first direction, a first through fifth main body forming portion having a surface facing the pad, and a first through fifth curved surface forming portion having a bending radius of curvature r between the extended surface forming portion and the main body forming portion, in which the radius of curvature Rp of the curved forming portion and the bending radius of curvature r may satisfy 25 mm ≤ Rp(mm) + r(mm) < 30 mm and 3 mm ≤ r(mm) ≤ 10 mm.

Another aspect of the present disclosure is to provide a bracket for a battery case, including a forming surface having a radius of curvature Rp of a curved forming portion, in which the forming surface includes: a main body; a flange extending by being bent from an end portion of the main body; and a curved surface connected between the main body and the flange with a bending radius of curvature r, and the bracket is formed of steel containing boron with a tensile strength of 1200 MPa or more and has a martensitic structure, and the radius of curvature Rp of the curved forming portion and the bending radius of curvature r satisfy 25 mm ≤ Rp (mm) + r (mm) ≤ 30 mm, 3 mm ≤ r (mm) ≤ 10 mm.

In an example embodiment of the present disclosure, a minimum thickness tmin and an initial thickness tini before forming in the flange may satisfy (tini - tmin)/tini ≤ 0.2, and a maximum thickness tmax and the initial thickness tini before forming in the curved surface may satisfy (tini - tmax)/tini ≥ -0.4.

In an example embodiment of the present disclosure, the angle θ at which extensions of imaginary tangents intersect at both end portions of the forming surface of the bracket may be between 95 and 135°.

A bracket for a battery case according to an example embodiment of the present disclosure may be manufactured using the forming method described above.

According to an example embodiment of the present disclosure, the bracket manufactured using the forming method described above may secure weight reduction, watertightness, and crashworthiness performance of the battery pack.

Although not essential, the product according to the third aspect of the present disclosure may secure further enhanced performance when combined with the advantageous features of the other aspects described below.

A fourth aspect of the present disclosure is to provide high-strength steel hot-press-formed parts. The high-strength steel hot-press-formed part may include a first wall extending in a first direction, a second wall extending in a direction intersecting the first wall, and a third wall extending in the first direction and extending in a direction intersecting the second wall, a curved portion may be formed between the first wall and the second wall, and the first wall, the second wall, and the curved portion may be integrally formed, and the high-strength steel hot press-formed part may satisfy the following [Relational Expression 3]. [Relational Expression 3] $Wall height \left(hw\right) \leq 13.4 * wall angle \left(θw\right) + 182.4$
(Here, the wall height hw may represent a length from the first wall to the third wall in the direction perpendicular to the first direction and the unit may be mm, the wall angle θw may represent an angle between an arbitrary line perpendicular to the first direction and the second wall and the unit may be degree, and left and the right sides may be dimensionless and calculated.)

In an example embodiment of the present disclosure, the high-strength steel may be the above-described hot forming steel sheet.

According to an example embodiment of the present disclosure, a formed part with high tensile strength and a small curvature may be provided.

In an example embodiment of the present disclosure, the first wall, the second wall, and the curved portion may be formed integrally by processing sheet metal. In addition, the first wall, the second wall, and the curved portion may be formed integrally by processing the sheet metal, and the radius of curvature r of the curved portion may be greater than or equal to 0.5 mm, and a ratio r/t of a radius of curvature r to a thickness t of the sheet metal may be less than 2.5.

In an example embodiment of the present disclosure, the formed part may have a tensile strength of 1300 to 2100 MPa.

In an example embodiment of the present disclosure, the formed part may include a third wall and a fourth wall parallel to the first direction, and a fifth wall connected to the third wall and the fourth wall, the third wall may extend from the second wall, and the first to fifth walls may be formed integrally.

In an example embodiment of the present disclosure, an angle between an arbitrary line perpendicular to the first direction and the second wall may be 5° or less.

In an example embodiment of the present disclosure, the microstructure of the formed part may be formed of martensite having an area fraction of 98% or more.

Another aspect of the present disclosure is to provide a battery pack module, including: a battery case formed to surround a battery pack; a base positioned on a lower portion of the battery case and connected to the battery case to form a space in which the battery pack may be positioned; and a hot-press-formed part positioned across an inside of the battery case and connected to the battery case and the base.

According to an example embodiment of the present disclosure, a part with high space utilization may be manufactured when manufacturing a module such as a battery pack.

In an example embodiment of the present disclosure, the plurality of hot-press-formed parts may be disposed at regular intervals within the battery case.

Although not essential, the part according to the fourth aspect of the present disclosure may secure further enhanced performance when combined with the advantageous features of the other aspects described below.

A fifth aspect of the present disclosure is to provide a press-formed part. The press-formed part may have a hat shape including a top plate portion, a longitudinal wall portion continuous with the top plate portion, and a boundary portion continuous with the vertical wall portion, and include a plurality of deformed portions having a preset height, and a flat plate portion disposed between the plurality of deformed portions, connecting two adjacent boundary portions, and having a preset length.

In an example embodiment of the present disclosure, the relationship between the preset length and the preset height may be determined based on the number of deformed portions.

In an example embodiment of the present disclosure, three deformed portions may be provided, and the relationship between the preset length and the preset height may be defined by the following [Relational Expression 4], where w≤114.85e^{0.0455h}... [Relational Expression 4], and in the [Relational Expression 4], w may denote the preset length, and h may denote the preset height.

In an example embodiment of the present disclosure, more than four deformed portions may be provided, and the relationship between the preset length and the preset height may be defined by the following [Relational Expression 5], where w≤46.309e^{0.105h}... [Relational Expression 5], and in the [Relational Expression 5], w may denote the preset length, and h may denote the preset height.

In an example embodiment of the present disclosure, the preset length w may be 20 mm or more.

In an example embodiment of the present disclosure, the press-formed part may be manufactured using the hot press forming method.

In an example embodiment of the present disclosure, the hot press forming method may be the method described above.

Another aspect of the present disclosure is to provide a method for manufacturing a press-formed part, including: an operation of supplying a metal plate to a processing position; an operation of performing primary press forming on the metal plate using a first die provided with a plurality of first pressing portions and an intermediate pressing portion; and, after the primary press forming on the metal plate, performing secondary press forming on the metal plate using the first die and the second die provided with a plurality of second pressing portions.

In an example embodiment of the present disclosure, the metal plate may be the above-described hot forming steel sheet.

In an example embodiment of the present disclosure, the press forming operation may use the above-described forming device.

In an example embodiment of the present disclosure, in the operation of supplying the metal plate to the processing position, the metal plate may be supplied between the first die and the intermediate pressing portion, and a central region of the metal plate may be disposed at a position facing the intermediate pressing portion.

In an example embodiment of the present disclosure, in the operation of supplying the metal plate to the processing position, the intermediate pressing portion may be positioned above the second die at the processing position.

In an example embodiment of the present disclosure, in the operation of supplying the metal plate to the processing position, the intermediate pressing portion may be disposed at a position where the height difference between the intermediate pressing portion and the second die may be 65% or more of the height of the press-formed part.

In an example embodiment of the present disclosure, in the operation of performing the primary press forming on the metal plate, the intermediate pressing portion may be introduced into a first pressing portion disposed centrally among the plurality of first pressing portions to press the central region of the metal plate.

In an example embodiment of the present disclosure, in the operation of performing the secondary press forming on the metal plate, the second pressing portion may be introduced into a first pressing portion disposed outwardly among the plurality of first pressing portions to press the outer region of the metal plate.

In an example embodiment of the present disclosure, in the operation of performing the primary press forming on the metal plate and the operation of performing the secondary press forming on the metal plate, the metal plate may be formed using the hot press forming method.

In an example embodiment of the present disclosure, the method for manufacturing a press-formed part may further include, between the operation of performing the primary press forming on the metal plate and the operation of performing the secondary press forming on the metal plate, an operation of performing the press forming on the metal plate using an additional intermediate pressing portion disposed outside the intermediate pressing portion and the first die to press form the metal plate.

### Advantageous Effects of Invention

According to an aspect of the present disclosure, it is possible to provide a hot-press-formed member having excellent coating-corrosion resistance and a method for manufacturing the same.

According to another aspect of the present disclosure, in providing a hot-press-formed member, it is possible to provide a hot-press-formed member with improved adhesive performance.

According to another aspect of the present disclosure, it is possible to provide a forming device capable of forming a bracket formed with a flange and a curved portion, a forming method, and a bracket manufactured thereby, and secure weight reduction, watertightness, and crashworthiness performance of a battery pack through the bracket.

According to another aspect of the present disclosure, it is possible to provide a formed part that has high tensile strength, has a small radius of curvature, and is manufactured at once, thereby facilitating processing, and to manufacture a part having high space utilization when manufacturing a module such as a battery pack.

According to another aspect of the present disclosure, it is possible to dispose an intermediate pressing portion having a height difference between upper/lower dies, and to perform press forming on a metal plate using three pressing portions. In this case, by performing a stepwise forming process that first presses a central region of the metal plate and then presses an outer region, it is possible to prevent a deformation force from concentrating at a specific location of the metal plate during press forming. Accordingly, it is possible to prevent damage to the press-formed part during the manufacturing and improve the quality of the part.

Various and beneficial advantages and effects in the present disclosure are not limited to the above description, and may be more easily understood in the course of describing the specific embodiments in the present disclosure.

### Brief Description of Drawings

In order to more fully understand the drawings cited in the detailed description of the present disclosure, a brief description of each drawing is provided:
FIG. 1 is an SEM image of a hot-press-formed member of Inventive Example A-3;
FIG. 2 is an SEM image of a hot-press-formed member of Inventive Example A-4;
FIG. 3 is an SEM image of a hot-press-formed member of Comparative Example A-2;
FIG. 4 is a photograph of a corroded coating blister after evaluating a coating-corrosion resistance of Inventive Example A-6;
FIG. 5 is a photograph of a corroded coating blister after evaluating a coating-corrosion resistance of Comparative Example A-4;
FIG. 6 is a graph showing the GDS observation results of Inventive Example A-6;
FIG. 7 is a graph showing the GDS observation results of Comparative Example A-4;
FIG. 8 is a photograph of a cross section of a plating layer of a hot-press-formed member (inventive steel) according to an example embodiment of the present disclosure, and FIG. 8(b) is an enlarged photograph of FIG. 8(a);
FIG. 9 is a photograph of a surface of a plating layer of a hot-press-formed member according to an example embodiment of the present disclosure and a photograph of a cross section observed in a thickness direction (in the cross-section photograph of FIG. 9, the numerical values represent a thickness from an outermost layer to a base steel interface and a thickness of a diffusion layer);
FIG. 10 is a graph showing the number of pores present on the surface of the plating layer of the hot-press-formed member according to an example embodiment of the present disclosure;
FIG. 11 is a graph showing the results of measuring the surface of the plating layer of the hot-press-formed member according to an example embodiment of the present disclosure using XPS;
FIG. 12 is a photograph of the surface observed over time after applying rust-preventive oil to each surface to evaluate an adhesion property of the hot-press-formed member according to an example embodiment of the present disclosure;
FIG. 13(a) illustrates adhesive strength results according to the amount of applied oil as the results of evaluating the adhesion property of the hot-press-formed member according to an example embodiment of the present disclosure and FIG. 13(b) illustrates observation results of adhesive residue on the surface according to the amount of applied oil;
FIG. 14 is a schematic diagram of a side frame of a battery case;
FIG. 15 is a cross-sectional view taken along line A-A' of FIG. 10;
FIG. 16 is an exploded perspective view of a forming device according to an example embodiment of the present disclosure;
FIG. 17 is a side view of a forming device according to an example embodiment of the present disclosure;
FIG. 18 is a flowchart of a forming method according to an example embodiment of the present disclosure;
FIG. 19 is a plan view of a material charged into a forming device according to an example embodiment of the present disclosure;
FIG. 20 is a schematic perspective view illustrating a primary forming operation in a forming method according to an example embodiment of the present disclosure;
FIG. 21 is a schematic perspective view illustrating a secondary forming operation in a forming method according to an example embodiment of the present disclosure;
FIG. 22a is a perspective view illustrating the secondary forming operation in the forming method according to an example embodiment of the present disclosure, viewed from another direction, and FIG. 22b is a front view illustrating the secondary forming operation in the forming method according to an example embodiment of the present disclosure;
FIG. 23 is a front view illustrating a cooling operation in the forming method according to an example embodiment of the present disclosure;
FIG. 24 is a perspective view illustrating a trimming operation in the forming method according to an example embodiment of the present disclosure;
FIG. 25 is a perspective view of a bracket manufactured by the forming method according to an example embodiment of the present disclosure;
FIG. 26 is a thickness reduction ratio distribution diagram of a formed product manufactured by a forming method according to an example embodiment of the present disclosure;
FIG. 27 is a thickness reduction ratio distribution diagram of a formed product manufactured by the forming method of Comparative Example 1-1;
FIG. 28 is a graph showing the thickness reduction ratio distribution in the cross section of the formed product of FIGS. 26 and 27;
FIG. 29 is a side view illustrating the forming method of Comparative Example 1-2;
FIG. 30 is a perspective view of the formed product manufactured by the forming method of Comparative Example 1-2;
FIG. 31 is a perspective view of a formed part according to an example embodiment of the present disclosure;
FIG. 32 is a front view of the formed part according to an example embodiment of the present disclosure;
FIGS. 33a, 33b, 34a, and 34b are diagrams illustrating interpretations of Example and Comparative Example of the present disclosure, in which, referring to Table 1, FIG. 33a illustrates Inventive Example 2-1, FIG. 33b illustrates Comparative Example 2-1, FIG. 34a illustrates Inventive Example 2-3, and FIG. 34b illustrates Comparative Example 2-3;
FIG. 35 is a perspective view of a battery pack module according to an example embodiment of the present disclosure;
FIG. 36 is a cross-sectional view of a portion of the battery pack module according to an example embodiment of the present disclosure, and illustrates space utilization when the battery pack is positioned, in which FIG. 36(a) illustrates a case where the radius of curvature is small, and FIG. 36(b) illustrates a case where the radius of curvature is larger than FIG. 36(a);
FIG. 37 is a perspective view illustrating a press-formed part according to an example embodiment of the present disclosure;
FIG. 38 is a perspective view illustrating a press-formed part according to another example embodiment of the present disclosure;
FIG. 39(a) is a graph illustrating the relationship between a preset length and a preset height of the press-formed part according to an example embodiment of the present disclosure, and FIG. 39(b) is a graph illustrating the relationship between a preset length and a preset height of the press-formed part according to another example embodiment of the present disclosure;
FIG. 40(a) is an example illustrating a deformation force applied to a press-formed part manufactured using the conventional manufacturing method, and FIG. 40(b) is an example illustrating a deformation force applied to a press-formed part manufactured using a manufacturing method according to example embodiments of the present disclosure;
FIG. 41 is a flowchart illustrating a method for manufacturing a press-formed part according to an example embodiment of the present disclosure;
FIG. 42 schematically illustrates a first operation of manufacturing the press-formed part of FIG. 37;
FIG. 43 schematically illustrates a second operation of manufacturing the press-formed part of FIG. 37;
FIG. 44 schematically illustrates a third operation of manufacturing the press-formed part of FIG. 37;
FIG. 45 schematically illustrates a fourth operation of manufacturing the press-formed part of FIG. 37;
FIG. 46 schematically illustrates a first operation of manufacturing the press-formed part of FIG. 38;
FIG. 47 schematically illustrates a second operation of manufacturing the press-formed part of FIG. 38;
FIG. 48 schematically illustrates a third operation of manufacturing the press-formed part of FIG. 38; and
FIG. 49 schematically illustrates a fourth operation of manufacturing the press-formed part of FIG. 38.

### Best Mode for Invention

Hereinafter, example embodiments of the present disclosure will be described. However, example embodiments in the present disclosure may be modified in several other forms, and the scope of the present disclosure is not limited to example embodiments to be described below.

In this specification, the term "including" is used to indicate the inclusion of other components, rather than excluding other components, unless specifically stated otherwise.

In addition, unless otherwise specified in the present specification, the unit '%' means weight%.

Hot-press-formed members used as materials for applications such as automobiles require corrosion resistance. The inventors recognized that chromium content within a plating layer is a critical factor in improving the corrosion resistance of the hot-press-formed members.

Accordingly, through in-depth research, the inventors discovered that by adding antimony (Sb) to the steel, an enrichment layer is formed at an interface between a base steel and an aluminum-based plating layer during hot press forming, thereby controlling a diffusion rate of chromium within the plating layer. This allows for an increase in chromium content of an outermost layer and a decrease in the chromium content of an intermediate layer, thereby preventing localized degradation of corrosion resistance after the alloying of the hot-press-formed member. Consequently, it was found that corrosion acceleration due to the formation of corrosion sites caused by the above-described localized degradation of corrosion resistance may be prevented, thereby completing the present disclosure.

Furthermore, the inventors confirmed that they may provide a hot-press-formed member capable of improving sealing adhesion property, and thus provided the present disclosure.

Below, before describing in detail the hot-press-formed member according to an example embodiment of the present disclosure, the aluminum-based plated steel for hot pressing according to an example embodiment of the present disclosure will be described first.

The aluminum-based plated steel for hot pressing according to the present disclosure may include a base steel and an aluminum-based plating layer formed on its surface.

In particular, as described above, the base steel according to one example of the present disclosure may include, by wt%, Sb: 0.015 to 0.10%.

Sb in the base steel may form a rich layer at the base steel-plating layer interface during the hot press forming, and the Cr content enriched in the intermediate layer may be reduced by changing the diffusion rate of Cr in the aluminum-based plating layer. As a result, as described above, the corrosion resistance of the hot-press-formed member may be improved. When the Sb content is less than 0.015%, the above-described effect may not be obtained. and as another example, the base steel of the present disclosure may contain 0.018% or more of Sb, and as still another example, may include 0.022% or more.

On the other hand, when the Sb content exceeds 0.10%, the hydrogen embrittlement resistance and bendability of the hot-press-formed member may deteriorate due to excessive grain boundary segregation of Sb. In another example, the base steel of the present disclosure may include 0.097% or less of Sb, and in still another example, may include 0.094% or less.

In addition, although the alloy composition of the base steel is not specifically limited, according to a nonlimiting example, the base steel may include, by wt%, C: 0.080 to 0.50%, Si: 0.050 to 1.0%, Mn: 0.50 to 4.0%, P: 0.0150% or less (excluding 0%), S: 0.0200% or less (excluding 0%), Al: 0.010 to 0.10%, N: 0.02000% or less (excluding 0%), and Cr: 0.01 to 1%, and may consist of the balance of Fe and unavoidable impurities. Each alloy component is described in detail below.

### C: 0.080 to 0.50%

C may be added in an appropriate amount as it is an essential element to increase the strength of the hot-press-formed member. That is, in order to sufficiently secure the strength of the hot-press-formed member, the C may be added at a level of 0.080% or more. Preferably, the lower limit of the C content may be 0.095% or more. However, when the content is too high, when producing a cold-rolled material, the strength of the hot-rolled material becomes too high during cold rolling, which not only significantly impairs cold rollability but also significantly reduces spot weldability; therefore, to secure sufficient cold rollability and spot weldability, it may be added at 0.50% or less. In addition, the C content may be 0.45% or less, and more preferably, the C content may be limited to 0.40% or less.

### Si: 0.050 to 1.0%

Si not only needs to be added as a deoxidizer during steelmaking, but also plays a role in suppressing the formation of carbides, which have the greatest impact on the strength of the hot-press-formed member. In the present disclosure, in hot press forming, carbon may be added at a content of 0.050% or more to secure residual austenite by concentrating carbon at the martensite lath grain boundaries after the formation of martensite. Additionally, the upper limit of the Si content may be set to 1.0% to ensure sufficient plating properties when aluminum plating is performed on the steel sheet after rolling. Preferably, the Si content may be limited to 0.85% or less.

### Mn: 0.50 to 4.0%

Mn may be added at a content of 0.50% or more to secure solid solution strengthening effects and to lower the critical cooling rate required to secure martensite in the hot-press-formed member. Furthermore, the Mn content may be limited to 4.0% or less in order to secure workability in the hot press forming process by appropriately maintaining the strength of the steel sheet, reduce manufacturing costs, and improve spot weldability. Preferably, the Mn content may be 3.0% or less, and in some cases, 2.0% or less.

### P: 0.0150% or less (excluding 0%)

P exists as an impurity in the steel, and it is advantageous to have as little content as possible. Therefore, in the present disclosure, the P content may be limited to 0.0150% or less, and preferably, may be limited to 0.0130% or less. Since P is an impurity element that is advantageous the less it is present, there is no need to specifically set an upper limit for its content. However, considering that P may inevitably be included in the base steel, a case where P is included (0%) may be excluded from the scope of the present disclosure.

### S: 0.0200% or less (excluding 0%)

Since the S is an impurity in the steel and is an element that impairs the ductility, impact characteristics, and weldability of the member, the maximum content is limited to 0.0200%, and preferably, it may be limited to 0.0100% or less. Since the lower content of S is advantageous for securing ductility, impact properties, and weldability of the member, a lower limit thereof is not particularly limited. However, considering that S may inevitably be included in the base steel, a case where S is not contained at all may be excluded from the scope of the present disclosure.

### Al: 0.010 to 0.10%

Al, together with Si, acts as a deoxidizing agent during steelmaking to improve the cleanliness of steel, and may be added in an amount of 0.010% or more in order to achieve the above effect. In addition, the Al content may be limited to 0.10% or less to prevent the Ac3 temperature from becoming too high, thereby allowing the heating required during the hot press forming to occur within an appropriate temperature range.

### N: 0.02000% or less (excluding 0%)

N is an element inevitably included as an impurity in steel. In order to reduce sensitivity to crack occurrence during continuous slab casting and to secure impact properties, a lower content is advantageous, and thus N may be included in an amount of 0.02000% or less. Since the lower content of N is advantageous for securing the impact property of the member, a lower limit thereof is not particularly limited. However, considering that S may inevitably be included in the base steel, a case where the N is not contained at all may be excluded from the scope of the present disclosure.

### Cr: 0.010 to 1.0%

Cr is an element that increases hardenability of steel, and may be included in an amount of 0.010% or more in order to improve coating corrosion resistance through diffusion of a plating layer during manufacture of a cold-rolled steel sheet and a member according to an example of the present disclosure. In another example, Cr may be included in an amount of 0.050% or more. However, when Cr is excessively included in the cold-rolled steel sheet, not only does the cost increase, but also deterioration of physical properties may occur due to excessive formation of Cr-based carbides, and thus, in an example embodiment of the present disclosure, an upper limit of the Cr content may be set to 1.0%. As another example, the Cr may be included in an amount of 0.90% or less, and as another example, may be included in an amount of 0.80% or less.

A cold-rolled steel sheet according to one example of the present disclosure may optionally further include one or more elements selected from among a) to f) in addition to the above-described steel composition.
a) one or more selected from titanium (Ti), niobium (Nb), zirconium (Zr), and vanadium (V): 0.00500 to 0.400 wt%,
   Since Ti, Nb, Zr, and V are elements effective for improving the strength of a steel sheet of a hot-press-formed member through formation of fine precipitates, and for stabilizing residual austenite and improving impact toughness through grain refinement, one or more of these may be added in a total amount of 0.00500% or more. However, when the amount added exceeds 0.400%, not only will the above effect become saturated, but the addition of excessive ferroalloys may also lead to increased costs.
b) Boron (B): 0.0001000 to 0.01000 wt%
   The B is an element that not only improves hardenability even with a small addition, but also segregates at prior austenite grain boundaries to suppress brittleness of a hot-press-formed member caused by grain boundary segregation of P and/or S. Therefore, B may be added in an amount of 0.0001000% or more. However, when the B exceeds 0.01000%, not only is the effect saturated, but also brittleness is caused during hot rolling, and thus the upper limit may be set to 0.01000%, and in an example embodiment, the B content may be 0.005000% or less.
c) one or more selected from molybdenum (Mo) and tungsten (W): 0.0010 to 1.0 wt%
   Since the above Mo and W may improve hardenability and secure strength and grain refinement through precipitation strengthening effects, one or more of these may be added at a total content of 0.0010% or more. Additionally, to ensure the weldability of the member, their content may be limited to 1.0% or less.
d) one or more selected from copper (Cu) and nickel (Ni): 0.0030 to 2.0 wt%,
   The Cu and Ni are elements that improve strength by forming fine precipitates. To obtain the above-described effects, the sum of one or more of these components may be 0.0030% or more. However, since exceeding 2.0% results in an excessive increase in costs, the upper limit may be set to 2.0%.
e) Tin (Sn): 0.0010 to 1.0 wt%
   The Sn may be concentrated on the surface during annealing heat treatment for Al-Si plating, thereby suppressing formation of Si or Mn oxides on the surface and improving plating properties. To obtain this effect, it may be added in an amount of 0.0010% or more. However, when the content exceeds 1.0%, not only does it lead to an increase in ferroalloy costs, but it may also be dissolved at grain boundaries of a slab, thereby causing coil edge cracks during hot rolling. Therefore, the upper limit is set to 1.0%.
f) Rare earth elements (REM): 0.020 wt% or less.
   The REM is an element that is inevitably included, and when the REM is excessively included in the cold-rolled steel sheet, the physical properties of the hot-press-formed member may be deteriorated; therefore, according to an example embodiment of the present disclosure, the upper limit of the REM content may be set to 0.020%.

In addition to the components described above, iron (Fe) and unavoidable impurities may be included as a balance. Furthermore, there is no particular limitation on the addition of components, as long as they are components that may be contained in the base steel of the aluminum-based plated steel for hot pressing.

In the aluminum-based plated steel according to an example embodiment, the aluminum-based plating layer may be formed on the surface of the base steel.

Also, although not necessarily limited thereto, as one example, the aluminum-based plating layer may include, by wt%, 5.0 to 11% of Si when the alloy composition excluding the Fe content diffused from the cold-rolled steel sheet is taken as 100%, with the balance of Al and other unavoidable impurities.

Next, the method for manufacturing the aluminum-based plated steel according to an example embodiment will be described in detail.

According to the example embodiment, the aluminum-based plated steel may be manufactured by preparing the base steel having the composition and then performing hot-dip aluminum plating.

The type of the base steel is not particularly limited, and may include hot-rolled steel sheets, cold-rolled steel sheets, annealed steel sheets, and the like, and any steel material applicable in the technical field of the present disclosure may be used.

Meanwhile, the composition of the hot-dip aluminum plating bath may include, by wt%, Si: 5.0 to 11% and Fe: 5.0% or less, and may consist of the balance of Al and other unavoidable impurities.

The hot-press-formed member of the present disclosure will be described in detail below.

The hot-press-formed member according to an example embodiment of the present disclosure may include the base steel and an aluminum-based alloy plated layer, and the base steel may include, by wt%, 0.015 to 0.10% of Sb. In addition, the aluminum-based alloy plated layer may include an intermediate layer and an outermost layer positioned on an upper portion of the intermediate layer, and the Cr increase/decrease rate (%) derived from the following Relational Expression 1 may be 5% or more. Each component is described in detail below. [Relational Expression 1] $Cr increase / decrease rate \left(%\right) = \frac{A - B}{A} \times 100 \left(%\right)$
(In Relational Expression 1, A represents Crmax of the outermost layer, and B represents Crmax of the outermost layer.)

The hot-press-formed member according to an example embodiment of the present disclosure may include the base steel, and the base steel may include, by wt%, 0.015 to 0.10% of Sb as described above. In addition, although not necessarily limited thereto, the base steel may include, by wt%, C: 0.080 to 0.50%, Si: 0.050 to 1.0%, Mn: 0.50 to 4.0%, P: 0.0150% or less (excluding 0%), S: 0.0200% or less (excluding 0%), Al: 0.010 to 0.10%, N: 0.02000% or less (excluding 0%), and Cr: 0.01 to 1%, and may consist of the balance of Fe and unavoidable impurities. Furthermore, as a non-limiting example, the base steel may further include one or more elements selected from a) to f) below.
a) One or more selected from titanium (Ti), niobium (Nb), zirconium (Zr), and vanadium (V): 0.005 to 0.400 wt%,
b) Boron (B): 0.0001 to 0.0100 wt%,
c) One or more selected from molybdenum (Mo) and tungsten (W): 0.001 to 1.000 wt%,
d) One or more selected from copper (Cu) and nickel (Ni): 0.003 to 2.000 wt%,
e) One or more selected from tin (Sn): 0.001 to 1.000 wt%, and
f) Rare earth elements (REM): 0.0200 wt% or less.

Since this has been described above in relation to the aluminum-plated steel sheet, a detailed description thereof will be omitted.

In addition, the hot-press-formed member according to a non-limiting example of the present disclosure may include the aluminum-based alloy plated layer.

This aluminum-based alloy plated layer may be obtained by performing alloying heat treatment on the above-described aluminum-based plating layer, and then heattreating the obtained plated steel sheet at a temperature range of 880 to 950°C for 3 to 10 minutes, followed by the hot press forming.

That is, the hot-press-formed member according to a non-limiting example of the present disclosure may include the aluminum-based alloy plated layer obtained by alloying the aluminum-based plating layer with components such as Fe in the base steel, on the surface of the base steel having the composition described above. The aluminum-based alloy plated layer may include the intermediate layer enriched with Si and the outermost layer positioned on the upper portion of the intermediate layer.

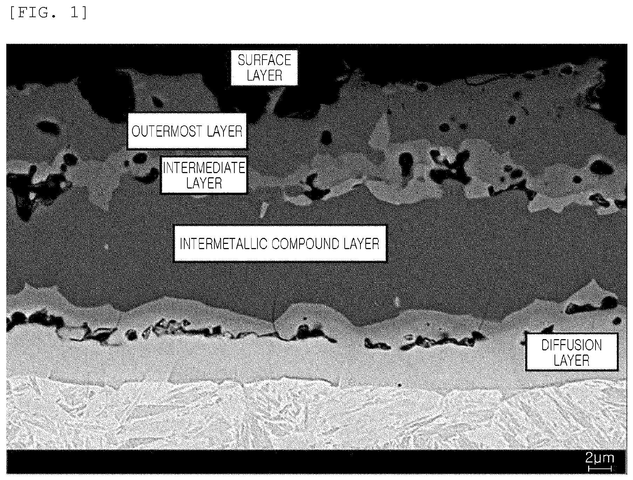

As illustrated in FIG. 1, the hot-press-formed member may include a diffusion layer, an intermetallic compound layer, the intermediate layer, and the outermost layer from the base steel. In this case, the intermediate layer refers to a layer that exists continuously or discontinuously and includes a concentration of Si.

As a non-limiting example, the Simax content of the intermediate layer may be, by wt%, 5.5 to 15%. The Simax content of the intermediate layer refers to the maximum value of the Si content included within the intermediate layer and may be measured using a glow discharge spectrometer (GDS). The Si in the intermediate layer plays a crucial role not only in stabilizing the phase of the intermediate layer but also in inhibiting grain growth. Therefore, when the Simax content is less than 5.5 wt%, it is difficult to obtain the above-described effects, and when it exceeds 15 wt%, an excessive amount of Si needs to be added to the plating bath. Further, since the blank needs to be heat-treated at a very high temperature for a long time, the diffusion layer becomes excessively thick, thereby causing a problem of deteriorating spot weldability.

Also, although not necessarily limited thereto, as one example, the aluminum-based alloy plated layer may include, by wt%, 5.0 to 11% of Si when the alloy composition excluding the Fe content diffused from the base steel is taken as 100%, with the balance of Al and other unavoidable impurities.

Meanwhile, the hot-press-formed member according to an example of the present disclosure may have a Cr increase/decrease rate (%) derived from the following Relational Expression 1 of 5% or more. [Relational Expression 1] $Cr increase / decrease rate \left(%\right) = \frac{A - B}{A} \times 100 \left(%\right)$
(In Relational Expression 1, A represents Crmax of the outermost layer, and B represents Crmax of the intermediate layer.)

To prevent localized degradation of corrosion resistance caused by an increase in chromium content in an intermediate layer formed after alloying of an aluminum-plated hot-press-formed member, the hot-press-formed member according to one example of the present disclosure includes antimony (Sb) in a base steel, and a Cr increase/decrease rate (%) derived from the following Relational Expression 1 is 5% or more.

Since a higher Cr increase/decrease rate (%) is advantageous for achieving the object of the present disclosure, the upper limit is not separately limited; however, since the Cr increase/decrease rate (%) cannot increase without limit in reality, in one example of the present disclosure, the upper limit of the Cr increase/decrease rate (%) may be 50%.

As a result, the hot-press-formed member according to an example embodiment of the present disclosure described above may secure excellent corrosion resistance after coating. More specifically, the hot-press-formed member according to an example embodiment of the present disclosure may have a combined left and right width of the corrosion blister of 5.0 mm or less after electrodeposition coating and coating-corrosion resistance evaluation. According to another example, it may be 4.8 mm or less, and according to still another example, it may be 4.5 mm or less.

Hereinafter, the method for manufacturing a hot-press-formed member of the present disclosure will be described in detail. However, the following method for manufacturing a hot-press-formed member is merely an example, and the hot-press-formed member of the present disclosure is not necessarily manufactured by this manufacturing method; it should be noted that any manufacturing method may be used to implement each embodiment of the present disclosure without limitation, as long as it satisfies the claims of the present disclosure.

It should be noted that the method for manufacturing a hot-press-formed member according to an example embodiment of the present disclosure may include an operation of obtaining an aluminum-based alloy plated steel by heating and holding the aluminum-based plated steel described above; and an operation of cooling the aluminum-based alloy plated steel after hot press forming.

Each operation will be described in detail below.

First, the method for manufacturing a hot-press-formed member according to an example embodiment of the present disclosure includes preparing an aluminum-based plated steel as described above in this specification, and heating and maintaining the same to obtain an aluminum-based alloy plated steel.

Furthermore, in an example embodiment of the present disclosure, the temperature during heating and maintaining may be Ae3 or higher. This is intended to secure sufficient strength by forming a fully austenitic structure during heating, thereby forming a fully martensitic structure after hot forming. As another example, the lower limit of the temperature may be (Ae3+5)°C or (Ae3+10)°C.

In this case, to calculate Ae3, the equilibrium temperature, at which the austenite transformation of each steel grade is completed, the following equation may be applied. $\begin{matrix}Ae 3 = 912 - 370 C - 27.4 Mn + 27.3 Si - \\ 6.35 Cr + 190 Ti + 72 Al + 332 S + 276 P - \\ 900 B + 16.2 CMn + 32.3 CSi + 15.4 CCr + 4.32 SiCr + 174 {C}^{2} + 2.46 {Mn}^{2} - \\ 6.86 {Si}^{2} + 0.32 {2 Cr}^{2}\end{matrix}$

In addition, the method for manufacturing a hot-press-formed member according to a non-limiting example of the present disclosure may satisfy the following Relational Expression 2 upon the heating. [Relational Expression 2] ${t}_{total} \geq - 65.79 \times ln \frac{{A}_{e 3} - {T}_{furnace} + 10}{- 961.23}$
(In Relational Expression 2, tₜₒₜₐₗ represents a total heating time (sec) in a furnace during heating, Ae3 represents an equilibrium temperature (°C) at which a transformation to austenite is completed, and T_{furnace} represents a set temperature (°C) in the furnace during the heating.)

One example of the present disclosure may allow sufficient alloying of the aluminum-based plating layer to occur during heating for hot forming through Relational Expression 2, and as a result, the aluminum-based alloy plated steel may be obtained. When the Relational Expression 2 is not satisfied during the heating, partially unalloyed regions may remain, and electrodeposition coating properties may be significantly degraded.

Next, an example embodiment of the present disclosure may include an operation of cooling the aluminum-based alloy plated steel after hot press forming.

According to one example of the present disclosure, the cooling rate in the cooling operation may be 10 to 1000°C/s.

When the cooling rate is less than 10°C/s, deterioration of tensile properties and bendability may occur due to the formation of a ferrite phase during cooling. Therefore, in an example embodiment of the present disclosure, the lower limit of the cooling rate may be set to 10°C/s. In another example embodiment, the lower limit of the cooling rate may be 15°C/s or 20°C/s.

On the other hand, when the cooling rate exceeds 1000°C/s, problems such as distortion of the shape of the formed part may occur, and there is a concern that process costs for maintaining such a high cooling rate may excessively increase. Therefore, in an example embodiment of the present disclosure, the cooling rate in the cooling operation may be 1000°C/s or less. In another example, the upper limit of the cooling rate may be 900°C/s or 800°C/s.

Meanwhile, according to another aspect of the present disclosure, there may be provided a hot-press-formed member including a base steel sheet; and an aluminum (Al)-based plating layer formed on at least one surface of the base steel sheet.

In an example embodiment of the present disclosure, the aluminum (Al)-based plating layer may include an oxide layer having a thickness of 100 nm or less in a direction from the surface toward the thickness direction.

The hot-press-formed member may be obtained by heating a steel sheet for hot press forming, such as an aluminum-based plated steel sheet in an example embodiment of the present disclosure, to a high temperature, followed by the forming. As will be described in detail below, according to an example embodiment of the present disclosure, heating is performed to a target temperature at a relatively high heating rate, followed by maintaining for a predetermined time and then rapid cooling together with forming. As a result, the oxide layer may be present on the surface of the plating layer of the hot-press-formed member.

In an example embodiment of the present disclosure, the oxide layer may mainly include aluminum oxide, as aluminum (Al), which is a main component constituting the plating layer, reacts with moisture, oxygen, etc. during a series of processes for hot forming to form an oxide. Here, "mainly including" means including 50% or more with respect to the total 100 wt% of the components constituting the oxide layer. Meanwhile, the oxide layer is basically composed of aluminum oxide, but oxides formed by oxidizing elements present in other plating layers (for example, Si, Mn, etc.) may also exist.

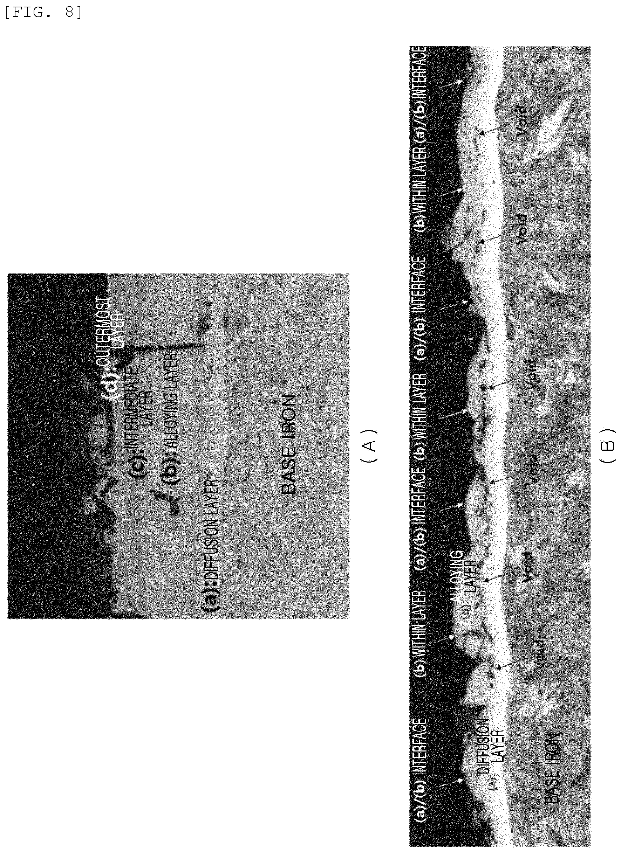

In an example embodiment of the present disclosure, the aluminum-based plating layer may sequentially include a diffusion layer a, an alloy layer b, an intermediate layer c, and an outermost layer d, and may be confirmed as a crosssectional structure illustrated in FIG. 8. In this case, the layer forming the interface with the base steel sheet is the diffusion layer a, and the oxide layer may exist in the thickness direction from the surface of the outermost layer d.

Meanwhile, in an example embodiment of the present disclosure, the oxide layer present in the outermost layer d of the aluminum-based plating layer may have pores on its surface.

When the plated steel sheet having the aluminum-based plating layer is used as a material for an automobile, the hot-press-formed member obtained by hot forming the plated steel sheet may have pores on its surface, that is, on the surface of the plating layer. When rust-preventive oil is applied to the surface of such hot-press-formed member, it seeps into the pores existing on the surface of the plating layer, which causes a problem in that it degrades the performance of the adhesive applied for a subsequent bonding process. In addition, dust and foreign object may easily enter into the pores existing on the surface of the plating layer, and as a result, the adhesive strength of the adhesive may be lowered. In particular, when the type of adhesives includes a structural sealer or a mastic sealer, an epoxy resin is included for the purpose of improving strength of the adhesive; however, since the resin has poor resistance to foreign object, when foreign object remains in the pores, it may adversely affect adhesion properties.

To solve the above-described problem, the inventors of the present disclosure conducted an in-depth study on the influence of the relationship between the pores present on the surface of the plating layer of the hot-press-formed member and the oxide layer formed on the surface of the plating layer, i.e., the outermost layer d, on adhesion property. As a result, it was confirmed that adhesion property, specifically sealing adhesion property, may be improved by controlling the aluminum oxide distribution according to the number of surface pores, which gives the present disclosure technical significance.

Accordingly, in the hot-press-formed member according to an example embodiment of the present disclosure, when the surface pores of the oxide layer present on the surface of the aluminum-based plating layer are greater than 30 pores/100 µm² and less than or equal to 80 pores/100 µm², the aluminum oxide distribution may be 90 to 100%. This means that even when the pores present on the surface of the oxide layer exceed a certain amount per unit area, the sealing adhesion property may be secured when the aluminum oxide distribution is high.

The above-described type of adhesives includes a coupling agent for adhesion to the surface to be applied, that is, the surface of the plating layer, and this coupling agent forms covalent bonds with hydroxyl groups of the oxide present on the surface of the plating layer. Based on this, the hot-press-formed member according to an example embodiment of the present disclosure proposes that when the surface pores of the oxide layer present on the surface of the plating layer are greater than 30 pores/100 µm² and less than or equal to 80 pores/100 µm², the aluminum oxide distribution may be 90% or more. When the aluminum oxide distribution is less than 90% when pores of greater than 30 pores/100 µm² and less than or equal to 80 pores/100 µm² are present on the surface of the oxide layer, the adhesive strength cannot be sufficiently improved due to insufficient hydroxyl groups capable of forming covalent bonds with the coupling agent component of the adhesive. Consequently, the deterioration in adhesion property caused by a large number of pores is induced.

Here, the aluminum oxide distribution may be 100%, which means that Al metal is not distributed on the surface of the plating layer. As will be explained in detail below, for example, when the surface of the plating layer is measured by XPS, a peak of Al metal may not be observed.

Meanwhile, when the number of pores on the surface of the oxide layer present on the surface of the aluminum-based plating layer of the hot-press-formed member according to an example embodiment of the present disclosure is smaller than in the above-described case, the target level of sealing adhesion property may be secured even when the aluminum oxide distribution is relatively low. Accordingly, the hot-press-formed member according to an example embodiment of the present disclosure proposes an aluminum oxide distribution of 70% or more when the number of surface pores of the oxide layer present on the surface of the plating layer is 30/100 µm² or less.

It is difficult to completely remove pores present on the surface of the oxide layer; rather, in order to suppress fracture due to hydrogen embrittlement, pores may be intentionally formed on the surface of the plating layer of the hot-press-formed member. Accordingly, regardless of the lower limit of the number of surface pores present on the surface of the oxide layer, when the number is 30/100 µm² or less, the above-described aluminum oxide distribution may be applied. However, when the aluminum oxide distribution on the surface of the oxide layer is less than 70%, hydroxyl groups that can bind to a coupling agent in an adhesive become insufficient, and thus improvement of adhesion property may not be achieved.

Here, the aluminum oxide distribution may be obtained by measuring the surface of the plating layer of the hot-press-formed member in which the oxide layer is present.

As a non-limiting example, the aluminum oxide distribution may be measured by analyzing the surface of the plating layer using X-ray photoelectron spectroscopy (XPS), which is a device effective for observing the surface structure of an object, and then determining a relationship between aluminum oxide present on the surface and aluminum metal. Since the metal and its oxide have different binding energies (eV), peaks are generated at different positions in the XPS measurement.

The following is a more detailed explanation with reference to the drawings.

First, FIG. 8 illustrates the results of measuring the surface of the plating layer of the hot-press-formed member according to an example embodiment of the present disclosure using XPS. In this result graph, the elemental metal content, oxide content, and their distribution can be confirmed from the position where peaks occur (x-axis, binding energy) and their height (y-axis, intensity). In particular, in an example embodiment of the present disclosure, the aluminum oxide distribution may be calculated using the area under the peak representing aluminum metal and the area under the peak representing aluminum oxide. Specifically, the aluminum oxide distribution is expressed as a ratio obtained by dividing the area under the aluminum oxide peak by [area under the aluminum oxide peak + area under the aluminum metal peak]. In this case, the area under the peak may be represented as a value (area) obtained by multiplying the maximum intensity value of the peak by the peak width value (binding energy) at the midpoint of the maximum intensity (1/2 intensity level). In this case, the peak width is referred to as FWHM, and the baseline value is excluded when calculating the maximum intensity.

For example, at the aluminum peak corresponding to 900°C in FIG. 8, the area under the aluminum oxide peak corresponds to (96251×2), and the area under the aluminum metal peak corresponds to (6616×1.2), and the aluminum oxide distribution calculated therefrom is 96.0%. In addition, it can be confirmed that no aluminum metal peak appears at 930°C in FIG. 8, which indicates that aluminum oxide is present at 100%.

In an example embodiment of the present disclosure, the oxide layer mainly including aluminum oxide may have a thickness of 100 nm or less. When the thickness exceeds 100 nm, there is a risk that the plating layer may peel off due to excessive outward diffusion of Al within the plating layer into the oxide. Meanwhile, although the lower limit of the thickness of the oxide layer is not specifically limited, the oxide layer may be formed to a thickness of approximately 30 nm or more according to a series of processes of an example embodiment of the present disclosure.

Meanwhile, in an example embodiment of the present disclosure, when the plated steel sheet having the aluminum-based plating layer is used as the base steel sheet for hot press forming, any steel sheet capable of producing the plated steel sheet may be used. As one example, the base steel sheet may be carbon steel, and since such carbon steel is widely known in the art, the composition of alloying elements is not specifically limited.

In particular, in an example embodiment of the present disclosure, the alloy composition of the base steel sheet may be the same as the alloy composition of the base steel described above, and detailed descriptions of each element are replaced with the foregoing descriptions.

Furthermore, in an example embodiment of the present disclosure, the aluminum-based plating layer is a plating layer containing aluminum (Al) as a main component, and does not exclude the addition of elements other than Al. As an example, elements such as silicon (Si), magnesium (Mg), and zinc (Zn) may be further included; these elements may be included as one type or two or more types. A plating layer including a mixture of these elements and Al may be referred to as an aluminum alloy plating layer.

The hot-press-formed member according to an example embodiment of the present disclosure may include an Al-Si-based plating layer on at least one surface of the base steel sheet. In an example embodiment of the present disclosure, the Al-Si-based plating layer may be composed, by wt%, of silicon (Si): 7.0 to 10.0%, iron (Fe): 5.0 to 15.0%, with the balance of aluminum (Al) and other unavoidable impurities, but is not limited thereto. In this case, the content of each component in the plating layer refers to the composition of the plating layer in the plated steel sheet itself before hot forming the aluminum-based plated steel sheet.

In an example embodiment of the present disclosure, the aluminum-based plating layer may be formed by immersing the base steel sheet in an hot-dip aluminum-based plating bath, as will be described in detail later, and it is well known that the composition of the aluminum-based plating layer is determined according to the composition of the hot-dip aluminum-based plating bath.

In an example embodiment of the present disclosure, silicon (Si) constituting the Al-Si-based plating layer serves to suppress excessive formation of an Al-Fe alloy phase generated by a reaction between Al in the plating bath and Fe in the base steel sheet during the plating process. For this purpose, the Al-Si-based plating layer may include Si in an amount of 7% or more. However, when the content exceeds 10%, the fluidity of the plating bath becomes excessively high, and the temperature of the plating bath increases. In this case, a Si eutectic phase (acicular shape) not dissolved in Al is formed as a single phase, which may deteriorate the formability of the plated steel sheet. In addition, when the Si content is less than 7%, there is a problem in that the fluidity of the plating bath decreases.

In an example embodiment of the present disclosure, Fe included in the plating layer may be introduced into the plating layer by Fe inevitably present in the plating bath, and may also be introduced by elution of Fe from the base steel sheet during the plating process. The Fe introduced into the plating layer may form the alloy layer b as illustrated in FIG. 8, and this alloy layer serves to maintain adhesion between the plating layer and the base steel sheet. Due to this alloy layer, the hardness at the interface between the plating layer and the base steel sheet tends to be lower than that of the surface of the plating layer. When the Fe content in the plating layer is less than 5%, the alloy layer is not sufficiently formed, and powdering, such as peeling of the plating layer, may occur. On the other hand, when the Fe content exceeds 15%, the corrosion resistance is deteriorated.

The components of the Al-Si-based plating layer excluding Si and Fe consist of Al and unavoidable impurities, and the Al is a main component for obtaining the aluminum-plated steel sheet and is effective in improving the corrosion resistance of the plated steel sheet. The Al may exist as a balance component in the Al-Si-based plating layer, and as one example, it may be present in an amount of 70 to 85%. As another example, the Al in the plating layer may be included at 82% or less.

In the process of manufacturing the plated steel sheet having the Al-Si-based plating layer, the unavoidable impurities may be unintentionally incorporated. It is noted that a person skilled in the art can easily understand the meaning of such unavoidable impurities.

Meanwhile, the Al-Si-based plating layer according to an example embodiment of the present disclosure may further include specific elements in addition to the above composition in terms of improving physical properties of the plating layer. As one example, it may further include one or more selected from the group consisting of the following.
i) one or more of chromium (Cr) and molybdenum (Mo): 2.5% or less
ii) one or more of niobium (Nb), zirconium (Zr), and vanadium (V): 0.1% or less
iii) antimony (Sb): 0.02 to 0.03%

Among these, chromium (Cr) and molybdenum (Mo) may be added to improve the hardness of the plating layer, and when the content of at least one thereof exceeds 2.5%, the hardenability of the plating layer becomes excessively high, thereby increasing the risk of cracking. In addition, niobium (Nb), zirconium (Zr), and vanadium (V) may also be added to improve the hardness of the plating layer. Since these are expensive elements, the content of at least one thereof may be 0.1% or less in view of economic efficiency. In addition, antimony (Sb) may be further included for the purpose of reducing hydrogen embrittlement of the plating layer, and may be included in an amount of 0.02% or more to sufficiently obtain the effect. However, when the content exceeds 0.03%, excessive pores are formed inside the plating layer, and these pores further increase during high-temperature heating for hot forming, thereby posing a risk that rust-preventive oil as well as dust and foreign object may be excessively trapped in the plating layer.

Hereinafter, the method for manufacturing a hot-press-formed member according to one aspect of the present disclosure, specifically a method for manufacturing a hot-press-formed member with improved sealing adhesion property, will be described in detail. However, it should be noted that the following manufacturing method corresponds to one example for manufacturing the hot-press-formed member.

In an example embodiment of the present disclosure, the method for manufacturing a hot-press-formed member may include an operation of preparing the plated steel sheet having the aluminum-based plating layer provided on at least one surface of the base steel sheet; an operation of heating and maintaining the plated steel sheet at a high temperature; and an operation of forming and rapidly cooling the maintained plated steel sheet.

In an example embodiment of the present disclosure, the base steel sheet for providing the aluminum-based plating layer on at least one surface may be any steel sheet capable of producing a plated steel sheet having an Al-based plating layer by a plating treatment, and the type thereof is not particularly limited. In addition, it may be replaced with the description of the base steel sheet described above.

In an example embodiment of the present disclosure, the aluminum-based plating layer may, as one example, refer to the Al-Si-based plating layer. The Al-Si-based plating layer is a plating layer including aluminum (Al) as a main component and containing a certain amount of Si. As one example, the Al-Si-based plating layer may be composed of, by wt%, silicon (Si): 7.0 to 10.0%, iron (Fe): 5.0 to 15.0%, the balance of aluminum (Al), and other unavoidable impurities. The description of these compositions may be replaced with the above description of the plating layer.

Meanwhile, according to an example embodiment of the present disclosure, the Al-Si-based plating layer may further include components other than those described above, and as one example, may further include one or more selected from the group consisting of the following. The description of the following elements may also be replaced with the foregoing description.
i) one or more of chromium (Cr) and molybdenum (Mo): 2.5% or less
ii) one or more of niobium (Nb), zirconium (Zr), and vanadium (V): 0.1% or less
iii) antimony (Sb): 0.02 to 0.03%

Meanwhile, the method for forming an aluminum-based plating layer, for example, an Al-Si-based plating layer, on at least one surface of a base steel sheet may employ a hot-dip plating process capable of obtaining a hot-dip aluminum-plated steel sheet. As a non-limiting example, by immersing the base steel sheet in the hot-dip plating bath including Al and Si, Fe, etc., in the above-described amounts, the Al-Si-based plating layer may be formed on both surfaces of the base steel sheet. In this case, the Al-Si-based plating layer may correspond to the plating layer described above. In this manner, an aluminum plated steel sheet having the Al-Si-based plating layer formed on at least one surface of the base steel sheet may be referred to as an aluminum alloyplated steel sheet.

In an example embodiment of the present disclosure, the hot forming may be performed on the plated steel sheet provided with the aluminum-based plating layer on at least one surface of the base steel sheet, and for this purpose, the plated steel sheet may be heated to a high temperature.

The plated steel sheet is mainly used as the steel sheet for hot press forming. When the plated steel sheet is a plated steel sheet having an aluminum-based plating layer, during the high-temperature heating process for hot forming, Fe from the base steel sheet diffuses into the plating layer and reacts with Al in the plating layer to form a Fe-Al alloy phase. In addition, pores are generated in the plating layer during the heating process.

As described above, when the rust-preventive oil is applied to the surface of the plating layer of the hot-press-formed member, the rust-preventive oil is trapped in pores present on the surface of the plating layer, which acts as a factor that impairs adhesion properties when an adhesive is applied in a subsequent bonding process.

For this reason, the inventors of the present disclosure intended to induce Al to exist in the form of an oxide rather than forming an alloy phase with Fe during high-temperature heating of the plated hot forming steel sheet. Accordingly, in an example embodiment of the present disclosure, conditions are provided for uniformly heating the surface of the plating layer of the plated steel sheet and rapidly reaching a target temperature when heating the plated steel sheet to the target temperature for hot forming.

As such conditions, according to an example embodiment of the present disclosure, the plated steel sheet may be heated to a temperature range of 900 to 960°C at a heating rate of 15 to 20°C/s.

When the heating rate is less than 15°C/s, Al in the plating layer forms an alloy phase with Fe diffused from the base steel sheet during the heating process, making it impossible to sufficiently form an oxide layer on the surface of the plating layer. On the other hand, when the heating rate exceeds 20°C/s, the plating layer may not be heated uniformly, raising a concern that the surface may become non-uniform. In addition, when the heating temperature is below 900°C, sufficient oxide may not be formed on the surface of the plating layer, whereas when the temperature exceeds 960°C, there is a risk that the plating layer may be molten.

Subsequently, a process of maintaining the heated plated steel sheet for a certain period of time may be performed. This process is intended to uniformly transfer heat across the entire plated steel sheet and may be performed for a minimum of 3 minutes to a maximum of 6 minutes.

When the holding time is less than 3 minutes, heat may not be uniformly transferred across the steel sheet, and there is a risk that the shape may become non-uniform during the subsequent forming process. On the other hand, when the time exceeds 6 minutes, productivity decreases, making it disadvantageous from an economic perspective. Furthermore, formation of the intended oxide layer may be completed within 6 minutes.

When the maintenance process is completed, cooling may be performed simultaneously with forming the plated steel sheet, and this cooling may be performed by rapid cooling.

In an example embodiment of the present disclosure, the heated and maintained plated steel sheet may be hotformed into an intended shape using a die or the like, and the cooling (rapid cooling) may be performed simultaneously with this hot forming.

According to an example embodiment of the present disclosure, surface deviations depending on the forming region may be prevented by performing the rapid cooling at a cooling rate of 50°C/s or higher. When the cooling rate during rapid cooling is less than 50°C/s, time is provided for Fe diffused from the base steel sheet to react with Al, and thus the intended oxide layer may not be formed on the surface of the plating layer. In an example embodiment of the present disclosure, the upper limit of the cooling rate during the rapid cooling is not specifically limited. However, when the cooling rate exceeds 1000°C/s, separate cooling equipment is required. In this case, economic efficiency may be reduced.

Meanwhile, in performing the above-described cooling process, although not limited thereto, as an example embodiment of the present disclosure, cooling may be terminated at Mf or lower. When the cooling is terminated at a temperature exceeding Mf, an additional process of cooling to room temperature must be performed. In this case, it is difficult to ensure shape retention of the hot-press-formed member. Here, Mf refers to the martensite transformation finish temperature.

By heating the plated steel sheet under the above-described conditions, the oxide layer may be advantageously formed on the surface of the plating layer by reacting with moisture, oxygen, etc. in the atmosphere before Al in the plating layer forms an alloy phase with Fe. This oxide layer mainly includes an aluminum oxide layer, and a coupling agent included in the adhesive forms covalent bonds with hydroxyl groups of this oxide, thereby effectively increasing adhesive strength.

Hereinafter, a forming device according to a third aspect of the present disclosure and a forming method using the same will be described.

According to an example embodiment of the present disclosure, there are provided a device and method for forming a bracket having a curved portion and a flange using high-strength steel, and forming a bracket for a battery case formed thereby. This enables the forming of the bracket for a battery case that could not previously be formed using high-strength steel.

In an example embodiment of the present disclosure, the high-strength steel may be the above-described hot forming steel sheet and may have the above-described alloy composition. Furthermore, the material may be manufactured using the above-described manufacturing methods.

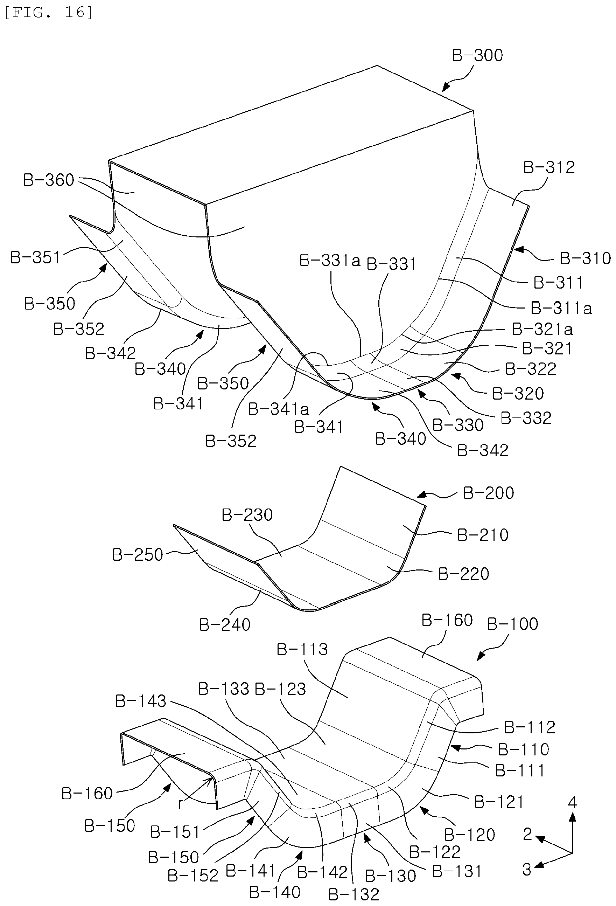

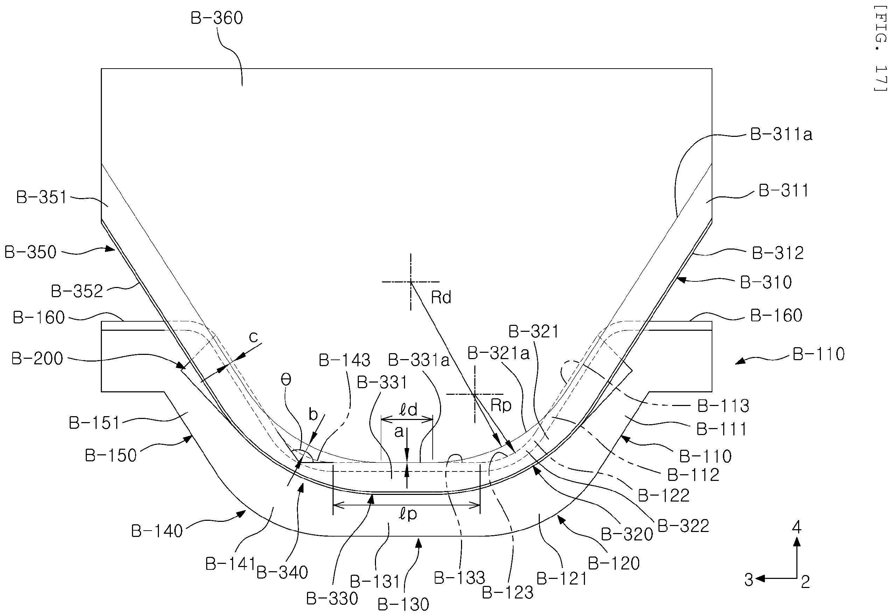

FIGS. 16 and 17 illustrate a forming device according to an example embodiment of the present disclosure. Specifically, FIG. 16 illustrates an exploded perspective view of a forming device according to an example embodiment of the present disclosure, and FIG. 17 illustrates a side view of a forming device according to an example embodiment of the present disclosure. In this example embodiment, the forming device is illustrated with a focus on an appearance of a die.

As illustrated in FIG. 16, the forming device according to an example embodiment of the present disclosure includes: a pad B-200; a die B-300 disposed outside the first direction 2 of the pad B-200; and a punch B-100 disposed on the lower portion of the pad B-200 and including a main body in which first through fifth punch forming portions B-120, B-130, B-140, B-150, and B-160 are formed. Although not illustrated in FIGS. 16 and 17, the forming device according to an example embodiment of the present disclosure is a hot press forming device, and cooling channels B-170 and B-370 (see FIG. 14) through which cooling water flows are disposed on the inside of the punch B-100 and the die B-300, so that the material may be hardened through heat treatment during or after forming.

The pad B-200 and die B-300 are connected to an upper die of the press, and the punch B-100 is connected to a lower die of the press, so the material is formed as the pad B-200 and the die B-300 move in a third direction 4, which is a vertical direction toward the punch B-100. Although not illustrated, the pad B-200 and the die B-300 may be configured to move independently or to allow relative movement in the vertical direction. For example, an elastic member is attached to the upper portion of the pad B-200, so that the pad B-200 and the die B-300 move together during the forming process. After the forming of the pad B-200 is completed, only the die B-300 moves downward relative to the pad (B-200) by the elastic member.

The punch B-100 is configured to form two brackets simultaneously. Accordingly, the punch B-100 includes two forming portions corresponding to the curved portion of the bracket. Specifically, the punch B-100 includes, when viewed in a first direction 2, a linear first punch forming portion B-110, a curved second punch forming portion B-120 having a radius of curvature Rp of the curved forming portion, a linear third punch forming portion B-130, a curved fourth forming portion B-140 having the radius of curvature Rp of the curved forming portion, and a linear fifth punch forming portion B-150 continuously along a second direction 3 perpendicular to the first direction 2 on a horizontal plane, and a support portion B-160 for supporting the material before forming is disposed on the outside of the first forming portion and the fifth forming portion B-150.

The first and fifth punch forming portions B-110 and B-150 have a structure that is entirely inclined toward the third punch forming portion B-130, the third punch forming portion B-130 has, at a central region thereof, a structure parallel to a horizontal plane, and the second and fourth punch forming portions B-120 and B-140 have a structure that is curved to connect the first and fifth punch forming portions B-110 and B-150 with the third punch forming portion B-130.

The first and second punch forming portions B-110 and B-120 and the fourth and fifth punch forming portions B-140 and B-150 have a symmetrical structure centered on the third punch forming portion B-130, so one bracket is formed centered on the second punch forming portion B-120, and another bracket is formed centered on the fourth punch forming portion B-140.

The first punch forming portion B-110 includes a first extended surface forming portion B-111 extending along the third direction 4 to form flanges B-21 and B-23 (see FIG. 15) of a bracket B-20 (see FIG. 14) on both sides of the first direction 2, a first main body forming portion B-113 formed to form a main body B-23 (see FIG. 15) of the bracket B-20, and a first curved surface forming portion B-112 having a bending radius of curvature r between the first extended surface forming portion B-111 and the first main body forming portion B-113.

The second punch forming portion B-120 and the third punch forming portion B-130 further include second and third extended surface forming portions B-121 and B-131 extending along the third direction 4 to form flanges B-21 and B-22 of the bracket B-20 on both sides in the first direction 2, second and third main body forming portions B-123 and B-133 forming the main body B-23 of the bracket B-20 and disposed at a lower portion of the pad B-200, and second and third curved surface forming portions B-122 and B-132 having the bending radius of curvature r, disposed between the second extended surface forming portion B-121 and the second main body forming portion B-113, and between the third extended surface forming portion B-131 and the third main body forming portion B-133. In this case, the third main body forming portion B-133 and the support portion B-160 may be parallel to the horizontal plane.

Since the fourth and fifth punch forming portions B-140 and B-150 have a structure symmetrical to the first and second punch forming portions B-110 and B-120, the fourth and fifth punch forming portions B-140 and B-150 also include the fourth and fifth extended surface forming portions B-141 and B-151, the fourth and fifth curved surface forming portions B-142 and B-152, and the fourth and fifth main body forming portions B-143.

Meanwhile, the pad B-200 includes first through fifth pressing surfaces B-210, B-220, B-230, B-240, and B-250 having shapes corresponding to the first through fifth main body forming portions B-113, B-123, B-133, and B-143 of the punch B-100. The pad B-200 presses the material toward the upper portion of the punch B-100 to primarily form the material to have an overall curved portion. The pad B-200 may have a length from a length corresponding to the third main body forming portion B-133 in the first direction 2 to the third extended surface forming portion B-131.

The die B-300 has a structure that is disposed on both sides of the first direction of the pad B-200 and forms flanges B-21 and B-22. In this example embodiment, the die B-300 is disposed on both sides to form the flanges B-21 and B-22 formed on both sides of the bracket B-20, but is not limited thereto and may be disposed on only one side. Since the shapes on both sides of the die B-300 are symmetric with respect to the pad B-200, the description will be given focusing on one side of the die B-300.

The die B-300 includes, when viewed in the first direction 2, a linear first die forming portion B-310, a curved second die forming portion B-320 having a radius of curvature Rd of the curved die, a linear third die forming portion B-330, a curved fourth die forming portion B-340 having the radius of curvature Rd of the curved die, and a linear fifth die forming portion B-310, corresponding to first through fifth forming portions B-110, B-120, B-130, B-140, and B-150 of the punch B-100. The first through fifth die forming portions B-310, B-320, B-330, B-340, and B-350 are connected via a vertical plane B-360.

Similar to the punch B-100, the first and second die forming portions B-310 and B-320 and the fourth and fifth die forming portions B-340 and B-350 of the die B-300 have a structure that is symmetrical with respect to the third die forming portion B-330.

The first die forming portion B-310 is adjacent to the punch B-100 and includes a first die curved forming portion B-311 formed as a curved surface at a position relatively close to the punch B-100 in the first direction, and a first flat surface forming portion B-312 at a position relatively far from the punch B-100.

Similarly, the second through fifth die forming portions B-320, B-330, B-340, and B-350 include second through fifth die curved forming portions B-321, B-331, B-341, and B-351 and second through fifth flat surface forming portions B-322, B-332, B-342, and B-352. The curved surfaces of the first through fifth die curved forming portions B-311, B-321, B-331, B-341, and B-351 increase in height as they get closer to the punch B-100.

In this example embodiment, the radius of curvature Rd of the second and fourth die forming portions B-320 and B-340 refers to the radius of curvature at the upper portions B-321a and B-341a closest to the punch B-100 of the second and fourth curved surface forming portions B-321 and B-341 when viewed in the first direction 2.

As illustrated in FIG. 17, in this example embodiment, when forming the flange, the die B-300 is configured such that the first and fifth die forming portions B-310 and B-350 first come into contact with the material, the third die forming portion B-330 comes into contact next, and the second and fourth die forming portions B-320 and B-340 perform forming last. By performing such sequential forming, stretching/contraction are carried out while the material between the second and fourth die forming portions B-320 and B-340 and the second and fourth punch forming portions B-120 and B-140 is secured, thereby preventing the occurrence of wrinkles or tearing during the forming process.

Specifically, when the third main body forming portion B-133 and an upper portion B-331a of the third die forming portion B-330 are positioned (a) on the same plane, when viewed in the first direction 2, the first main body forming portion B-113 is positioned (c) above an upper portion B-311a of the first die forming portion B-310, and the second main body forming portion B-123 is positioned (b) below an upper portion B-321a of the second die forming portion B-320. The relationship between the symmetrical fourth and fifth die forming portions B-340 and B-350 and the fourth and fifth main body forming portions B-143 and B-153 is also the same.

That is, when the third die forming portion B-330 starts forming a flange on the material, the first die forming portion B-310 is already performing flange forming, while the second die forming portion B-320, which is a curved portion, has not yet started forming.

In this example embodiment, a length lp of the third main body forming portion B-133 is longer than a length ld of the third die forming portion B-330, and the radius of curvature Rp of the curved forming portion of the second main body forming portion B-123 is configured to be smaller than the radius of curvature Rd of the curved die of the second die forming portion B-320, so that the above-described relationship may be achieved.

Since the radius of curvature Rd of the curved die is formed to be larger than the radius of curvature Rp of the curved forming portion, the center of the radius of curvature Rd of the curved die may be positioned at the center of the second direction 3 of the third die forming portion B-330. As a result, the centers of the radius of curvature Rd of the curved die of the second die forming portion B-320 and the fourth die forming portion B-340 may be positioned at the same position, but are not limited thereto.

In this case, when viewed in the first direction, the angle θ at which the extension lines of the imaginary tangents of both end portions intersect in the fourth punch forming portion B-143 may be 90° or greater, and specifically, may be between 95° and 135°. This also applies to the second punch forming portion B-123.

Meanwhile, the forming device according to one embodiment of the present disclosure achieves a structure that is difficult to realize by press forming with conventional high-strength steel of 1200 MPa or higher, by using hot press forming and the above-described structure. The radius of curvature Rp of the curved forming portion and the bending radius of curvature r may satisfy the conditions of 25 mm ≤ Rp (mm) + r (mm) ≤ 30 mm.

As described above, the bracket produced by the forming device may be used in a battery case. However, when the radius of curvature in the battery case is large, a dead space will occur, so the bending radius of curvature r, which is practically permissible for forming a flange in the battery case, is 10 mm or less. Meanwhile, when the bending radius of curvature r is less than 3 mm, it is difficult to perform the forming even with hot press forming steel of 1200 MPa or higher. Even when the radius of curvature r is 3 mm, it is determined whether the forming is possible by the radius of curvature Rp of the curved forming portion. This will be described again while describing the bracket for a battery case.

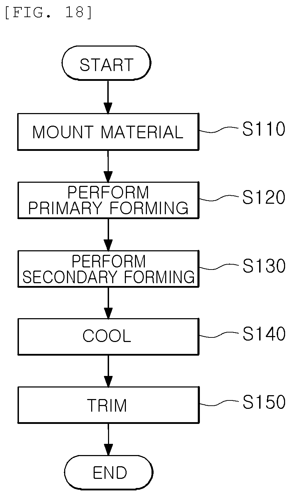

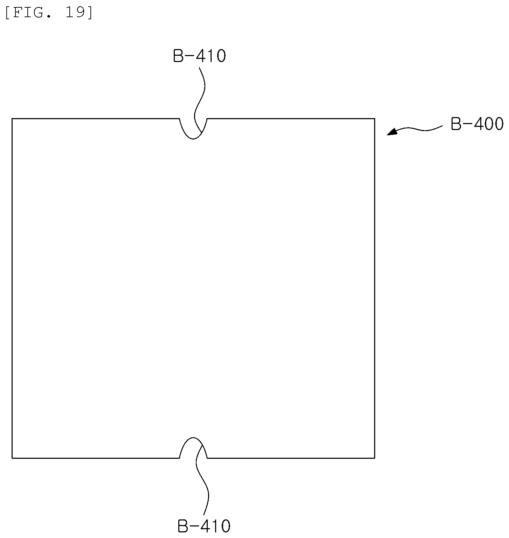

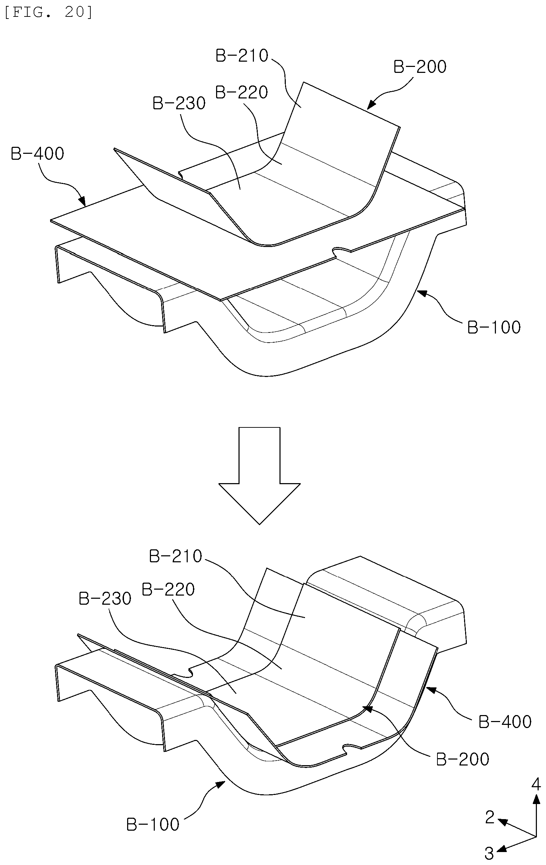

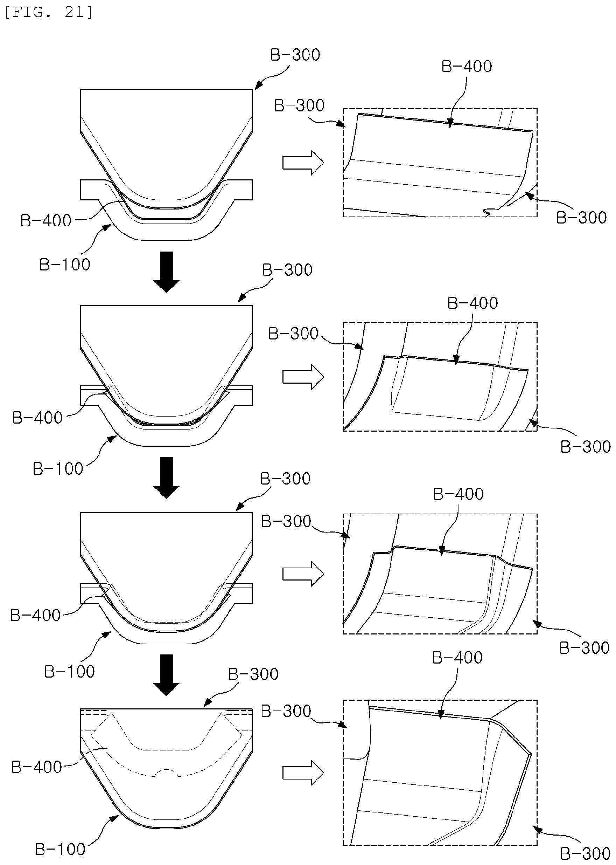

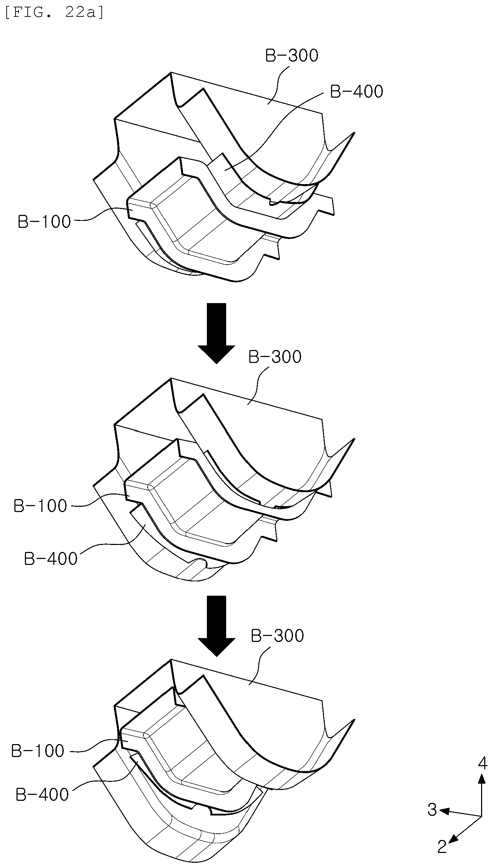

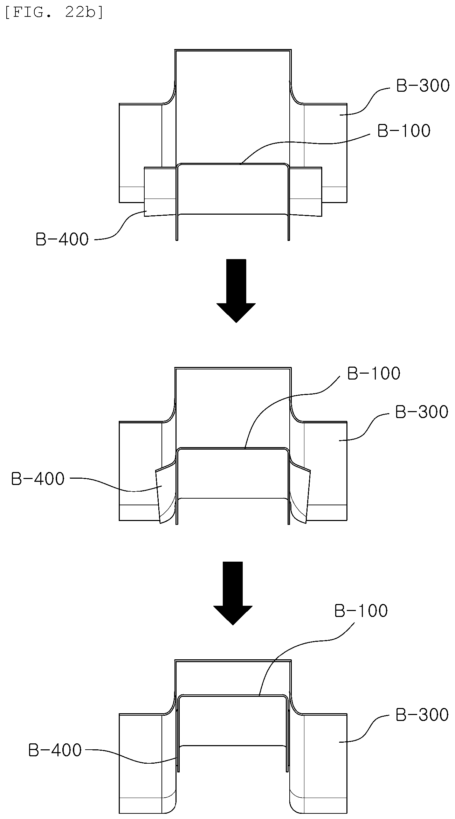

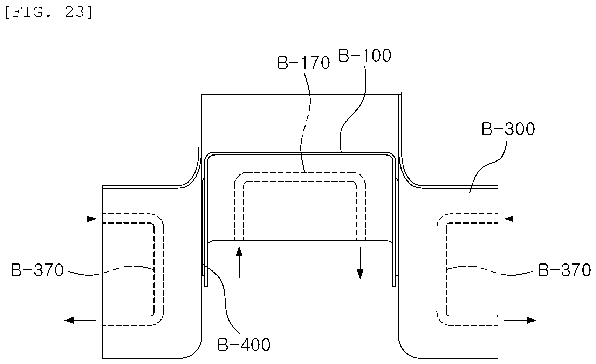

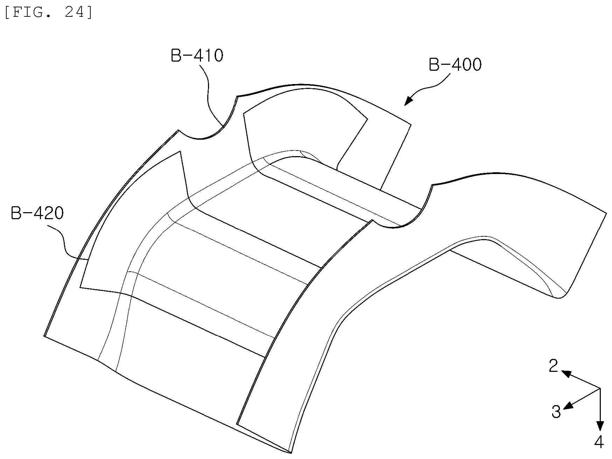

FIGS. 18 through 24 illustrate a forming method according to an example embodiment of the present disclosure. FIG. 18 is a flowchart of a forming method according to an example embodiment of the present disclosure, FIG. 19 is a plan view of a material charged into a forming device according to an example embodiment of the present disclosure, FIG. 20 is a schematic perspective view illustrating a primary forming operation in a forming method according to an example embodiment of the present disclosure, FIGS. 21, 22a, and 22b are schematic perspective view, another perspective view, and front view illustrating a secondary forming operation in the forming method according to an example embodiment of the present disclosure, FIG. 23 is a front view illustrating a cooling operation in the forming method according to an example embodiment of the present disclosure, and FIG. 24 is a perspective view illustrating a trimming operation in the forming method according to an example embodiment of the present disclosure.

Since a forming method according to another aspect of the present disclosure may be performed by the above-described forming device, it will be described with reference to FIG. 16 as well.

The forming method according to an example embodiment of the present disclosure includes: a material mounting operation (S110) of mounting a heated material B-400 on a punch B-100 having a forming portion and having a length longer in a first direction 2 than the punch B-100; a primary forming operation (S120) of forming the material B-400 into the shapes of the main body forming portions B-113, B-123, B-133, and B-143 of the punch B-100 through the pad B-200 positioned on an upper portion of the punch B-100; a secondary forming operation (S130) of forming the material B-400 to follow the shape of the forming portion of the punch B-100 through the die B-300 positioned outside the pad B-200 in the first direction 2; a cooling operation (S140) of cooling the material to a martensitic structure by at least one of the punch and the die; and a trimming operation (S150) of cutting the cooled formed product into a bracket shape.

The material mounting operation (S110) is an operation in which the material is charged into a forming device and mounted on the punch B-100. In this case, the material is a steel sheet, and the material is mounted on the punch B-100 in an austenitic state, i.e., heated to a temperature higher than AC3, so that structural changes may occur during or after forming. The material may be a hot press forming steel, for example, 22MnB5.

In an example embodiment of the present disclosure, the material may be the above-described hot forming steel sheet and may have the above-described alloy composition.

In addition, in order to form two brackets at once in the present disclosure, the material B-400 includes notches B-410 formed on both sides toward the center of the material in the second direction 3. The notches B-410 concentrate deformation during forming, thereby preventing cracks from occurring in regions other than the notches B-410.

As illustrated in FIG. 20, the primary forming operation (S120) is an operation in which the material B-400 is formed into a curved shape through a pad B-200 after the material B-400 is secured. The material B-400 is formed by pressing the pad B-200 against the material B-400 from an upper portion of the punch B-100.

As illustrated in FIGS. 21 through 22a and 22b, the secondary forming operation (S130) is an operation of forming a flange on a curved material through a die B-300, and is an operation of deforming the material by applying pressure to the die B-300 on a portion of the material B-400 that is not in contact with the pad B-200 that is first formed by the pad B-200. In this case, as described in FIG. 17, in the secondary forming operation (S130), the die B-300 sequentially forms the edge portion, the central portion, and the intermediate portion between the center and the edge of the material in the second direction 3, so that the curved portion of the first formed material B-400, that is, the second and fourth punch forming portions B-120 and B-140, are formed last, thereby forming the flange on the material B-400. In this case, the shape of the forming portion of the punch B-100 and die B-300 is described with reference to FIGS. 16 and 17.

The cooling operation (S140) is an operation of cooling the material B-400 during or after forming, and cools the material B-400 having an austenitic structure by circulating a cooling fluid through cooling channels B-170 and B-370 formed in at least one of the punch and the die, thereby transforming the austenitic structure into the martensitic structure. As a result, the material B-400 is formed into a high-strength steel having a tensile strength of 1200 MPa or higher. In this example embodiment, the cooling channels B-170 and B-370 are formed in both the punch B-100 and the die B-300. When the austenitic structure may be transformed into a martensitic structure, the cooling channels B-170 and B-370 may be provided in only one of the punch B-100 and the die B-300. In addition, if necessary, the cooling channels B-170 and B-370 may also be provided in the pad B-200.

After the cooling operation (S140) is completed, the trimming operation (S150) is performed, cutting the formed material B-400 along a cutting line B-420 to leave only the portions corresponding to the two brackets. The two brackets are cut around the second and fourth punch forming portions B-120 and B-140 of the punch B-100.

The forming method according to an example embodiment of the present disclosure enables forming a bracket with a curved portion and a flange from high-strength steel. Furthermore, by applying the hot press forming process, springback occurring during forming of a high-strength steel may be prevented, and forming defects caused by the flange forming in the curved portion, such as wrinkles or thickness thinning, may be suppressed.

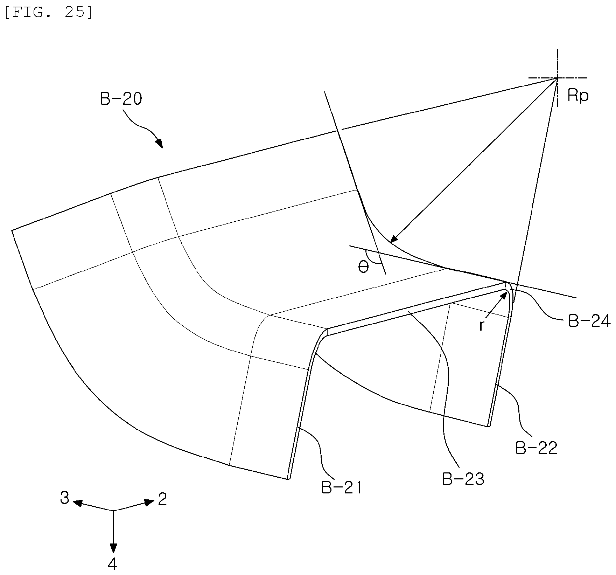

FIG. 25 is a perspective view of a bracket manufactured by the forming method according to an example embodiment of the present disclosure.

A bracket B-20 of FIG. 25 has a main body B-23 and flanges B-21 and B-22, and is curved overall with a radius of curvature Rp of the curved forming portion. In this case, flanges B-21 and B-22 are connected to the main body B-23 by a curved surface B-24 bent with the bending radius of curvature r. The surface formed with the radius of curvature Rp of the curved forming portion in the main body B-23, the flanges B-21 and B-22 of the bracket B-20, and the curved surface B-24 therebetween may be called a forming surface.

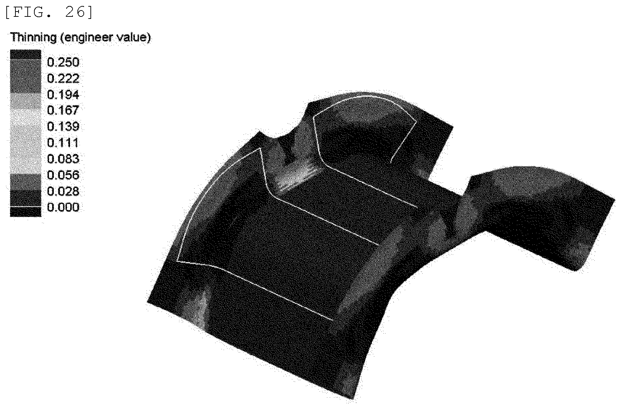

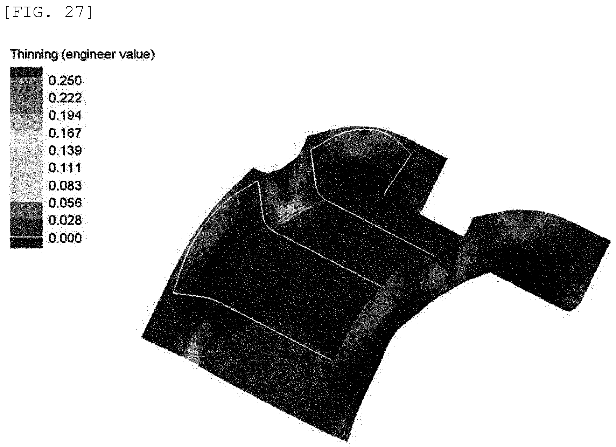

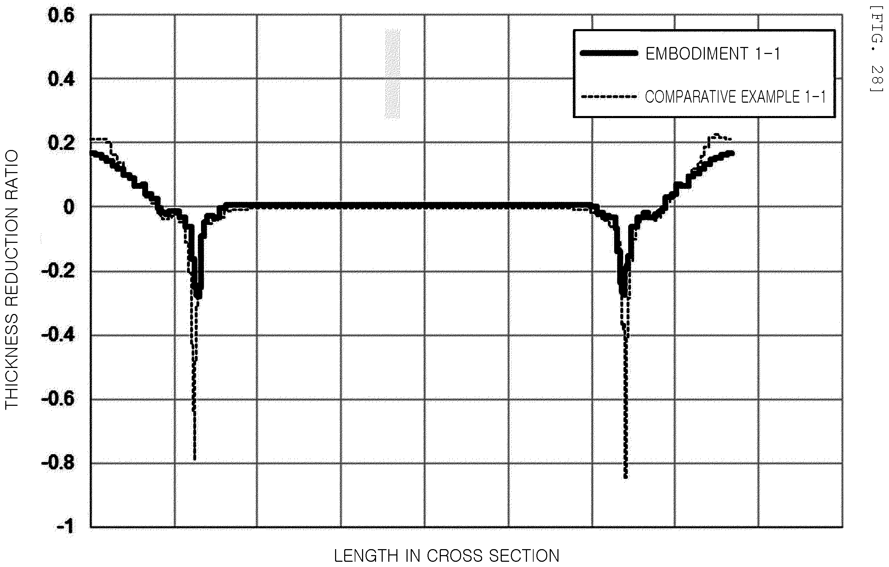

FIG. 26 illustrates a thickness reduction ratio distribution of a formed product manufactured by the forming method according to an example embodiment of the present disclosure (Embodiment 1-1), FIG. 27 illustrates a thickness reduction ratio distribution of Comparative Example 1-1 manufactured by a different forming method, and FIG. 28 illustrates a thickness reduction ratio distribution graph in a cross section of the formed product of FIGS. 26 and 27.

The thickness reduction ratio distribution illustrates how the thickness of the material B-400 (see FIG. 19) changes after forming. The thickness reduction ratio is a value obtained by subtracting the thickness of the corresponding position of the bracket B-20 from the initial thickness tini of the material B-400 and dividing the value by the initial thickness tini. A positive value indicates a reduced thickness, whereas a negative value indicates an increased thickness.

The embodiment of FIG. 26 was manufactured using the forming device of FIG. 16. A material heated to have a martensitic structure from 22MnB5 steel was supplied, and a cooling rate was adjusted, such that the bracket had a tensile strength of 1500 MPa. In this case, the thickness of the material was 1.2 t, the bending radius of curvature r was 5 mm, and the radius of curvature Rp of the curved forming portion was 22 mm.

As illustrated in FIGS. 26 and 28, the thickness of the main body B-23 in the bracket B-20 is not different from the initial thickness tini, so the average thickness tav of the main body B-23 of bracket B-20 may be regarded as the initial thickness tini of the material B-400. The value obtained by subtracting the thickness of each position from the average thickness tav of the main body B-23 and dividing the value by the average thickness tav may be regarded as the thickness reduction ratio.

Comparative Example 1-1 was formed using the same forming device with a mat steel having a tensile strength of 1500MPa.

As illustrated in FIG. 28, when manufacturing the bracket using the forming device and the forming method according to an example embodiment of the present disclosure (Embodiment 1-1), it may be seen that the maximum thickness reduction ratio, i.e., the thickness reduction ratio at the portion with the minimum thickness value tₘᵢₙ does not exceed 0.2, but, in Comparative Example 1-1, the thickness reduction ratio at the thinnest portion exceeds 0.2. When the thickness reduction ratio exceeds 0.2, a height difference occurs between the flanges B-21 and B-22, which may degrade the sealing performance of the battery case when manufactured.

Furthermore, as illustrated in FIG. 28, even when the bracket is curved and elongation is dominant, shrinkage may occur in certain portions. When buckling occurs, this shrinkage may result in damage to the material. In the case of the bracket formed using the forming method according to an example embodiment of the present disclosure, even at a location of the maximum thickness tₘₐₓ on the curved surface, a thickness reduction ratio of -0.3 or less did not occur, and thus it was confirmed that the stable forming was achieved even in the curved portion.

However, in the case of Comparative Example 1-1, a thickness reduction ratio of -0.8 occurred at the maximum thickness tₘₐₓ position, and thus, it may be seen that buckling has occurred in that area. Such buckling may lead to cracking, thereby degrading the structural performance of the battery case and allowing water to infiltrate through the affected portion. To maintain sealing properties, it is advantageous to maintain a thickness reduction ratio of -0.4 or greater even in the curved portion.

Meanwhile, the forming was possible only when a sum of the radius of curvature Rp of the curved forming portion and the bending radius of curvature r was 25 mm or more. However, when the bending radius of curvature r was less than 3 mm, it was difficult to form a bracket applicable to a battery case even with the forming device and method according to an example embodiment of the present disclosure. Even when the flange forming was possible because the bending radius of curvature r was 3 mm, the forming was not properly performed at the curved portion flange when the radius of curvature Rp of the curved forming portion was less than 22 mm. Meanwhile, when the bending radius of curvature r and the radius of curvature Rp of the curved forming portion increased, forming itself was not difficult; however, the increased radius of curvature in the battery case resulted in dead space, making the battery case impractical. Therefore, it is preferable that the sum of the radius of curvature Rp of the curved forming portion and the bending radius of curvature r is 30 mm or less for the bracket applicable to the battery case.

In addition, in the bracket B-20, the angle θ at which the extension lines of the virtual contacts intersect at both end portions of the forming surface may be between 95 and 135°. When the angle θ is less than 95°, the forming is not performed properly even when the conditions of the radius of curvature Rp of the curved forming portion and the bending radius of curvature r are satisfied. When the angle θ exceeds 135°, the battery case should be configured to have an angle corresponding to a polygon with more than eight sides, resulting in dead space in which the generally rectangular battery cells may not be accommodated, thereby making the battery case impractical.

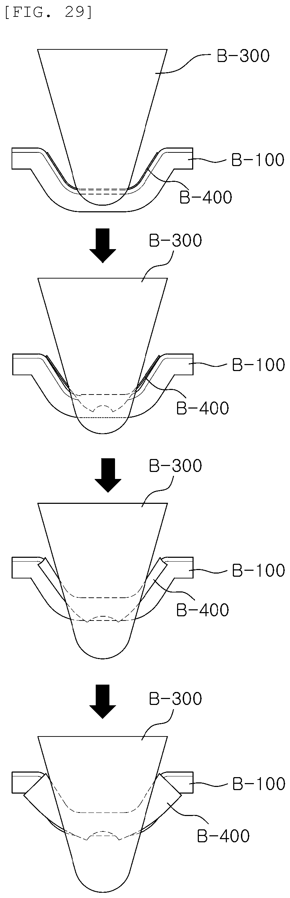

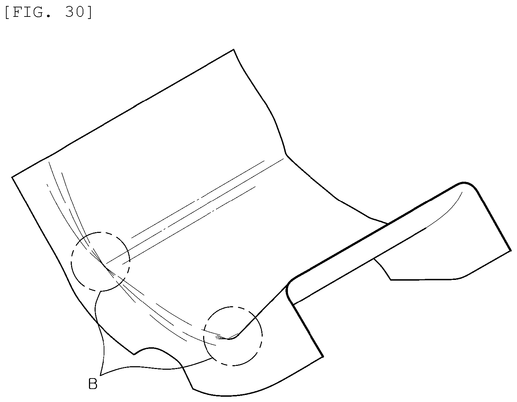

Meanwhile, FIG. 29 illustrates a side view illustrating the forming method of Comparative Example 1-2, and FIG. 30 illustrates a perspective view of the formed product manufactured using the forming method of Comparative Example 1-2.

The forming method of FIG. 29 follows the same sequence as the forming method of the present disclosure. However, in the secondary forming operation (S130), the flange forming is performed using the die B-300 configured such that the forming is performed in an order of a central portion-curved portion-edge in the second direction 3, rather than in an order of an edge-central portion-curved portion. In Comparative Example 1-2, the die B-300 is configured such that the center is at a lowest position B-301a, and the forming is sequentially performed outward.

Even when the hot press forming process is applied in the same manner, forming in this way results in the occurrence of a folded region B, as illustrated in FIG. 30, thereby producing a bracket that cannot be used as a battery case.

While the above description focuses on embodiments of the present disclosure, it should be understood that the present disclosure is not limited thereto and may be implemented in various ways.

Hereinafter, a hot-press-formed part according to a fourth aspect of the present disclosure will be described.

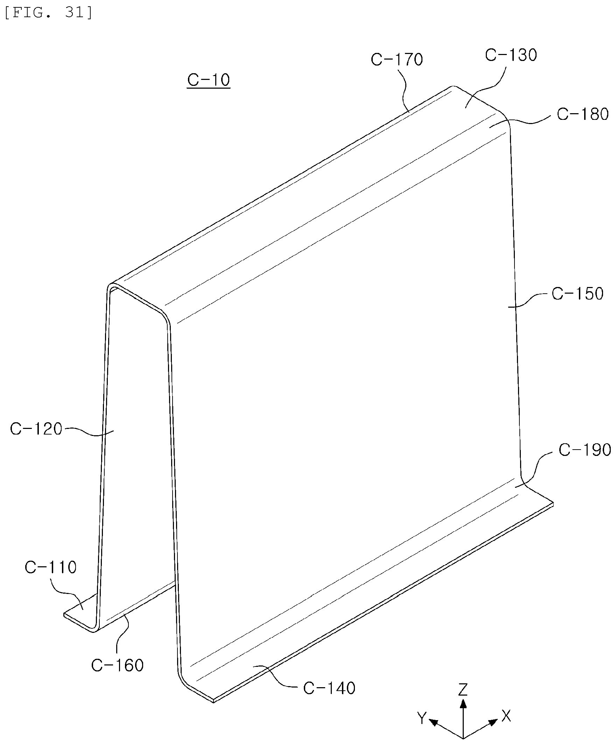

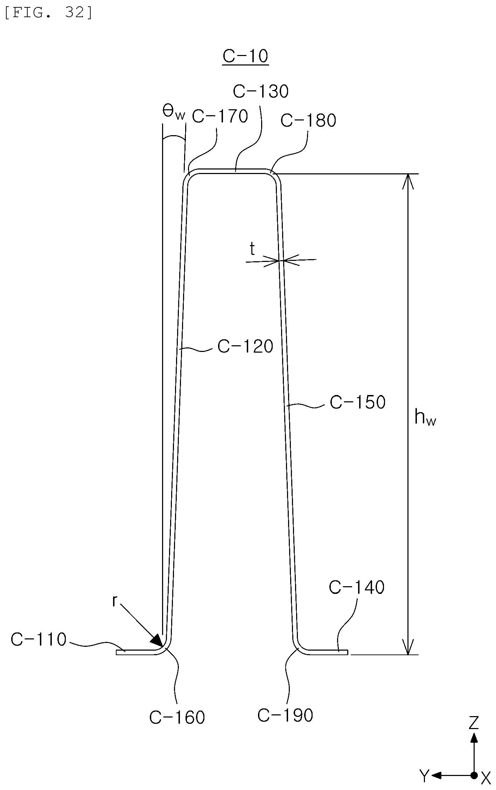

FIG. 31 is a perspective view of a formed part according to an example embodiment of the present disclosure, and FIG. 32 is a front view of a formed part according to an example embodiment of the present disclosure.

The hot-press-formed part according to an example embodiment of the present disclosure includes a first wall C-110 extending in a first direction (Y-direction), and a second wall C-120 extending in a direction intersecting the first wall C-110, a curved portion C-160 is formed between the first wall C-110 and the second wall C-120, an angle between an arbitrary line perpendicular to the first direction (a line parallel to the Z-direction) and the second wall C-120 is 0° or more and 5° or less, and the first wall C-110, the second wall C-120, and the curved portion C-160 are formed integrally.

The hot-press-formed part according to an example embodiment of the present disclosure includes a first wall C-110, a second wall C-120, and a curved portion C-160 positioned between the first wall C-110 and the second wall C-120. The first wall C-110, the curved portion C-160, and the second wall C-120 are integrally extended in sequence.

The hot-press-formed part is integrally formed to include the first wall C-110 formed parallel to the first direction, the curved portion C-160 bent from the first wall C-110, and the second wall C-120 connected to one end of the curved portion C-160.

Assuming an arbitrary line perpendicular to the first direction, the second wall C-120 may form an angle of 0° to 5° with the arbitrary line.

To meet the demands for the weight reduction and improved safety of the vehicle, many parts are being produced using high-strength steel. However, high-strength steel suffers from difficulties in producing parts having a small radius of curvature due to its poor bendability.

The hot press forming method is a processing method in which a blank is heated, the heated blank is formed into a desired shape through press forming, and then cooled while the die is kept closed, thereby manufacturing high-strength formed parts. As such a hot press forming method, when a hot press forming method that performs forming at high temperature is employed, the hot press forming method may form even parts with a small radius of curvature without cracks due to its excellent elongation of over 50% at high temperatures where the forming is performed, thereby making it possible to secure the shape of formed parts that may not be achieved with cold ultra-high strength.

An example embodiment of the present disclosure relates to a formed part C-10 formed integrally, including the first wall C-110, the curved portion C-160, and the second wall C-120, through the hot press forming method, in which the second wall C-120 has a smaller angle with respect to the arbitrary line, that is, 0° to 5°, compared to a conventional one. Therefore, the first wall C-110 and the second wall C-120 have a shape close to a right angle, thereby securing the efficient use of the space enclosed by the first wall C-110 and the second wall C-120.

According to an example embodiment of the present disclosure, the first wall C-110, the second wall C-120, and the curved portion C-160 may be integrally formed by processing the sheet metal.

The first wall C-110, the curved portion C-160, and the second wall C-120 may be formed integrally using a hot press forming method using a single sheet metal or a sheet metal blank formed by joining multiple sheet metals in the thickness direction. By being integrally formed through hot press forming, processing is facilitated, and it is possible to manufacture the formed part C-10 having a relatively high tensile strength while preventing processing-related problems or damage due to stress concentration at joining portions such as welds.

In an example embodiment of the present disclosure, the sheet metal may be the above-described steel sheet for hot forming and may have the above-described alloy composition.

According to an example embodiment of the present disclosure, the radius of curvature r of the curved portion C-160 may be greater than or equal to 0.5 mm, and the limit bending r/t, which is the ratio of the thickness t of the sheet metal to the radius of curvature r, may be formed to be less than 2.5.

The ratio r/t of the radius of curvature r to the thickness t of the sheet metal before processing is generally determined by the limit bending value of the raw material. The limit bending may be viewed as a numerical value representing the maximum radius of curvature without lag, expressed in terms of the material thickness. Since the thickness t of the sheet metal is typically set before processing, when the radius of curvature becomes smaller than a ratio (r/t) that may be formed in the sheet metal, cracks may occur in the formed part C-10.

According to an example embodiment of the present disclosure, the ratio r/t of the radius of curvature r to the thickness t of the sheet metal may be less than 2.5. In comparison, the limit bending value of the existing ultra-high-strength materials with a tensile strength of 1500 MPa is known to be 2.5 or greater. For example, this means that the minimum radius of curvature for a part that may be formed with a 1.0 mm thick material to a 1500 MPa ultra-high-strength material is 2.5 mm or greater. However, according to the present disclosure, even when forming with ultra-high strength, the ratio r/t may have a value less than 2.5, so that even with an ultra-high strength material having a tensile strength of 1500 MPa, a product having a ratio r/t of less than 2.5 may be formed. Therefore, the formed part according to an example embodiment of the present disclosure may be a part having excellent formability and high space utilization. According to an example embodiment of the present disclosure, the formed part includes a third wall C-130 and a fourth wall C-140 parallel to the first direction and a fifth wall C-150 connected to the third wall C-130 and the fourth wall C-140, the third wall C-130 extends from the second wall C-120, and the first wall C-110 to the fifth wall C-150 may be formed integrally.

The hot press forming process allows for the simultaneous formation of a hat-shaped, multi-walled shape, resulting in excellent formability.

For example, the third wall C-130 and the fourth wall C-140 parallel to the first direction may be formed. The first wall C-110 and the fourth wall C-140 may have the same height in a direction perpendicular to the first direction, but this is not limited thereto. Furthermore, the third wall C-130 may have different heights. The fifth wall may be positioned between the third wall C-130 and the fourth wall C-140, the second wall C-120 and the third wall C-130 may be connected by a first connecting portion C-170, the third wall C-130 and the fifth wall C-150 may be connected by a second connecting portion C-180, and the fifth wall C-150 and the fourth wall C-140 may be connected by a third connecting portion C-190. Accordingly, the first to fifth walls C-150 and the curved portion C-160 and the first connecting portion C-170 to the third connecting portion C-190 may be integrally formed by processing the sheet metal.

Here, the first connecting portion C-170 to the third connecting portion C-190 may be formed into a shape having a curvature radius, similar to the curved portion C-160. The curvature radius may have all the characteristics of the curved portion C-160 of the first wall C-110 and the second wall C-120. However, the present disclosure is not limited to this shape.

According to an example embodiment of the present disclosure, the formed part may have a tensile strength of 1300 to 2100 MPa.

Tensile strength, which is referred to as ultra-high strength, is typically around 1500 MPa. According to the present disclosure, the formed part having a tensile strength of 1300 to 2100 MPa, which may be considered the high strength or ultra-high strength, may be manufactured. Because the formability is enhanced by the hot press forming, the formed part according to an example embodiment of the present disclosure may be manufactured as a single piece and may be manufactured with a relatively small radius of curvature while still possessing the ultra-high tensile strength.

Furthermore, by utilizing the excellent formability at high temperatures for hot press forming at 1800 MPa and 2000 MPa, parts with a small radius of curvature may be formed. Therefore, according to the present disclosure, a formed part with a small radius of curvature may be manufactured with a tensile strength of 1700 to 1900 MPa, or even 1900 to 2100 MPa.

Furthermore, the microstructure of the formed part C-10 may contain martensite with an area fraction of 98% or more. The formed part C-10 according to the present disclosure is primarily composed of martensite, a highstrength hard phase, which occupies the majority of the area fraction, thereby enabling the formation of the above-described ultra-high tensile strength.

For example, the formed part C-10 may be formed with an area fraction of 98% or more of martensite, and may also include trace amounts of phases such as ferrite or bainite.

According to an example embodiment of the present disclosure, the formed part C-10 further includes the third wall C-130 which is parallel to the first direction and connected to the second wall C-120. When the length from the first wall C-110 to the third wall C-130 in a direction perpendicular to the first direction is defined as a wall height hw, and the angle between an arbitrary line perpendicular to the first direction and the second wall C-120 is defined as a wall angle θw, the following [Relational Expression 3] may be satisfied. [Relational Expression 3] $hw \leq 13.4 * θw + 182.4$

Here, the unit of hw is mm, the unit of θw is degree, and the left and right sides are calculated as dimensionless.

The formed parts that satisfy [Relational Expression 3] above and are processed by hot press forming may be manufactured with excellent quality without defects such as cracks.

Referring to Table 1 below, it may be seen that, when the above equation is satisfied, formability is excellent.

**[Table 1]**

| Division | θw (°) | hw(mm) | Calculated value on right side | Whether to satisfy [Relation a1 Equation 3] | Formability |
|---|---|---|---|---|---|
| Inventive Example 2-1 | 0 | 180 | 182.4 | Satisfact ory | Acceptabl e |
| Inventive Example 2-2 | 1 | 190 | 195.8 | Satisfact ory | Acceptabl e |
| Inventive Example 2-3 | 3 | 220 | 222.6 | Satisfact ory | Acceptabl e |
| Inventive Example 2-4 | 5 | 240 | 249.4 | Satisfact ory | Acceptabl e |
| Comparati ve Example 2-1 | 0 | 190 | 182.4 | Unsatisfa ctory | Unaccepta ble |
| Comparati ve Example 2-2 | 1 | 200 | 195.8 | Unsatisfa ctory | Unaccepta ble |
| Comparati ve Example 2-3 | 3 | 230 | 222.6 | Unsatisfa ctory | Unaccepta ble |
| Comparati ve Example 2-4 | 5 | 260 | 249.4 | Unsatisfa ctory | Unaccepta ble |

Comparative Examples 2-1 to 2-4 were formed identically to Inventive Examples 2-1 to 2-4, except for the wall heights indicated above. However, Comparative Examples exhibited problems with formability, such as cracks, as a result of folding.

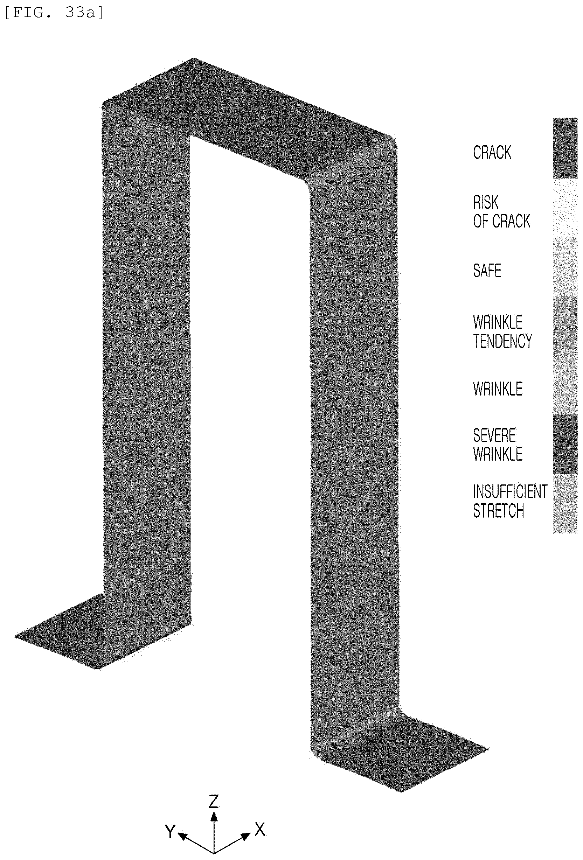

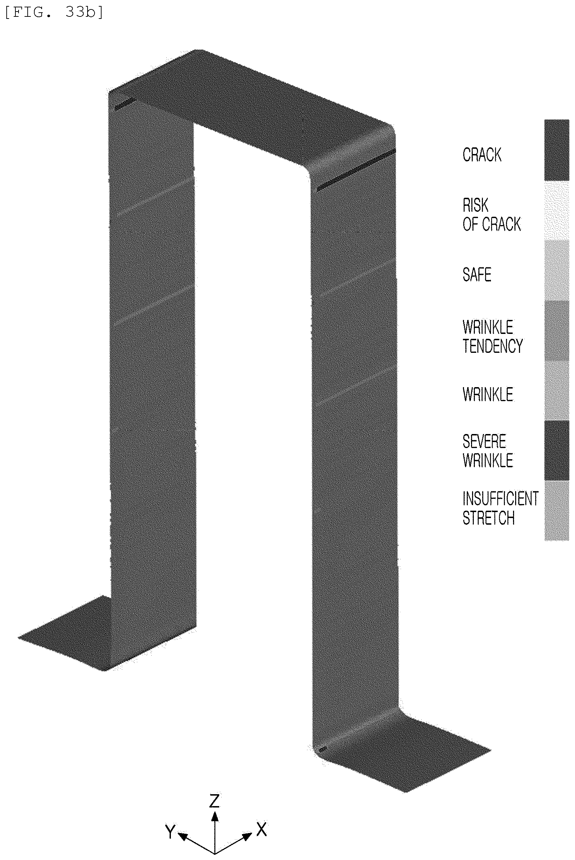

FIG. 33a is a diagram interpreted under the same conditions as Inventive Example 2-1, and FIG. 33b is a diagram interpreted under the conditions of Comparative Example 2-1. Comparing FIGS. 33a and 33b, it may be seen that in Comparative Example 2-1, cracks marked in red occurred in the upper portion of the second wall C-120 or the fifth wall C-150, and some areas were interpreted as being at risk of the occurrence of cracks, marked in yellow.

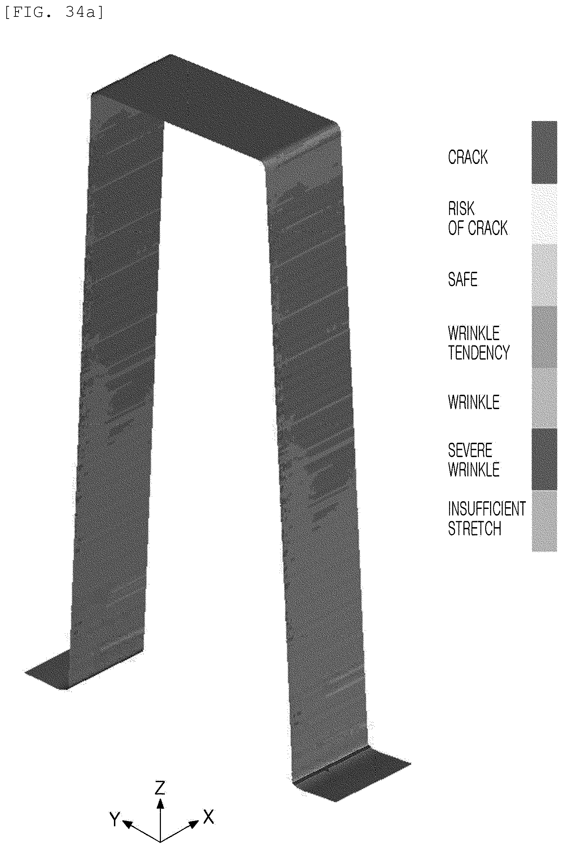

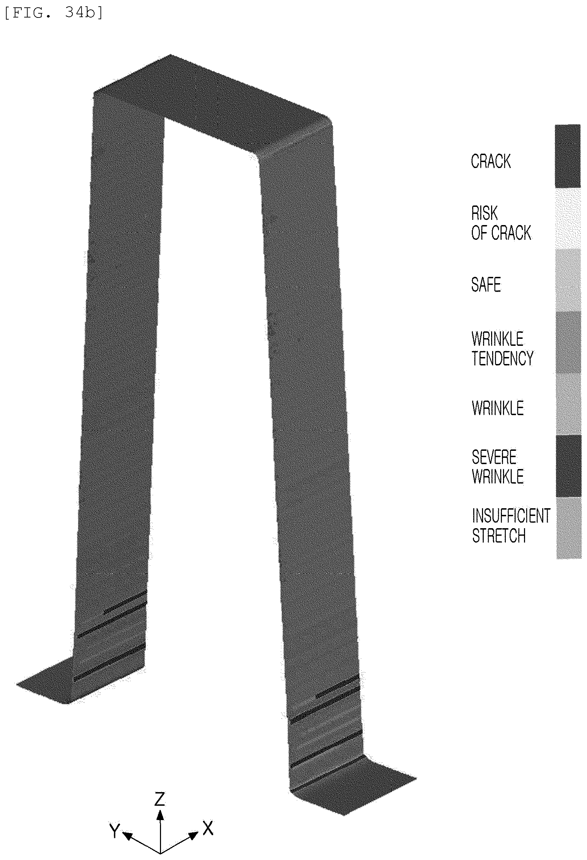

FIG. 34a is a diagram interpreted under the same conditions as Inventive Example 2-3, and FIG. 34b is a diagram interpreted under the conditions of Comparative Example 2-3. Comparing FIGS. 34a and 34b, it may be seen that in Comparative Example 2-3, cracks marked in red occurred in the lower portion of the second wall C-120 or the fifth wall C-150, and some areas were interpreted as being at risk of the occurrence of cracks, marked in yellow. In contrast, Inventive Example 2-3 has some areas at risk of the occurrence of cracks, marked in yellow, but no cracks occur.

Hereinafter, a battery pack module according to another aspect of the present disclosure will be described.

The following battery pack module includes the formed part described above, and the description of the formed part shall be incorporated by reference to the foregoing.

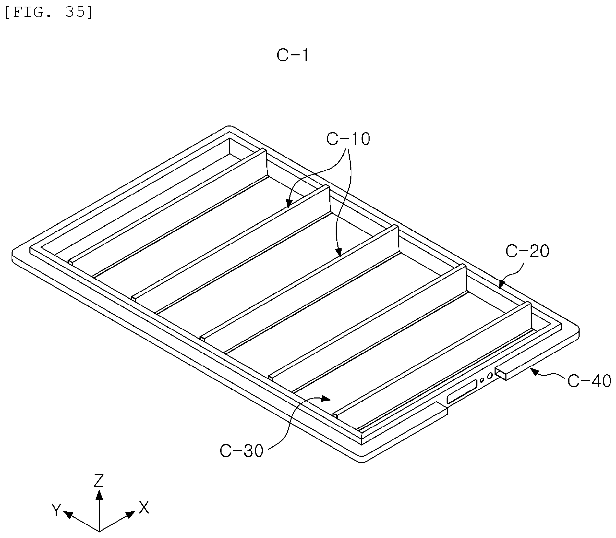

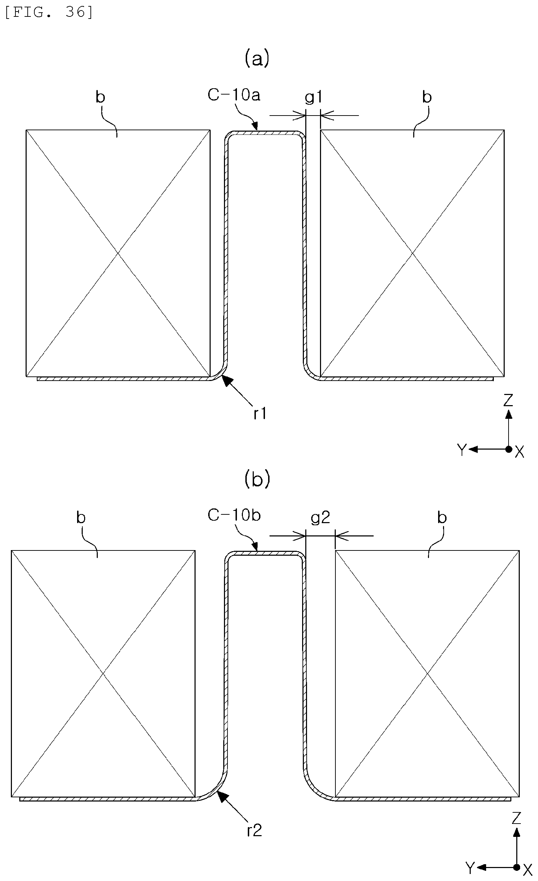

FIG. 35 is a diagram illustrating a battery pack module according to an example embodiment of the present disclosure, and FIG. 36 is a cross-sectional view of a portion of the battery pack module to illustrate space utilization when the battery pack is positioned, in which FIG. 36(a) illustrates a case where the hot-press-formed part has a small radius of curvature, and FIG. 36(b) illustrates a case where the radius of curvature is larger than that of FIG. 36(a).

The battery pack module C-1 according to an example embodiment of the present disclosure includes a battery case C-20 formed to surround a battery pack, a base C-30 positioned on the lower portion of the battery case C-20 and connected to the battery case C-20 to form a space where the battery pack is positioned, and the hot-press-formed part C-10 positioned across the interior of the battery case C-20 and connected to the battery case C-20 and the base C-30.

The battery case C-20 is formed to surround the side of the battery pack, and the base C-30 is formed of general sheet metal or, as necessary, has a curved or grooved structure in which the battery pack is mounted.

For example, a reinforcing member C-40 may be further included to prevent collisions and be coupled to the outer surface of the battery case C-20.

For example, the hot-press-formed part C-10 serves as a cross member to reinforce the rigidity of the battery frame and may be positioned inside the battery case C-20 to protect against impacts from collisions.

For example, a plurality of hot-press-formed parts C-10 may be positioned at regular intervals within the battery case C-20.

The battery pack is positioned in the space formed between the base C-30, the battery case C-20, and the cross member. The battery pack module C-1, including the battery pack, securely positions the battery within the vehicle body.

The battery pack is formed with a smaller radius of curvature than conventional parts and features a high tensile strength formed part, thereby increasing the rigidity of the battery pack module C-1. As a result, it is possible to prevent fires and other damage to the battery due to impact.

In addition, since a plurality of cross members are generally provided within the battery case C-20, the size of the battery pack may increase according to the benefit of increased space utilization, and therefore, when the battery pack module C-1 has the same volume, it is possible to increase the battery capacity.

As an example of use as a cross member, when a radius of curvature r2 of a lower end portion of a hot-press-formed part C-10b according to Embodiment 2-2 illustrated in FIG. 36(b) is formed to be larger than a radius of curvature r1 of a lower end portion of a hot press-formed part C-10a according to Embodiment 2-1 illustrated in FIG. 36(a), it may be confirmed by comparing gaps corresponding to spaces remaining after a battery pack b is disposed. It may be seen that a gap g2 of FIG. 36(b) is formed to be larger than a gap g1 of FIG. 36(a), and as the radius of curvature r increases, the space that may not be used for mounting the battery pack (b) becomes larger.

As the radius of curvature r decreases, the space utilization increases, which may be seen to have greater utility when the plurality of cross members are mounted within the same battery pack module C-1.

Hereinafter, a hot-press-formed part according to a fifth aspect of the present disclosure will be described.

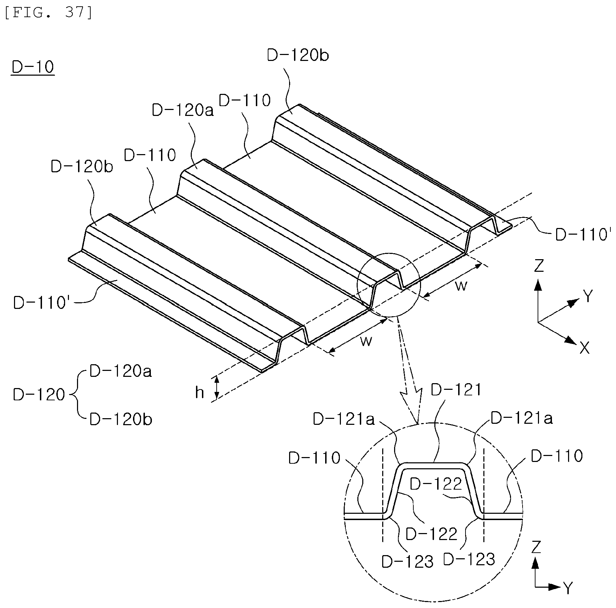

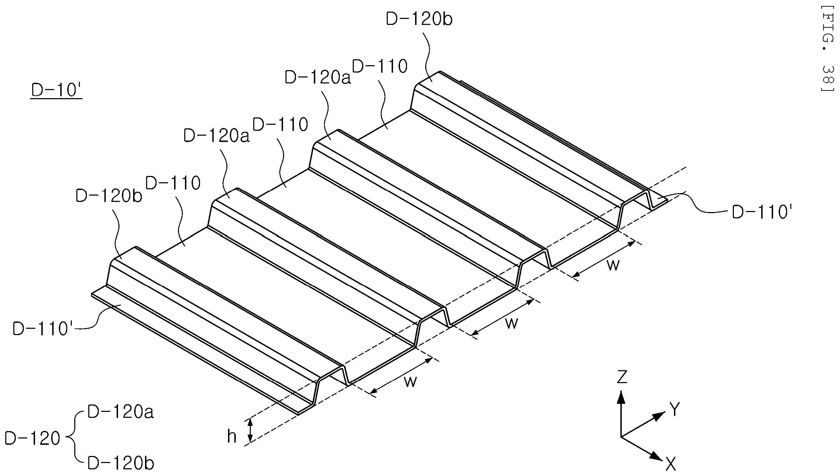

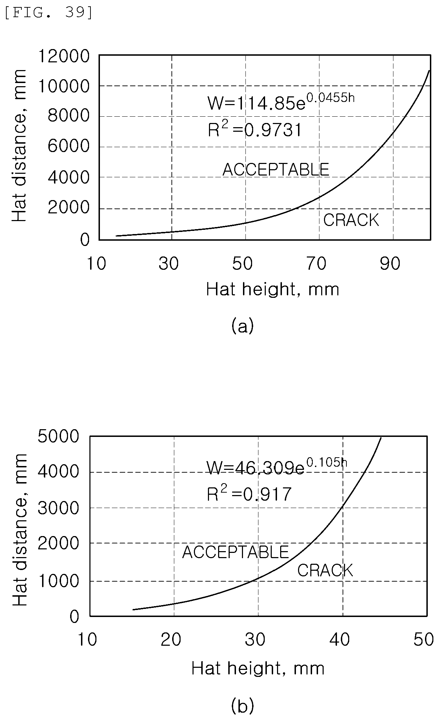

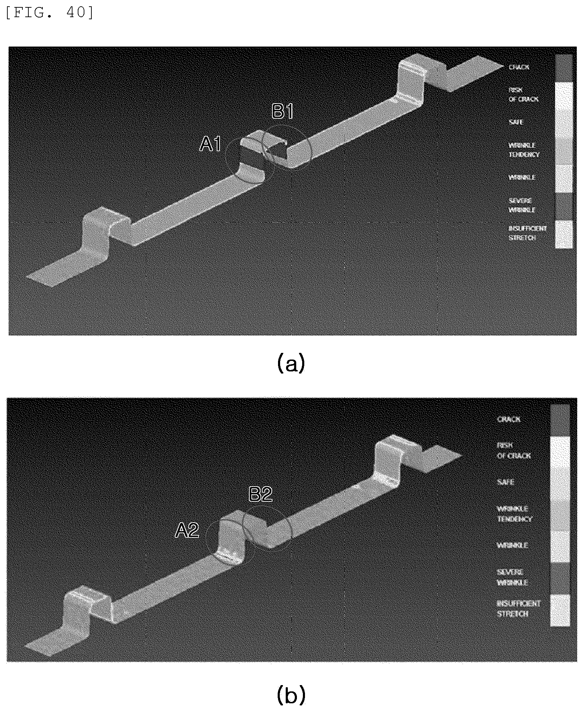

FIG. 37 is a perspective view illustrating a press-formed part according to an example embodiment of the present disclosure, FIG. 38 is a perspective view illustrating a press-formed part according to another example embodiment of the present disclosure. FIG. 39(a) is a graph illustrating the relationship between a preset length and a preset height of the press-formed part according to an example embodiment of the present disclosure, and FIG. 39(b) is a graph illustrating the relationship between a preset length and a preset height of the press-formed part according to another example embodiment of the present disclosure. FIG. 40(a) is an example illustrating a deformation force applied to a press-formed part manufactured using the conventional manufacturing method, and FIG. 40(b) is an example illustrating a deformation force applied to a press-formed part manufactured using a manufacturing method according to embodiments of the present disclosure.

Referring to FIGS. 37 and 38, press-formed parts D-10 and D-10' according to embodiments of the present disclosure may be manufactured by performing the press forming on the metal plate. In this case, the press-formed parts D-10 and D-10' may be manufactured using the hot press forming method.

The press-formed parts D-10 and D-10' may include a flat plate portion D-110, which is a portion that has not been press formed and thus has a flat shape, and a deformed portion D-120, which is a portion that has a shape that is convex in one direction due to the press forming. In this case, the deformed portion D-120 may be formed in multiple pieces. In this case, the flat plate portion D-110 may be positioned between a plurality of deformed portions D-120.

The deformed portion D-120 may have a shape that protrudes upward +Z based on the drawing. In this case, the deformed portion D-120 may include a top plate portion D-121, a longitudinal wall portion D-122, and a boundary portion D-123.

The top plate portion D-121 may be an upper end portion of the deformed portion D-120 extending in a first direction. Here, the first direction may be, for example, a direction parallel to the longitudinal direction Y of the press-formed parts D-10 and D-10'.

The longitudinal wall portion D-122 may be a side wall portion of the deformed portion D-120 extending in a second direction. Here, the second direction may be a direction different from the first direction. For example, the second direction may be a direction inclined at a predetermined angle with respect to the first direction. As another example, the second direction may be a direction perpendicular to the first direction, that is, a direction parallel to the vertical direction Z in the drawing. Meanwhile, the vertical direction Z may be parallel to the height direction of deformed portion D-120.

The longitudinal wall portion D-122 may be continuous with the top plate portion D-121. More specifically, the upper end of the longitudinal wall portion D-122 may be arranged to be continuous with one side end of the top plate portion D-121. A pair of such longitudinal wall portions D-122 may be provided. The pair of longitudinal wall portions D-122 may be disposed to be continuous with both side ends of the top plate portion D-121, respectively, to form both side wall portions of the deformed portion D-120.

A portion (hereinafter, "shoulder portion") D-121a, where the side end of the top plate portion D-121 and the upper end of the longitudinal wall portion D-122 are connected, may have a rounded shape having a first radius of curvature. In this case, the shoulder portion D-121a may be convexly curved outward from the deformed portion D-120.

A boundary portion D-123 may be a boundary between the deformed portion D-120 and the flat plate portion D-110, which are continuous in the longitudinal direction Y of the press-formed parts D-10 and D-10'. One end of the boundary portion D-123 may be continuous with the lower end of the longitudinal wall portion D-122, and the other end of the boundary portion D-123 may be continuous with one end of the flat plate portion D-110. In this case, the other end of the flat plate portion D-110 may be continuous with the boundary portion D-123 provided on another deformed portion D-120. A pair of such boundary portions D-123 may be provided and disposed to be continuous with the lower ends of the pair of longitudinal wall portions D-122, respectively.

The boundary portion D-123 may be rounded with a second radius of curvature. The boundary portion D-123 may be concavely curved inwardly of the deformed portion D-120. In this case, the second radius of curvature may be equal to or similar to the first radius of curvature.

As described above, the deformed portion D-120 may have a shape in which the boundary portion D-123, the longitudinal wall portion D-122, the top plate portion D-121, the longitudinal wall portion D-122, and the boundary portion D-123 are sequentially connected in the longitudinal direction Y. Accordingly, the deformed portion D-120 may have a hat shape or a similar shape.

As described above, the plurality of deformed portions D-120 may be provided. More specifically, at least three deformed portions D-120 may be provided. In this case, a flat plate portion D-110 may be disposed between two adjacent deformed portions D-120 among the plurality of deformed portions D-120. In this case, the two adjacent deformed portions D-120 may be connected by the flat plate portion D-110 positioned at their center.

Accordingly, the press-formed parts D-10 and D-10' may have a form in which three or more deformed portions D-120 and a plurality of flat plate portions D-110 are alternately disposed in a row in the longitudinal direction Y. In this case, the flat plate portions D-110 may be disposed on both outer sides of the press-formed parts D-10 and D-10' based on the longitudinal direction Y, but is not limited thereto.

The deformed portion D-120 may be formed to a preset height h. Here, the preset height h refers to the height of the deformed portion D-120, and may refer to the length from the lower surface of the flat plate portion D-110 to the upper surface of the top plate portion D-121.

Two adjacent deformed portions D-120 may be spaced apart by a preset length w, in the longitudinal direction Y. Here, the preset length w may refer to the length of the flat plate portion D-110 measured relative to the longitudinal direction Y. Here, the preset length w may be measured relative to the flat plate portion D-110 positioned between two adjacent deformed portions D-120.

As illustrated in FIG. 37, the press-formed part D-10 according to an example embodiment of the present disclosure (hereinafter, Embodiment 3-1) may include three deformed portions D-120. Accordingly, the press-formed part D-10 of Embodiment 3-1 may include at least two flat plate portions D-110, which are disposed between three deformed portions D-120.

As illustrated in FIG. 38, the press-formed part D-10' according to another embodiment of the present disclosure (hereinafter, Embodiment 3-2) may include four or more deformed portions D-120. Accordingly, the press-formed part D-10 of Embodiment 1 may include at least three flat plate portions D-110, which are disposed between four or more deformed portions D-120.

Meanwhile, the drawing only illustrates a case where the press-formed part D-10' has four deformed portions D-120, but the present disclosure is not limited thereto. Although not illustrated in the drawing, as another example, five or more deformed portions D-120 may be formed in the press-formed part D-10'. In this case, the upper limit of the number of deformed portions D-120 is not limited.

Referring to FIGS. 39 and 40, in the case of the conventional hot press forming method, the deformed portion D-120 is first formed, and then a separate flat metal plate is bonded to the lower end of the formed deformed portion D-120. In this case, as the number of deformed portions D-120 to be formed increases, as exemplarily illustrated in FIG. 40(a), the force (deformation force) (stress) is concentrated on the longitudinal wall portion D-122 and its surrounding area [A1 and B1 in FIG. 40(a)] to which the flat metal plates are connected during the manufacturing process. This presents a disadvantage in that cracks, etc., may occur in the deformed portion D-120 of the press-formed part, resulting in damage. To prevent this, the distance between the connected deformed portions D-120 should increase. However, since the sizes of the press-formed parts D-10 and D-10' being manufactured are inevitably limited, there is a problem in that the number of deformed portions D-120 that may be included is also limited.

Therefore, an example embodiment of the present disclosure provides the press-formed parts D-10 and D-10' that may prevent damage to the deformed portions D-120 due to the hot press forming by utilizing the relationship between the height (preset height) h of the deformed portion D-120 and the separation distance (preset length) w between two adjacent deformed portions D-120. In this case, the "relationship between the preset height h and the preset length w" may be determined based on the number of deformed portions D-120 formed in the press-formed parts D-10 and D-10'.

In the case of the press-formed part D-10 according to Embodiment 3-1 of the present disclosure, since three deformed portions D-120 are formed, the relationship between the "preset height h" of the deformed portion D-120 and the "preset length w" by which two adjacent deformed portions D-120 are spaced apart may be defined by [Relational Equation 4] below. [Relational Expression 4] ${w}_{min} \leq w \leq 114.85 {e}^{0.0455 h}$

Here, w may refer to the preset length of Embodiment 3-1, and h may refer to the preset height of Embodiment 3-1. Furthermore, wₘᵢₙ may refer to the minimum value (i.e., minimum spacing) of the preset length w of Embodiment 3-1.

As illustrated in the graph of FIG. 39(a) and FIG. 40(b), when the distance (preset length) w between the three deformed portions D-120 included in the press-formed part D-10 is designed to satisfy [Relational Expression 4], the occurrence of damage such as cracks in the deformed portion D-120 and its surroundings [A2 and B2 in FIG. 40(b)] during the hot press forming process may be minimized. In this case, the method for manufacturing a press-formed part D-10 according to embodiment 3-1 will be described in detail below.

In the case of the press-formed part D-10 according to Embodiment 3-2 of the present disclosure, since four or more deformed portions D-120 are formed, the relationship between the "preset height h" of the deformed portion D-120 and the "preset length w" by which two adjacent deformed portions D-120 are spaced apart may be defined by [Relational Equation 5] below. [Relational Expression 5] ${w}_{min} \leq w \leq 46.309 {e}^{0.105 h}$

Here, w may refer to the preset length of Embodiment 3-2, and h may refer to the preset height of Embodiment 3-2. Furthermore, wₘᵢₙ may denote the minimum value of the preset length of Embodiment 3-2.

As illustrated in the graph of FIG. 39(b) and FIG. 40(b), when the distance (preset length) w between three deformed portions D-120 included in the press-formed part D-10 is designed to satisfy [Relational Expression 5], the occurrence of damage such as cracks in the deformed portion D-120 and its surroundings [A2 and B2 in FIG. 40(b)] during the hot press forming process may be minimized. In this case, the method for manufacturing a press-formed part D-10 according to Embodiment 3-1 will be described in detail below.

Meanwhile, in the above-described embodiments 3-1 and 3-2, the preset length w may be 20 mm or more. That is, the minimum gap wₘᵢₙ between two adjacent deformed portions D-120 may be 20 mm. This may be the minimum gap required to secure a space for arranging cooling holes (not illustrated) between a first pressing portions D-210 provided in the dies D-200 and D-400 and/or between the second pressing portion D-410 and the intermediate pressing portion D-300 in the device D-20 and D-20' for manufacturing the press-formed parts D-10 and D-10' to be described later.

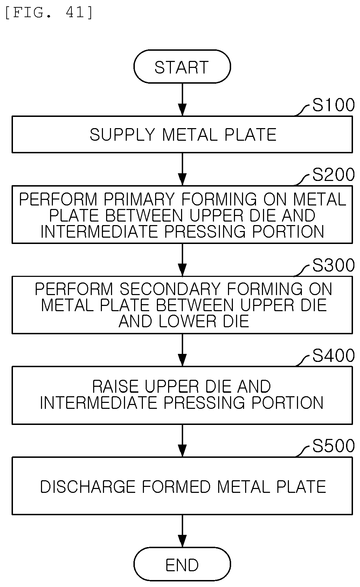

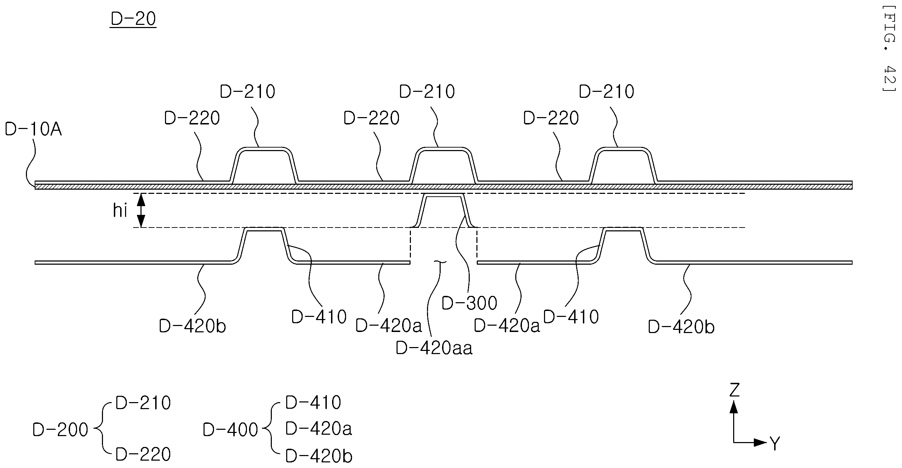

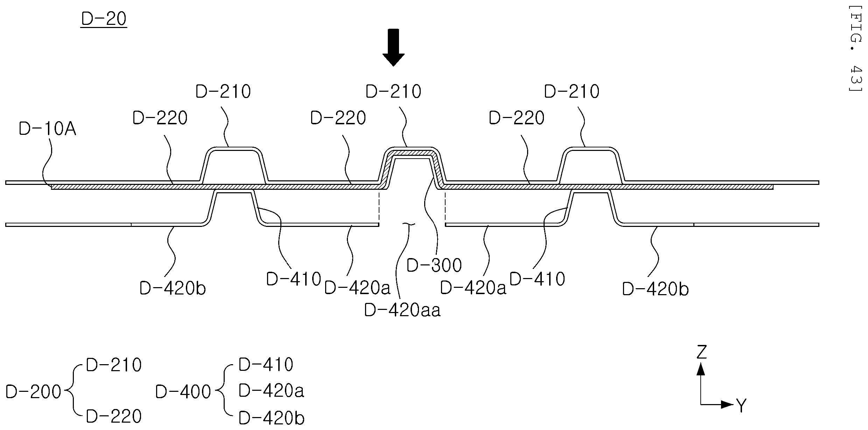

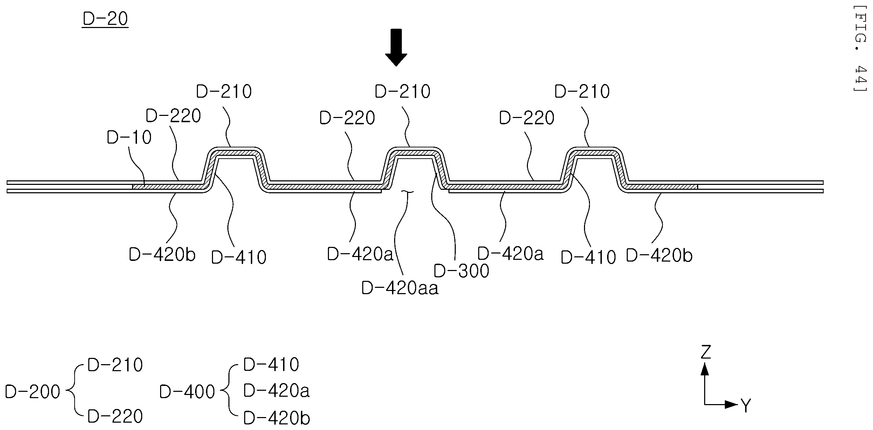

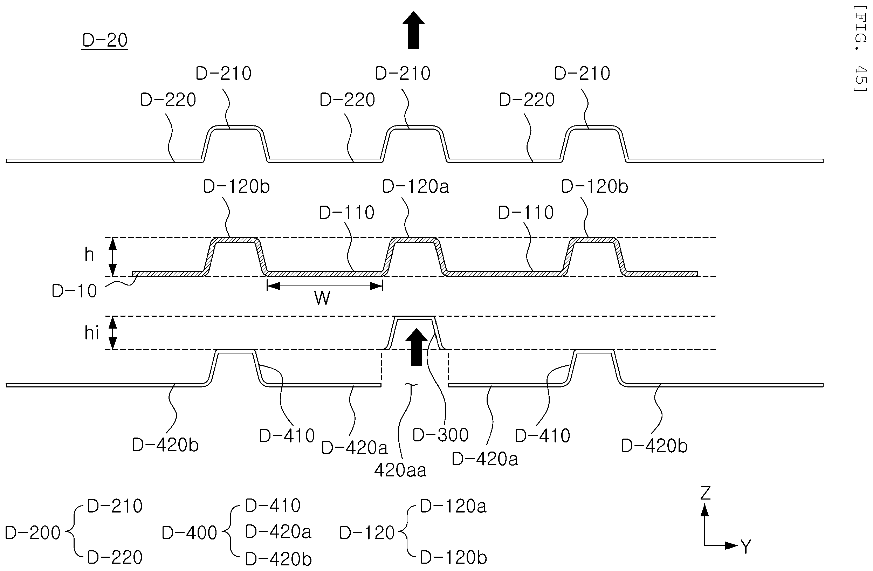

FIG. 41 is a flowchart illustrating a method for manufacturing a press-formed part according to an example embodiment of the present disclosure. FIG. 42 schematically illustrates a first operation of manufacturing the press-formed part of FIG. 37. FIG. 43 is a diagram schematically illustrating a second operation of manufacturing the press-formed part of FIG. 37. FIG. 44 schematically illustrates a third operation of manufacturing the press-formed part of FIG. 37. FIG. 45 is a diagram schematically illustrating a fourth operation of manufacturing the press-formed part of FIG. 37.

Referring to FIGS. 41 through 45, the device D-20 for manufacturing the press-formed part D-10 according to Embodiment 3-1 may include the first die D-200, the intermediate pressing portion D-300, and the second die D-400. In this case, one intermediate pressing portion D-300 may be provided. In this case, based on the vertical direction Z, the first die D-200 may be the upper die, and the second die D-400 may be the lower die.

The first die D-200 and the second die D-400 may be disposed to face each other along the pressing direction - Z. The first die D-200 may be disposed above the second die D-400. In this case, the first die D-200 may be installed on an upper support (not illustrated) that can be elevated. Accordingly, the first die D-200 may be lowered toward the second die D-400 or raised away from the second die D-400. In addition, the second die D-400 may be disposed on a lower support (not illustrated) that is fixedly installed on the floor surface of a building where the manufacturing device D-20 is installed, for example.

The first die D-200 may be provided with the first pressing portion D-210. The first pressing portion D-210 may pressurize an upper surface portion of a metal plate during press forming. Here, the metal plate may be a material used to manufacture the press-formed part D-10. Before the press forming, the metal plate may have, for example, a flat upper surface portion and a flat lower surface portion. In this case, the first pressing portion D-210 may be configured to have a shape and size corresponding to the "upper surface of the deformed portion D-120 of the press-formed part D-10" described above.

The manufacturing device D-20 is for manufacturing the press-formed part D-10 of Embodiment 3-1, and may be provided with three first pressing portions D-210. In this case, the three first pressing portions D-210 may be spaced apart from each other by a first distance. The first distance may be the same distance as the preset length w described above. In addition, the first die D-200 may be provided with a first flat portion D-220. The first flat portion D-220 may be disposed between two adjacent first pressing portions D-210. The first flat portion D-220 may extend parallel to the longitudinal direction Y between the two first pressing portions D-210 to connect the first pressing portions D-210. As described above, since three first pressing portions D-210 are provided, at least two first flat portions D-220 may be provided.

Accordingly, the first die D-200 may have three first pressing portions D-210 spaced apart from each other by a first distance (i.e., a preset length) W in the longitudinal direction Y, and the first flat portion D-220 disposed therebetween to connect the first pressing portions D-210.

The second die D-400 may have a second pressing portion D-410 and a second flat portion D-420a. In this case, the second pressing portion D-410 may be formed in a shape and size corresponding to the lower surface of the press-formed part D-10.

Unlike the first die D-200, the second die D-400 may be provided with only two second pressing portions D-410. In this case, the two second pressing portions D-410 may be disposed to be symmetrical with the two first pressing portions D-210 positioned on both sides among the three first pressing portions D-210 in the longitudinal direction Y. Accordingly, the second die D-400 may not have the second pressing portion D-410 in the region (hereinafter, "central region") facing the central first pressing portion D-210 among the three first pressing portions D-210.

Accordingly, the second die D-400 may be a single structure having a form connected by two second pressing portions D-410 and the second flat portion D-420a disposed therebetween. In this case, the flat portion D-420a may be provided with a penetration portion D-420aa. The intermediate pressing portion D-300 may be inserted into the penetration portion D-420aa during the press forming of an outer region of the metal plate D-10A. The penetration portion D-420aa may be formed by penetrating a portion of the flat portion D-420a along the vertical direction Z. This penetration portion D-420aa may have a cross-sectional shape and area corresponding to the shape and size of the intermediate pressing portion D-300. In addition, a 2-2th flat portion D-420b may be further provided on each of the two sides of the first pressing portions D-210.

The intermediate pressing portion D-300 may be disposed between the first die D-200 and the second die D-400. As illustrated in FIG. 42, a metal plate D-10A, which is a press-formed object, may be disposed below the first die D-200. In this case, the intermediate pressing portion D-300 is positioned between the metal plate D-10A and the second die D-400, so that, when the first die D-200 is lowered, a portion of the lower surface of the metal plate D-10A may be pressed. The intermediate pressing portion D-300 may be, for example, a pad for pressing and bending the lower surface of the metal plate D-10A.

The intermediate pressing portion D-300 may be positioned directly above the above-described central region of the second die D-400. In this case, the intermediate pressing portion D-300 may have the same shape as the second pressing portion D-410. That is, the intermediate pressing portion D-300 may have a shape and size corresponding to the lower surface of the press-formed part D-10. Such an intermediate pressing portion D-300 may, together with the first pressing portion D-210 in the center of the three first pressing portions D-210, press the metal plate D-10A up and down during the press forming to form the deformed portion D-120 positioned in the center.

The intermediate pressing portion D-300 may be configured to be elevated. Accordingly, the intermediate pressing portion D-300 may be lowered along the pressing direction -Z during the press forming. Furthermore, after the press forming is completed, the intermediate pressing portion D-300 may be raised in the opposite direction Z of the pressing direction. The intermediate pressing portion D-300 may be raised by an elastic member (not illustrated) installed in the intermediate pressing portion D-300.

The "method for manufacturing a press-formed part D-10 according to Embodiment 3-1" using the above-described manufacturing device D-20 may be as follows.

First, the metal plate D-10A may be supplied to the manufacturing device D-20 (S100). Before the press forming starts, as illustrated in FIG. 42, the metal plate D-10A may be positioned between the first die D-200 and the intermediate pressing portion D-300 (hereinafter referred to as the "processing position"). Meanwhile, the metal plate D-10A may be supplied to the manufacturing device D-20 while heated by a separate heating device (not illustrated).

For example, when the metal plate D-10A is in a processing position, an upper surface of the metal plate D-10A may be in contact with a lower surface of the first die D-200, or may be disposed such that only a minute clearance is present therebetween. In this case, the second die D-400 may be disposed to be symmetrical with the first die D-200, with the metal plate D-10A and the intermediate pressing portion D-300 interposed therebetween.

Furthermore, when the metal plate D-10A is disposed in the processing position (i.e., before press forming begins), the intermediate pressing portion D-300 may be disposed above the second die D-400. Accordingly, a height difference hi may exist between the intermediate pressing portion D-300 and the second pressing portion D-410. Here, the height difference hi described above may refer to the distance from the upper surface of the second pressing portion D-410 to the upper surface of the intermediate pressing portion D-300. In this case, the height difference hi between the intermediate pressing portion D-300 and the second pressing portion D-410 may be smaller than the "preset height h", which is the height of the press-formed part D-10. In this case, the height difference hi may be 65% or more of the preset height h. When the manufacturing device D-20 is configured to have such a height difference hi, damage such as cracks in the deformed portion D-120 formed through press forming may be minimized.

Next, the metal plate D-10A may be subjected to the primary press forming by the first die D-200 and the intermediate pressing portion D-300 (S200). As illustrated in FIG. 43, the first die D-200 may be lowered along the pressing direction -Z to press the upper surface of the metal plate D-10A. In this case, the first die D-200 may be lowered to a position where the lower surface of the metal plate D-10A does not come into contact with the second die D-400. In this case, since the intermediate pressing portion D-300 is positioned higher than the second pressing portion D-410 by the height difference hi, only the intermediate pressing portion D-300 may be drawn into the first pressing portion D-210 and may press the central region of the metal plate D-10A. Accordingly, only the central region of the metal plate D-10A may be pressed vertically by the first pressing portion D-210 among the three first pressing portions D-210 and the intermediate pressing portion D-300. Thus, only the central region of the metal plate D-10A may be bent, thereby forming one deformed portion D-120.

Next, the metal plate D-10A may be subjected to the secondary press forming by the first die D-200 and the second die D-400 (S300). After the primary press forming is performed in operation S200, as illustrated in FIG. 44, the first die D-200 may further be lowered along the pressing direction -Z. In this process, the intermediate pressing portion D-300 may be lowered together with the first die D-200 while being inserted into a central first pressing portion D-210 together with the central region of the metal plate D-10A. Accordingly, the outer region of the metal plate D-10A may come into contact with the upper surfaces of the two second pressing portions D-410.

Thereafter, as the first die D-200 continues to be lowered, the second pressing portion D-410 may be inserted into the first pressing portion D-210 and press the outer regions of both sides of the metal plate D-10A. In this process, the intermediate pressing portion D-300 may be accommodated within the penetration portion D-420aa of the second die D-400. The outer regions of both sides of the metal plate D-10A may be simultaneously pressed vertically by two outer first pressing portions D-210 and two outer second pressing portions D-410. Thus, by bending both the outer regions of the metal plate D-10A, two additional deformed portions D-120 may be formed.

Next, the first die D-200 and the intermediate pressing portion D-300 may be returned to their original positions (S400). After the "stepwise press forming" in operations S200 and S300, as illustrated in FIG. 45, the first die D-200 may be raised in the opposite direction +Z to the pressing direction -Z. During this process, the deformed portions D-120 may be separated from the first pressing portions D-210. Additionally, the intermediate pressing portion D-300 may be separated from the central deformed portion D-120 and returned to its original position. As a result, the press-formed part D-10 in which three deformed portions D-120 each having the preset height h are spaced apart from each other by the preset length w may be manufactured.

Then, the manufactured press-formed part D-10 may be discharged (S500). After being discharged from the manufacturing device D-20, the press-formed part D-10 may be transported for the next processing or manufacturing process. Thereafter, the next metal plate D-10A is supplied, allowing the above-described manufacturing method to be repeatedly performed.

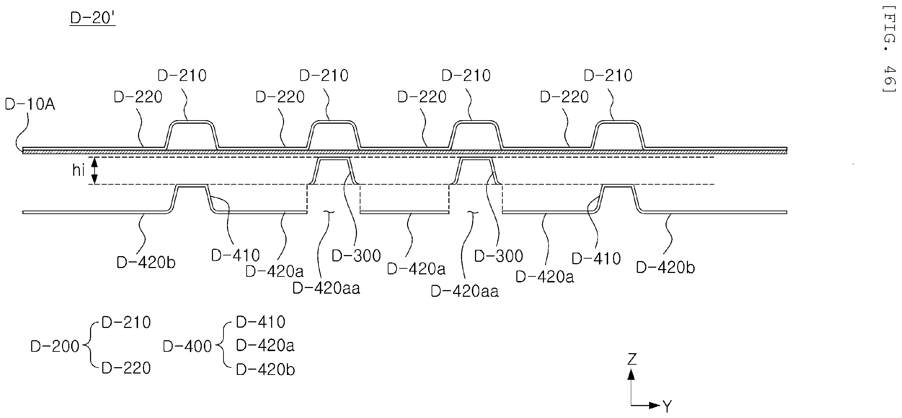

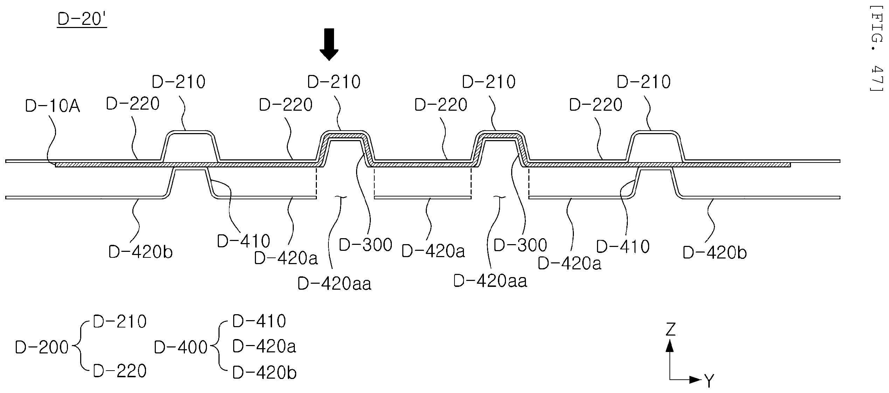

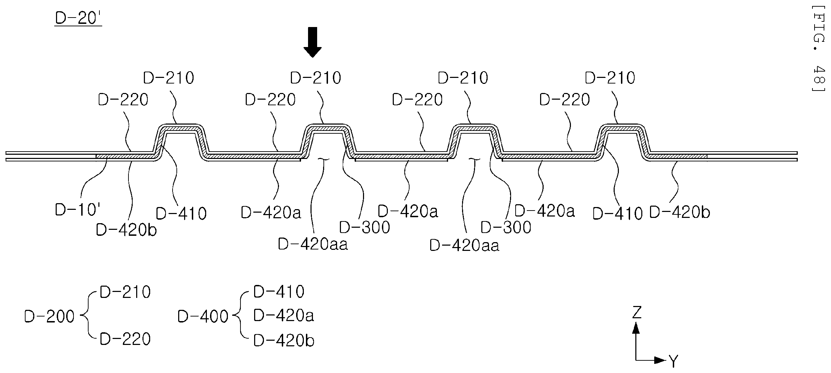

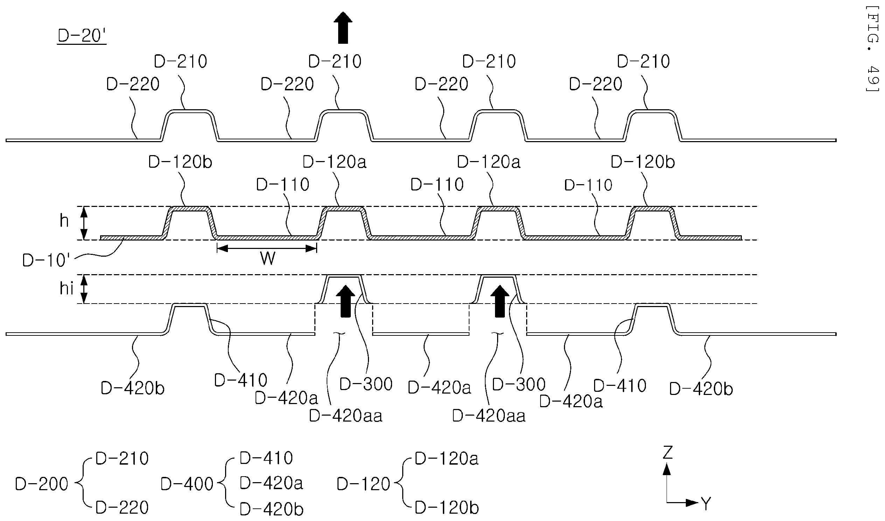

FIG. 46 is a diagram schematically illustrating a first operation of manufacturing the press-formed part of FIG. 38. FIG. 47 is a diagram schematically illustrating a second operation of manufacturing the press-formed part of FIG. 38. FIG. 48 is a diagram schematically illustrating a third operation of manufacturing the press-formed part of FIG. 38. FIG. 49 schematically illustrates a fourth operation of manufacturing the press-formed part of FIG. 38.

Referring to FIG. 41 and FIGS. 46 through 49, the press-formed part D-10 according to Embodiment 3-2 may be manufactured through the following manufacturing method. The device D-20' for manufacturing press-formed parts may include the first die D-200, the intermediate pressing portion D-300, and the second die D-400. In this case, at least two intermediate pressing portions D-300 may be provided. In this case, most of the features of the first die D-200, the intermediate pressing portion D-300, and the second die D-400 are the same or similar to those of the above-described Embodiment 3-1, and therefore, a duplicate description thereof will be omitted.

Since the press-formed part D-10 according to Embodiment 3-2 is provided with four or more deformed portions D-120, the first die D-200 may be provided with four or more first pressing portions D-210. Hereinafter, for convenience of description, a case in which four first pressing portions D-210 are provided and are spaced apart from one another by a preset length (w) will be mainly described. In this case, two first pressing portions D-210 may be disposed in the central region of the first die D-200, and one first pressing portion D-210 may be disposed on each side of the central region.

The second die D-400 may be provided with two second pressing portions D-410. In this case, two second pressing portions D-410 may be disposed to face two first pressing portions D-210 disposed on each side of the first die D-200.

When four first pressing portions D-210 are provided, two intermediate pressing portions D-300 may be provided. In this case, the two intermediate pressing portions D-300 may be disposed to face the two first pressing portions D-210 disposed in the central region of the first die D-200. The intermediate pressing portions D-300 are disposed between the first die D-200 and the second die D-400 in the same manner as described above.

In addition, in the case of Embodiment 3-2, the second flat portion D-420a of the second die D-400 may be provided with two penetration portions D-420aa. Accordingly, when the outer region of the metal plate D-10A is press formed by the first die D-200 and the second die D-400, two intermediate pressing portions D-300 may be accommodated in the penetration portions D-420aa, respectively.

In the "method for manufacturing a press-formed part D-10' according to Embodiment 3-2" using the above-described manufacturing device D-20', operations S100, S200, S300, and S400 may be sequentially performed, similar to the method for manufacturing a press-formed part D-10 of Embodiment 3-1. In this case, since the specific manufacturing methods performed in each operation are the same or similar to those of Embodiment 3-1, the differences will be primarily described.

First, in operation S100, as illustrated in FIG. 46, the metal plate D-10' may be supplied to the above-described processing position. In this case, the metal plate D-10A may be supplied to the manufacturing device D-20' while heated by a separate heating device (not illustrated). When supplied to the processing position, two intermediate pressing portions D-300 may be positioned below the central region of the metal plate D-10'. In this case, the two intermediate pressing portions D-300 may be disposed at the same height. In this case, the height difference hi between the intermediate pressing portions D-300 and the second pressing portion D-410 is the same as in Embodiment 3-1.

Next, in operation S200, as illustrated in FIG. 47, as the first die D-200 is lowered, the intermediate pressing portions D-300 are each inserted into the two first pressing portions D-210 in which the first die D-200 is disposed in the central region, thereby pressing the central region of the metal plate D-10'. By this primary press forming operation, two deformed portions D-120 may be formed in the central region of the metal plate D-10A.

Next, in operation S300, as illustrated in FIG. 48, the first die D-200 is further lowered, so the second pressing portion D-410 may be inserted into each of the two first pressing portions D-210 disposed in the outer region of the first die D-200. As a result, the outer region of the metal plate D-10' may be pressed vertically by the first pressing portion D-210 and the second pressing portion D-410. By this secondary press forming operation, two deformed portions D-120 may be additionally formed in the outer region of the metal plate D-10A.

Next, in operation S400, as illustrated in FIG. 49, the first die D-200 may be raised in the opposite direction +Z to the pressing direction -Z. Accordingly, the press-formed part D-10', which has undergone the press forming, may be separated from the first die D-200, the intermediate pressing portion D-300, and the second die D-400. During this process, the two intermediate pressing portions D-300 may be raised and returned to their original positions in the processing position described above.

Then, after the completed press-formed part D-10' is discharged from the manufacturing device D-20', a new metal plate D-10' may be supplied, allowing the next press-forming process to start.

Meanwhile, when the number of deformed portions D-120 formed on the press-formed part D-10' increases, the number of intermediate pressing portions D-300 may also increase accordingly.

For example, although not illustrated in the drawing, when five deformed portions D-120 are formed in the press-formed part D-10, the first die D-200 should be provided with five first pressing portions D-210. Accordingly, the three intermediate pressing portions D-300 may be provided and disposed to face the three first pressing portions D-210 disposed in the central region of the first die D-200. In this case, the three intermediate pressing portions D-300 may be disposed between the first die D-200 and the second die D-400.

Among the three intermediate pressing portions D-300, one intermediate pressing portion (hereinafter, the first intermediate pressing portion) D-300 disposed in the center may be disposed at the highest position. The remaining two intermediate pressing portions (hereinafter, referred to as the second intermediate pressing portions) D-300 may be disposed between the first intermediate pressing portion D-300 and the second die D-400. In this case, the two second intermediate pressing portions D-300 may be disposed at the same height. The height difference between the first intermediate pressing portion D-300 and the second intermediate pressing portion D-300 may be the same as or similar to the height difference hi between the above-described intermediate pressing portion D-300 and the second pressing portion D-410.

With this arrangement, the primary press forming may be performed first by the first die D-200 and the first intermediate pressing portion D-300. When the primary press forming is completed or just before the primary press forming is completed, the first die D-200 is lowered further together with the first intermediate pressing portion D-300, so the secondary press forming may be performed by the first die D-200 and two second intermediate pressing portions D-300. By performing the press forming twice, the forming of the central region of the metal plate D-10A may be performed first. Then, after the secondary press forming is completed or just before the secondary press forming is completed, the first die D-200 is lowered further, so the third press forming of the outer region of the metal plate D-10A may be performed by the first die D-200 and the second die D-400.

As another example, although not illustrated in the drawing, when six deformed portions D-120 are formed in the press-formed part D-10', the first die D-200 should be provided with six first pressing portions D-210. Accordingly, the four intermediate pressing portions D-300 may be provided and disposed to face the four first pressing portions D-210 disposed in the central region of the first die D-200. In this case, the four intermediate pressing portions D-300 may be disposed between the first die D-200 and the second die D-400.

Among the four intermediate pressing portions D-300, two intermediate pressing portions (hereinafter, the first intermediate pressing portion) D-300 disposed in the center may be disposed at the highest position. The remaining three intermediate pressing portions (hereinafter, referred to as the second intermediate pressing portions) D-300 may be disposed between the first intermediate pressing portion D-300 and the second die D-400. In this case, the two first intermediate pressing portions D-300 may be disposed at the same height. In this case, the two second intermediate pressing portions D-300 may also be disposed at the same height. The height difference between the first intermediate pressing portion D-300 and the second intermediate pressing portion D-300 may be the same as or similar to the height difference hi between the above-described intermediate pressing portion D-300 and the second pressing portion D-410.

With this arrangement, the primary press forming may be performed first by the first die D-200 and the two first intermediate pressing portions D-300. When the primary press forming is completed or just before the primary press forming is completed, the first die D-200 is lowered further together with the first intermediate pressing portion D-300, so the secondary press forming may be performed by the first die D-200 and two second intermediate pressing portions D-300. By performing the press forming twice, the forming of the central region of the metal plate D-10A may be performed first. Then, after the secondary press forming is completed or just before the secondary press forming is completed, the first die D-200 is further lowered, so the third press forming of the outer region of the metal plate D-10A may be performed by the first die D-200 and the second die D-400.

In addition, when the deformed portion D-120 formed in the press-formed part D-10' increases to 7 or more, the number of the first pressing portion D-210 and the intermediate pressing portion D-300 should be further increased similarly to the above. Accordingly, the number of penetration portions D-420aa in the second die D-400 may also increase. With the manufacturing device configured in this manner, by adding the press forming operation, the press forming may be performed first on the central region of the metal plate D-10A, and then on the outer region of the metal plate D-10A.

The press-formed parts D-10 and D-10' and the manufacturing method (S10) thereof according to the embodiments of the present disclosure as described above may perform the press forming on the metal plates D-10 and D-10' by disposing the intermediate pressing portion D-300 having the height difference hi between the upper/lower dies D-200 and D-400 and using the three pressing portions D-210, D-300, and D-410. In this case, by performing the stepwise forming process that first presses the central region of the metal plates D-10 and D-10' and then presses the outer region, it is possible to prevent a deformation force from concentrating at a specific location of the metal plates D-10 and D-10' during the press forming. As a result, the press-formed parts D-10 and D-10' may be prevented from being damaged during the manufacturing process and the quality of the parts may be improved.

Although the embodiments of the present disclosure has been described with reference to the accompanying drawings, those skilled in the art will appreciate that various modifications and alterations may be made without departing from the spirit or essential feature of the present disclosure. Therefore, it should be understood that the above-described embodiments are not restrictive, but are exemplary in all aspects.

**Description of Reference Characters**

| | | | |
|---|---|---|---|
| B-1: | Side frame | B-10: | Frame |
| B-20: | Bracket | B-21, B-22: | Flange |
| B-23: | Main body | B-24: | Curved surface |
| B-100: | Punch | | |
| B-110, B-120, B-130, B-140, B-150: | First through fifth punch forming portion | | |
| B-111, B-121, B-131, B-141, B-151: | First through fifth extended surface forming portion | | |
| B-112, B-122, B-132, B-142, B-152: | First through fifth curved surface forming portion | | |
| B-113, B-123, B-133, B-143: | First through fourth main body forming portion | | |
| B-200: | Pad | | |
| B-300: | Die | | |
| B-310, B-320, B-330, B-340, B-350: | First through fifth die forming portion | | |
| B-311, B-321, B-331, B-341, B-351: | First through fifth die curved forming portion | | |
| B-312, B-322, B-332, B-342, B-352: | First through fifth die flat surface forming portion | | |
| B-360: | Vertical plane | | |
| B-400: | Material | B-410: | Notch |
| C-1: | Battery pack module | C-10: | Hot-press-formed parts |
| C-20: | Battery case | C-30: | Base |
| C-40: | Reinforcing member | C-110: | First wall |
| C-120: | Second wall | C-130: | Third wall |
| C-140: | Fourth wall | C-150: | Fifth wall |
| C-160: | Curvature portion | C-170: | First connecting portion |
| C-180: | Second connecting portion | C-190: | Third connecting portion |
| b: | Battery pack | r: | Radius of curvature |
| t: | Sheet thickness | θw: | Wall angle |
| hw: | Wall height | | |
| D-10, D-10': | Press-formed part | | |
| D-10A: | Metal plate | | |
| D-110: | Flat plate portion | | |
| D-120: | Deformed portion | | |
| D-20, D-20': | Press forming device | | |
| D-200: | First die | | |
| D-210: | First protrusion | | |
| D-220: | First flat portion | | |
| D-300: | Intermediate pressing portion | | |
| D-400: | Second die | | |
| D-410: | Second protrusion | | |
| | | D-420: | Second flat portion |

### Mode for Invention

Hereinafter, the present disclosure will be described in more detail with reference to Examples. However, it should be noted that the following Examples are only for illustrating the present disclosure in more detail and are not intended to limit the scope of the present disclosure. This is because the scope of the present disclosure is determined by the matters described in the claims and the matters reasonably inferred therefrom.

### (Example 1)

Steel slabs having an alloy composition as shown in Table 2 below and a thickness of 80 mm were manufactured by vacuum melting. Each steel slab was heated to 1250°C, finished hot-rolled at 900°C, cooled at a cooling rate of 30°C/s, and then coiled at 600°C to obtain a hot-rolled steel sheet with a final thickness of 3.0 mm. Thereafter, each of the hot-rolled steel sheets was pickled and then cold-rolled at a cold reduction rate of 50% to manufacture a cold-rolled steel sheet. Thereafter, the cold-rolled steel sheet was annealed at an annealing temperature of 780°C under a 5% hydrogen-95% nitrogen atmosphere and then cooled to manufacture an annealed cold-rolled steel sheet.

Using a cold-rolled steel sheet, double-sided plating was performed in an Al plating bath including 9 wt% of Si at a coating weight of 75 g/m² per side. After the aluminum-based plated steel sheet manufactured under the conditions was manufactured into a blank, the blank was transferred to a heating furnace, and then subjected to heat treatment conditions according to the conditions shown in Table 3 below using a hot forming die, followed by hot forming and cooling, thereby obtaining the hot-press-formed member. In this case, the cooling rate during the cooling was 20 to 200 °C/s.

The required heat treatment time threshold Tₜₒₜₐₗ was calculated by applying the calculated Ae3 temperature and furnace condition values to Relational Expression 2, and whether Relational Expression 2 was satisfied is shown in Table 3.

In addition, to verify the alloying of the plating layer of each hot-press-formed member, the microstructure of the aluminum-based alloy plated layer was evaluated by being observed using an optical microscope (OM) and a scanning electron microscope (SEM), and whether alloying occurred was determined. The results are shown in Table 3 below.

Based on Table 3, for the fully alloyed parts among the manufactured hot-press-formed members, the Cr content of the intermediate layer and the outermost layer within the aluminum-based alloy plated layer was evaluated using glow discharge optical emission spectrometry (GDOES), and the maximum Cr value (Crmax) of each layer was measured. The corresponding Cr increase/decrease rate (%) is presented in Table 4 below.

To evaluate the coating corrosion resistance of the obtained hot-press-formed member, a diagonal scribe having a size of w 0.5 × L 100 was formed on the electrodepositioncoated part, followed by exposure to 63 cycles of CCT under the corrosive atmosphere conditions described below. Thereafter, the left and right widths of corrosion blisters along the diagonal scribe were measured and summed.

CCT Cycle: Salt spray application (35°C, 3 hours) - > Drying (60°C, 2 hours) -> wetting (50°C, 95% relative humidity, 3 hours)

**[Table 2]**

| Steel type | C | Si | Mn | P | S | Al | Cr | Ti | B | Sb |
|---|---|---|---|---|---|---|---|---|---|---|
| A | 0.345 | 0.33 | 1.1 | 0.01 | 0.003 | 0.04 | 0.24 | 0.027 | 0.0025 | 0.094 |
| B | 0.092 | 0.27 | 0.7 | 0.01 | 0.001 | 0.03 | 0.20 | 0.022 | 0.0025 | 0.053 |
| C | 0.315 | 0.41 | 1.2 | 0.01 | 0.002 | 0.04 | 0.23 | 0.025 | 0.0025 | 0.022 |
| D | 0.207 | 0.30 | 1.9 | 0.01 | 0.003 | 0.03 | 0.21 | 0.017 | 0.0025 | 0.014 |
| E | 0.221 | 0.25 | 1.3 | 0.01 | 0.002 | 0.03 | 0.18 | 0.030 | 0.0025 | 0.003 |

**[Table 3]**

| Classification | Steel ty pe | Sb content | Ae3 | Heating furnace condition | | [Relation al Expressio n 1] Tₜₒₜₐₗ threshold | Whether Relatio nal Expression 1 is satisfied | 100% alloyi ng of plating layer |
|---|---|---|---|---|---|---|---|---|
| | | | | T_{furnace} (°C) | Tₜₒₜₐₗ (sec) | | | |
| Inventiv e Example A-1 | A | 0.094 | 807.9 | 915 | 300 | 158.6 | O | O |
| Inventiv e Example A-2 | A | 0.094 | 807.9 | 900 | 270 | 166.2 | O | O |
| Comparat ive Example A-1 | A | 0.094 | 807.9 | 885 | 180 | 184.3 | X | X |
| Inventiv e Example A-3 | B | 0.053 | 871.3 | 930 | 240 | 206.6 | O | O |
| Inventiv e Example A-4 | B | 0.053 | 871.3 | 900 | 270 | 243.3 | O | O |
| Comparat ive Example A-2 | B | 0.053 | 871.3 | 885 | 300 | 385.6 | **X** | **X** |
| Inventiv e Example A-5 | C | 0.022 | 817.1 | 920 | 210 | 161.7 | O | O |
| Inventiv e Example A-6 | C | 0.022 | 817.1 | 900 | 270 | 178.5 | O | O |
| Comparat ive Example A-3 | C | 0.022 | 817.1 | 890 | 180 | 188.8 | **X** | **X** |
| Comparat ive Example A-4 | D | **0.014** | 826.7 | 900 | 270 | 188.3 | O | O |
| Comparat ive Example A-5 | E | **0.003** | 833.3 | 900 | 270 | 196.0 | O | O |

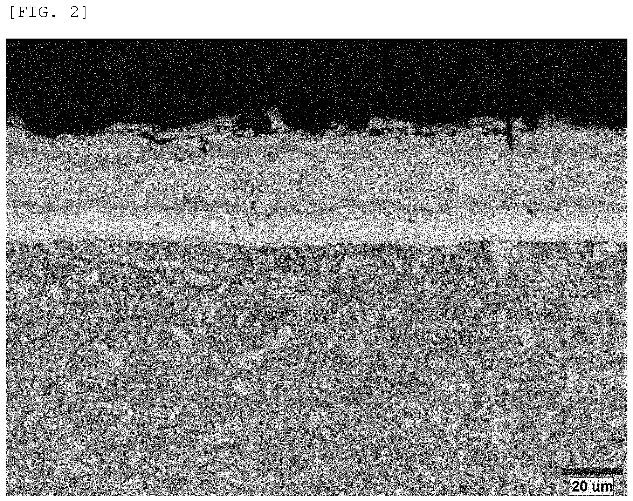

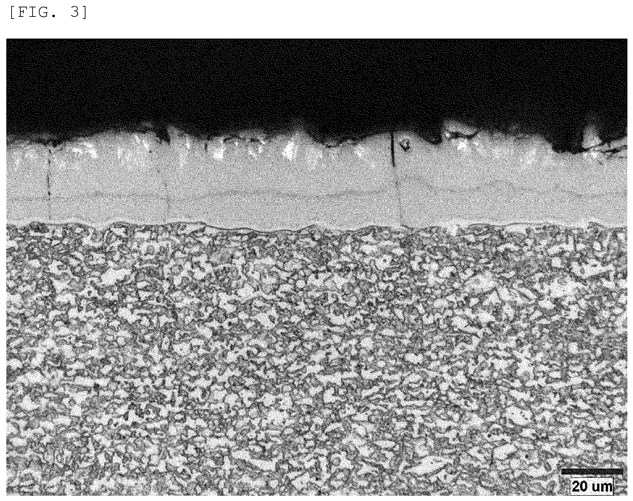

As shown in Table 3, Comparative Examples A-1 through A-3, which do not satisfy Relational Expression 2 during heating for hot press forming, did not have aluminum-based plating layers completely alloyed. FIGS. 1 through 3 are SEM images of the hot-press-formed members of Inventive Examples A-3 and A-4 and Comparative Example A-2. From the foregoing, it can be confirmed that, in the case of Comparative Example A-2, the aluminum-based plating layer was not fully alloyed, as compared to Inventive Examples A-3 and A-4.

Consequently, in Comparative Examples A-1 through A-3, the electrodeposition coating was not sufficiently formed during preparation of the electrodeposition coating for corrosion resistance evaluation, and thus the coating corrosion resistance could not be evaluated.

**[Table 4]**

| Classification | Sb content (wt.%) | Cr content (wt.%) and increase/decrease rate | | | Coating-corrosion resistance (sum of left/right widths of blister, mm) |
|---|---|---|---|---|---|
| | | Max value (A) within outermost layer | Max value (B) within intermediate layer | { (A-B)*100}/ B (%) | |
| Inventive Example A-1 | 0.094 | 0.162 | 0.111 | 46.0 | 2.1 |
| Inventive Example A-2 | 0.094 | 0.148 | 0.117 | 26.5 | 2.9 |
| Inventive Example A-3 | 0.053 | 0.160 | 0.130 | 23.1 | 3.6 |
| Inventive Example A-4 | 0.053 | 0.158 | 0.131 | 20.6 | 3.9 |
| Inventive Example A-5 | 0.022 | 0.140 | 0.131 | 6.8 | 4.8 |
| Inventive Example A-6 | 0.022 | 0.136 | 0.127 | 7.1 | 4.5 |
| Comparative Example A-4 | 0.014 | 0.107 | 0.138 | **-22.5** | **5.9** |
| Comparative Example A-5 | 0.003 | 0.112 | 0.159 | **-29.6** | **6.6** |

In the case of Comparative Examples A-4 and A-5, in which the Sb content is below the range proposed in the present disclosure, the Crmax value within the intermediate layer is significantly higher than the Crmax value within the outermost layer, and thus it can be confirmed that the corrosion resistance is significantly reduced after the electrodeposition coating evaluation.

On the other hand, for Inventive Examples A-1 through A-6, in which Sb is sufficiently added to the base steel, the Cr increase/decrease rate (%) value derived by Relational Expression 1 is 5% or more, and as a result of performing the corrosion resistance evaluation after the electrodeposition coating, it can be confirmed that the width of the corrosion blister is significantly reduced.

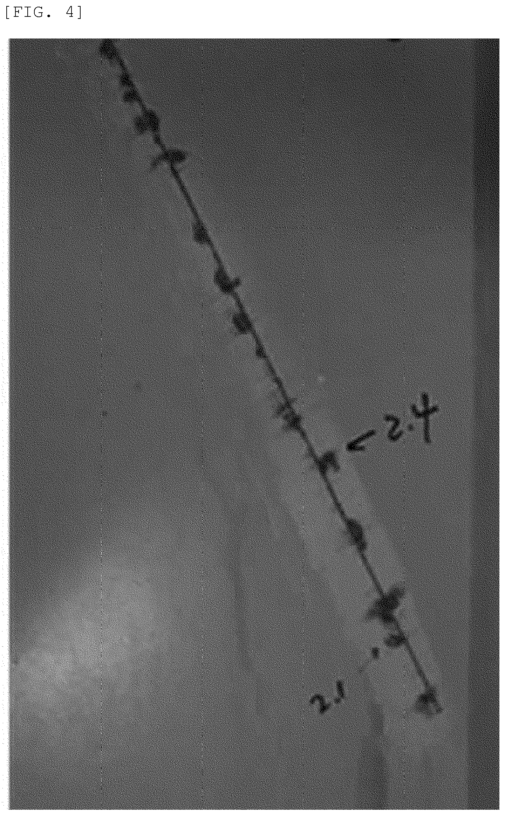

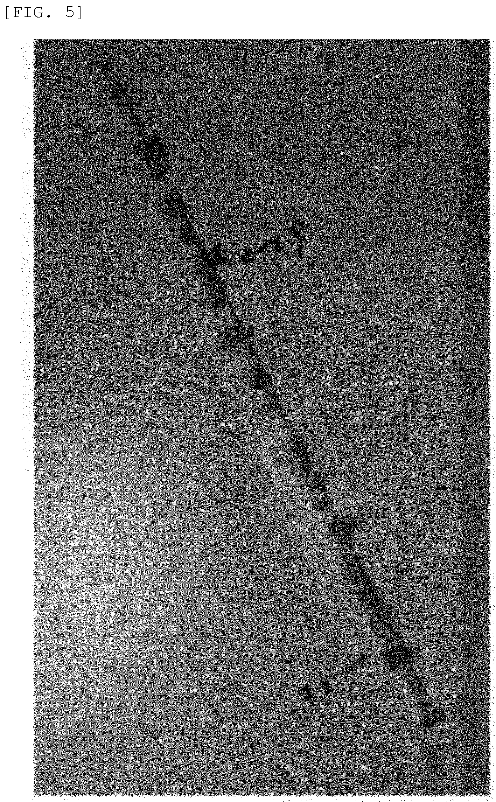

FIGS. 4 and 5 below are photographs of the corroded coating blister after the coating-corrosion resistance evaluation of Inventive Example A-6 and Comparative Example A-4, respectively. From the foregoing, it can be confirmed that, in the case of Inventive Example A-6, the left and right widths of the corroded coating blister after the coating-corrosion resistance evaluation are 2.1 mm and 2.4 mm, respectively, and the sum of the left and right widths is only 4.5 mm, whereas, in the case of Comparative Example A-4, the sum of the left and right widths of the corroded coating blister after the same coating-corrosion resistance evaluation is 5.9 mm. Accordingly, it can be confirmed that the hot-press-formed member of Inventive Example A-6 may secure excellent corrosion resistance as the Cr increase/decrease rate (%) between the outermost layer and the intermediate layer is controlled.

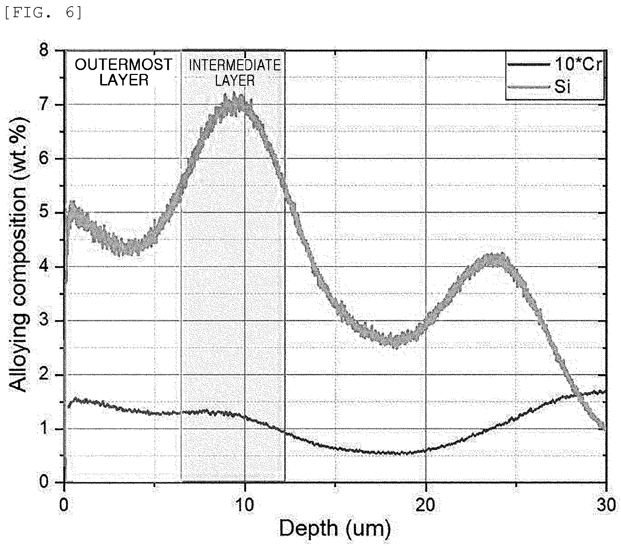

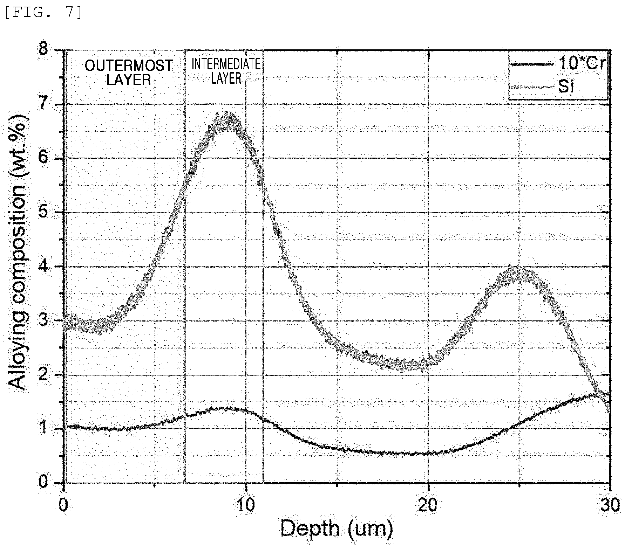

In addition, FIGS. 6 and 7 are graphs showing the GDS observation results for Inventive Example A-6 and Comparative Example A-4. Looking at the corresponding figures, it can be seen that compared to Inventive Example A-6, Comparative Example A-4 has a higher Cr content in the intermediate layer than in the outermost layer. As a result, the corrosion resistance of Comparative Example A-4 was locally degraded, and these areas acted as corrosion sites, thereby accelerating corrosion.

### (Example 2)

### Example 2-1. Analysis of Number of Pores in Plating Layer and Aluminum Oxide Distribution in Hot-Press-Formed Member

A plated steel sheet was prepared in which the aluminum-based plating layer was composed of, by wt%, Si: 8.5%, Fe: 10%, and the balance of Al and unavoidable impurities. Subsequently, the hot-press-formed member was manufactured by heating and holding the plated steel sheet at a high temperature according to the conditions shown in Table 5 below, followed by forming and cooling.

The surface of each hot-press-formed member manufactured in this way was measured using XPS to calculate the Al oxide distribution. In addition, the number of pores present on the surface of each hot-press-formed member was observed. In this case, 20 random areas on the surface of the plating layer were selected, the number of pores in each area was measured within an area of 10×10µm², and the average value was calculated and presented.

**[Table 5]**

| Steel type | Classification | Heat treatment condition | | | | Surface characteristics of plating layer |
|---|---|---|---|---|---|---|
| | | Heating rate (°C/s) | Heating temperat ure (°C) | Holding time (min) | Cooling rate (°C/s) | Al oxide distribution (%) |
| A | Comparative Example B-1 | 14.5 | 870 | 6 | 60 | 74.3 |
| B | Inventive Example B-1 | 15.0 | 900 | 6 | 60 | 96.0 |
| C | Inventive Example B-2 | 15.5 | 930 | 6 | 60 | 100 |
| A | Comparative Example B-2 | 8.0 | 960 | 5 | 60 | 57.2 |
| B | Inventive Example B-3 | 16.0 | 960 | 5 | 60 | 100 |

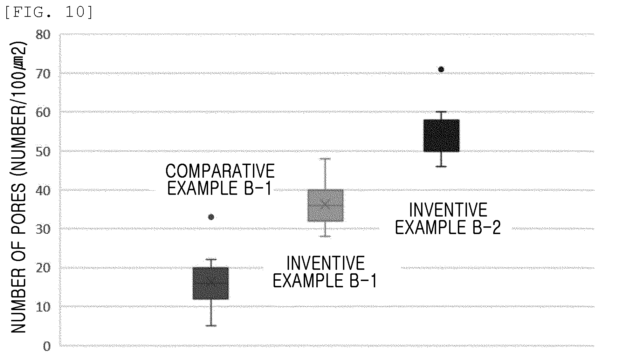

As shown in Table 5 and FIG. 10, it can be confirmed that the number of pores present on the surface of the plating layer after hot forming increases as the heat treatment (heating) temperature for hot press forming increases.

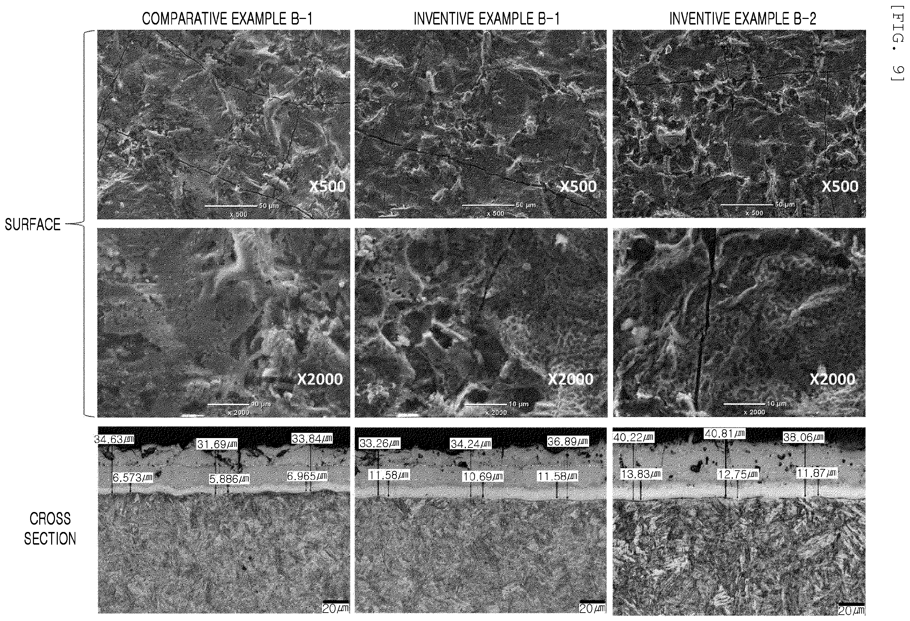

FIG. 9 illustrates SEM images of the surfaces of the plating layer and the cross sections in the thickness direction of Comparative Example B-1 and Inventive Examples B-1 and B-2, and FIG. 10 illustrates the results of measuring the number of pores present on the surface of each plating layer per unit area. The area corresponding to '×' in FIG. 10 represents the average value.

As illustrated in FIG. 9, it can be confirmed that the number of pores present on the surface of the plating layer increases as the heat treatment temperature increases, which may also be confirmed from the results in FIG. 10. Furthermore, the trend of increasing pores is similarly observed even in the cross section of the plating layer, and it can be seen that the pore size also gradually increases.

In particular, fine checkerboard-shaped cracks are present on the surface of the plating layer, and these cracks may be connected even to pores within the plating layer, such that rust-preventive oil, moisture, etc., may easily ingress.

Meanwhile, identical/similar results were observed even in Comparative Example B-2 and Inventive Example B-3, which were not separately presented.

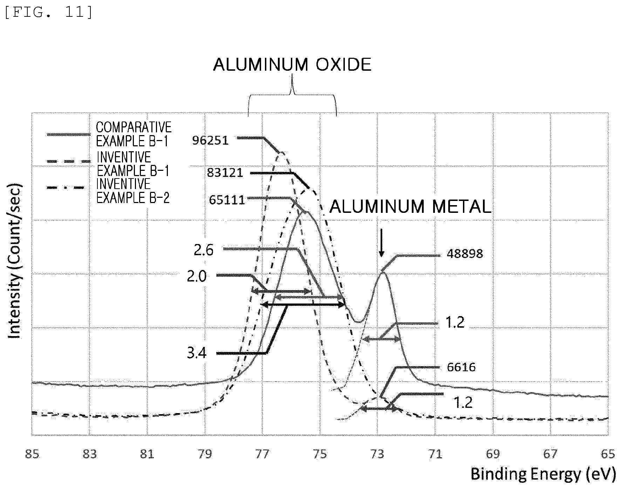

FIG. 11 illustrates the results of XPS measurements of the surfaces of Comparative Example B-1 and Inventive Examples B-1 and B-2.

As illustrated in FIG. 11, it can be confirmed that peaks of aluminum oxide and metal are measured. The Al oxide distribution on the surface was calculated using the intensity and binding energy values of each peak, and the results are shown in Table 5.

In addition, the Al oxide distribution was calculated for Comparative Example B-2 and Inventive Example B-3, which were not separately presented, after XPS measurement and was also shown in Table 5 together.

### Example 2-2. Evaluation of Adhesion of Hot-Press-Formed Member

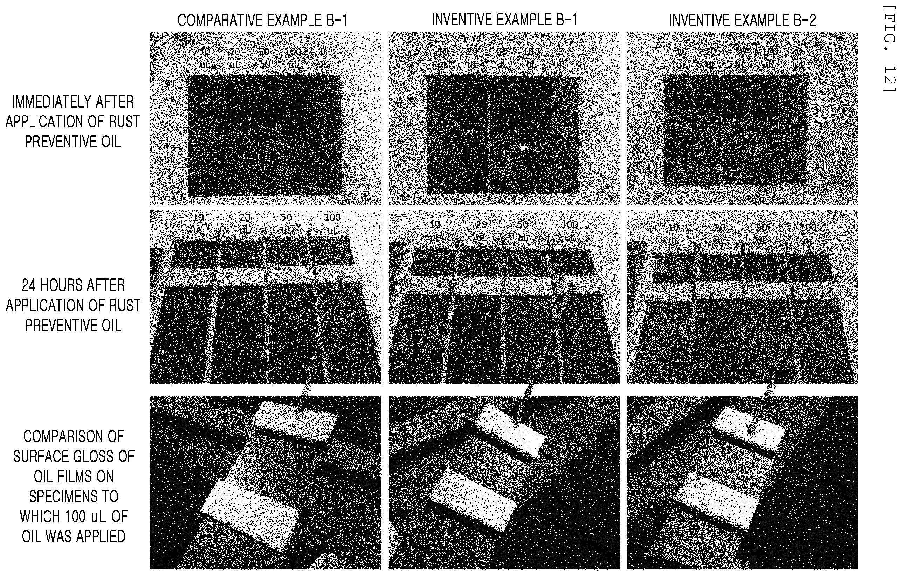

After specimens were manufactured from hot-press-formed members corresponding to Comparative Example B-1 and Inventive Examples B-1 and B-2 of Example 2-1, the surfaces of each specimen were cleaned using isopropanol, and then rust-preventive oil was also applied to each specimen. In this case, as illustrated in FIG. 12, four specimens were prepared for each Example, and rust-preventive oil in amounts of 10 µL, 20 µL, 50 µL, and 100 µL was applied to the respective specimens. For comparison, specimens without the rust-preventive oil were also prepared.

After applying the rust-preventive oil, the surface condition was checked after 24 hours of curing, and the results are illustrated in FIG. 12. As can be seen in FIG. 12, gloss tends to decrease as the number of pores on the surface increases. For example, it can be confirmed that the gloss of Inventive Example B-2 decreases compared to Comparative Example B-1.

For specimens coated with a certain amount of rust-preventive oil as described above, a mastic sealer (mastic sealer) was applied over the rust-preventive oil and cured at 155°C for 15 minutes. In this case, the curing temperature was set based on the minimum curing temperature of the mastic sealer used, which corresponds to the minimum temperature required for the mastic sealer to develop its adhesive properties, and therefore, this criterion may secure clear differentiation capability.

Subsequently, adhesion property was evaluated through a shear tensile test. Specifically, a tensile test was conducted at 10 mm/min, and the tensile test was performed while preventing stress loss by using a spacer in consideration of an operation difference between the thickness of the mastic sealer-applied specimen and the thickness of the specimen. The evaluation criterion was based on 0.2 MPa which is required in the automotive industry.

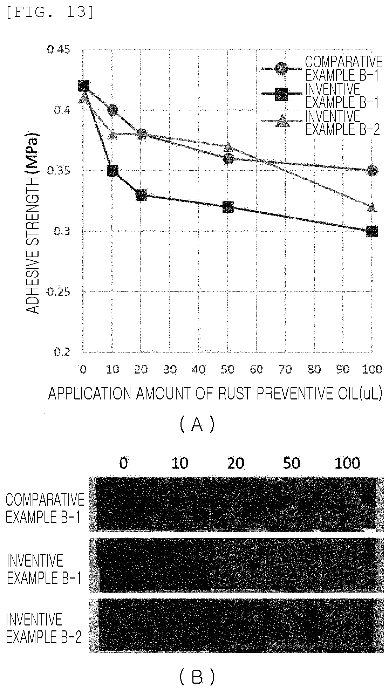

The results were shown in FIG. 13.

First, as illustrated in FIG. 13(a), the adhesive strength of the mastic sealer tends to decrease as the amount of rust-preventive oil applied increases. In addition, although the adhesive strength tends to decrease as the number of pores increases, it can be confirmed that the adhesive strength of Inventive Example B-2, which has a high Al oxide distribution on the surface, is higher than that of Inventive Example B-1. This is attributed to the maximum direct contact between the Al oxide present on the surface of the plating layer and the mastic sealer.

Furthermore, FIG. 14B illustrates the results of observing the surface of each specimen applied with mastic sealer; it can be visually confirmed that the amount of mastic sealer remaining on the surface is greater in Inventive Example B-2 compared to Comparative Example B-1, even when the amount of rust-preventive oil applied increases.

Taking everything into account, it is understood that even when a large number of pores are present on the surface of the plating layer of the hot-press-formed member, the adhesive strength is not reduced and the adhesion property is maintained when the surface is mainly composed of aluminum oxide. Moreover, in manufacturing the hot-press-formed member, the heating time to the target temperature can be reduced, thereby providing not only economic advantages such as improved productivity but also environmental benefits by reducing CO₂ emissions generated during the part manufacturing process. Accordingly, the present disclosure has a significant technical effect.

## Claims

1. A hot-press-formed member, comprising:
a base steel; and
an aluminum-based alloy plated layer,
wherein the base steel includes, by wt%, 0.015 to 0.10% of Sb,
the aluminum-based alloy plated layer includes an intermediate layer and an outermost layer positioned on an upper portion of the intermediate layer, and
a Cr increase/decrease rate (%) derived from the following Relational Expression 1 is 5% or more. [Relational Expression 1] $Cr increase / decrease rate \left(%\right) = \frac{A - B}{A} \times 100 \left(%\right)$
where A represents Crmax of the outermost layer, and B represents Crmax of the intermediate layer.

2. The hot-press-formed member of claim 1, wherein the base steel includes, by wt%, C: 0.080 to 0.50%, Si: 0.050 to 1.0%, Mn: 0.50 to 4.0%, P: 0.0150% or less (excluding 0%), S: 0.0200% or less (excluding 0%), Al: 0.010 to 0.10%, N: 0.02000% or less (excluding 0%), and Cr: 0.01 to 1%, and the balance of Fe and unavoidable impurities.

3. The hot-press-formed member of claim 1, wherein the base steel further includes one or more elements selected from a) through f) below.
a) one or more selected from titanium (Ti), niobium (Nb), zirconium (Zr), and vanadium (V): 0.005 to 0.400 wt%,
b) boron (B): 0.0001 to 0.0100 wt%,
c) one or more selected from molybdenum (Mo) and tungsten (W): 0.001 to 1.000 wt%,
d) one or more selected from copper (Cu) and nickel (Ni): 0.003 to 2.000 wt%,
e) one or more selected from tin (Sn): 0.001 to 1.000 wt%, and
f) rare earth elements (REM): 0.0200 wt% or less.

4. The hot-press-formed member of claim 1, wherein Simax of the intermediate layer ranges from 5.5 wt% or more to 15 wt% or less.

5. The hot-press-formed member of claim 1, wherein, after electrodeposition coating and evaluation of corrosion resistance after coating, a sum of left and right widths of corrosion blisters satisfies 5.0 mm or less.

6. A method for manufacturing a hot-press-formed member, comprising:
preparing a base steel including 0.015 to 0.10 wt% of Sb;
immersing the base steel in an aluminum-based plating bath to obtain an aluminum-based plated steel;
heating and holding the aluminum-based plated steel at a temperature of Ae3 or higher to obtain an aluminum-based alloy plated steel; and
performing hot press forming on the aluminum-based alloy plated steel, followed by cooling,
wherein [Relational Expression 2] below is satisfied. [Relational Expression 2] ${t}_{total} \geq - 65.79 \times ln \frac{{A}_{e 3} - {T}_{furnace} + 10}{- 961.23}$
where tₜₒₜₐₗ represents a total heating time (sec) in a furnace during heating, Ae3 represents an equilibrium temperature (°C) at which a transformation to austenite is completed, and T_{furnace} represents a set temperature (°C) in the furnace during the heating.

7. The method of claim 1, wherein the base steel includes, by wt%, C: 0.080 to 0.50%, Si: 0.050 to 1.0%, Mn: 0.50 to 4.0%, P: 0.0150% or less (excluding 0%), S: 0.0200% or less (excluding 0%), Al: 0.010 to 0.10%, N: 0.02000% or less (excluding 0%), and Cr: 0.01 to 1%, and the balance of Fe and unavoidable impurities.

8. The method of claim 1, wherein the base steel further includes one or more elements selected from a) through f) below.
a) one or more selected from titanium (Ti), niobium (Nb), zirconium (Zr), and vanadium (V): 0.005 to 0.400 wt%,
b) boron (B): 0.0001 to 0.0100 wt%,
c) one or more selected from molybdenum (Mo) and tungsten (W): 0.001 to 1.000 wt%,
d) one or more selected from copper (Cu) and nickel (Ni): 0.003 to 2.000 wt%,
e) one or more selected from tin (Sn): 0.001 to 1.000 wt%, and
f) rare earth elements (REM): 0.0200 wt% or less.

9. The method of claim 1, wherein a cooling rate in the cooling is 10 to 1000 °C/s.
